# EUROPÄISCHE PATENTSCHRIFT

(11) **EP 3 947 212 B1**
(45) Veröffentlichungstag und Bekanntmachung des Hinweises auf die Patenterteilung: **21.02.2024**
(21) Anmeldenummer: 20713556.7
(22) Anmeldetag: 19.03.2020
(51) Int. Cl.: H01R 43/20, H01R 43/28, B65G 17/32, H01R 43/048, H02G 1/00, H02G 1/12

(54) **VORRICHTUNG UND VERFAHREN ZUR MONTAGE EINES ELEKTRISCHEN STECKVERBINDERS**
DEVICE AND METHOD FOR ASSEMBLING AN ELECTRICAL PLUG CONNECTOR
DISPOSITIF ET PROCÉDÉ DE MONTAGE D'UN CONNECTEUR ÉLECTRIQUE ENFICHABLE

(30) Priorität: 29.03.2019 DE 102019108322; 17.04.2019 DE 102019110163; 24.04.2019 DE 102019110572; 17.05.2019 DE 102019113050; 27.05.2019 DE 102019114166; 27.05.2019 DE 102019114178; 14.06.2019 DE 102019116252; 25.06.2019 DE 102019117031; 25.06.2019 DE 102019117035; 19.07.2019 DE 102019119662; 22.07.2019 DE 102019119724; 22.07.2019 DE 102019119726; 30.07.2019 DE 102019120487; 15.10.2019 DE 102019127749; 15.10.2019 DE 102019127760; 25.10.2019 DE 102019128918; 11.11.2019 DE 102019130317
(43) Veröffentlichungstag der Anmeldung: 09.02.2022
(73) Patentinhaber: Metzner Maschinenbau GmbH, 89231 Neu-Ulm (DE); Metzner Holding GmbH, 89079 Ulm (DE)
(72) Erfinder: SORG, Manfred, 89079 Ulm (DE)
(74) Vertreter: Lorenz, Matthias
(86) Internationale Anmeldenummer: PCT/EP2020/057692
(87) Internationale Veröffentlichungsnummer: WO 2020/200827

(56) Entgegenhaltungen:
- EP-A1- 1 071 175
- EP-A2- 1 237 236
- DE-A1- 3 838 706
- GB-A- 1 587 342
- US-A- 4 380 117
- US-A- 5 208 977
- US-A- 5 606 795

## Beschreibung

Die Erfindung betrifft eine Vorrichtung zur Montage eines elektrischen Steckverbinders auf einem ersten Kabelende und/oder auf einem zweiten Kabelende eines einen oder mehrere Innenleiter aufweisenden elektrischen Kabels.

Die Erfindung betrifft ferner ein Verfahren zur Montage eines elektrischen Steckverbinders auf einem ersten Kabelende und/oder auf einem zweiten Kabelende eines einen oder mehrere Innenleiter aufweisenden elektrischen Kabels.

Die Montage eines elektrischen Steckverbinders auf einem Kabelende eines elektrischen Kabels kann, ausgehend von einer Vorbearbeitung des Kabels (beispielsweise ein Ablängen und Vermessen des Kabels) bis zu einer abschließenden Endmontage von einzelnen Steckverbinderkomponenten und einer Prüfung des fertigen Steckverbinders diverse, mitunter äußerst komplexe Arbeitsschritte umfassen. Die Montage eines Steckverbinders auf einem Kabel wird mitunter auch als Kabelkonfektionierung bezeichnet.

Bei einem Steckverbinder bzw. Gegensteckverbinder kann es sich im Rahmen der Erfindung um einen Stecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Insbesondere an Steckverbinder für die Automobilindustrie bzw. für Fahrzeuge werden hohe Anforderungen an deren Robustheit und die Sicherheit der Steckverbindungen gestellt. Vor allem die Elektromobilität stellt die Automobilindustrie und deren Zulieferer vor große Herausforderungen, da in den Fahrzeugen über die Kabel bzw. Leitungen mitunter hohe Ströme mit Spannungen bis zu 1.500 V übertragen werden. Bei der Gefahr, die ein Versagen von Bauteilen in einem Elektrofahrzeug zur Folge hätte, müssen demnach besonders hohe Anforderungen an die Qualität der Kabel bzw. Leitungen und Steckverbindungen gestellt werden.

So muss eine Steckverbindung mitunter hohen Belastungen, beispielsweise mechanischen Belastungen, standhalten sowie definiert geschlossen bleiben, so dass die elektrische Verbindung nicht unbeabsichtigt, beispielsweise während des Betriebs eines Fahrzeugs, getrennt wird.

Eine weitere Anforderung an Steckverbinder für die Automobilindustrie besteht darin, dass diese in hohen Stückzahlen wirtschaftlich herstellbar sein müssen. Eine möglichst vollautomatisierte Steckverbindermontage ist aus diesem Grunde vorzuziehen. So müssen entsprechende Fertigungsstraßen etabliert werden, um die geforderten Stückzahlen bei gleichzeitig hoher Qualität zu erreichen.

Aus Gründen der Qualitätssicherung und um die Steckverbindermontage möglichst transparent und für den Endkunden nachvollziehbar zu gestalten, kann es von Vorteil sein, die Konfektionierung der einzelnen Kabel zu dokumentieren. Eine umfassende Dokumentation der Kabelbearbeitung im Rahmen der Steckverbindermontage ist insbesondere hinsichtlich einer voll- oder teilautomatisierten Kabelkonfektionierung aufwändig.

Zum technischen Hintergrund wird beispielhaft auf die Druckschriften DE 38 38 706 A1, EP 1 071 175 A1 und GB 1 587 342 A1 verwiesen. Die DE 38 38 706 A1 betrifft einen Kabelbaum, bestehend aus einer Mehrzahl elektrischer Drähte, die in einem gewünschten Muster und anordnungsweise geformt sind, sowie eine Vorrichtung zu dessen Herstellung, gemäß dem Oberbegriff des Anspruchs 1. Die EP 1 071 175 A1 und die GB 1 587 342 A1 betreffen jeweils Vorrichtungen zur Konfektionierung eines elektrischen Kabels, und weisen hierzu eine Reihe von Bearbeitungsstationen auf.

In Anbetracht des bekannten Stands der Technik besteht die Aufgabe der vorliegenden Erfindung darin, eine Vorrichtung zur Montage eines elektrischen Steckverbinders bereitzustellen, die sich insbesondere im Rahmen einer automatisierten Kabelkonfektionierung vorteilhaft eignet.

Der vorliegenden Erfindung liegt auch die Aufgabe zugrunde, ein Verfahren zur Montage eines elektrischen Steckverbinders bereitzustellen, das sich insbesondere im Rahmen einer automatisierten Kabelkonfektionierung vorteilhaft eignet.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 12 gelöst.

Die abhängigen Ansprüche und die nachfolgend beschriebenen Merkmale betreffen vorteilhafte Ausführungsformen und Varianten der Erfindung. Der Schutzbereich des europäischen Patents wird durch die Patentansprüche bestimmt.

Es ist eine Vorrichtung zur Montage eines elektrischen Steckverbinders auf einem ersten Kabelende und/oder auf einem zweiten Kabelende eines einen oder mehrere Innenleiter aufweisenden elektrischen Kabels vorgesehen.

Mittels der erfindungsgemäßen Vorrichtung kann einer oder können mehrere Montage- bzw. Bearbeitungsschritte im Rahmen einer Steckverbindermontage ausgeführt werden. Somit kann ein Steckverbinder teilweise oder sogar vollständig auf einem oder auf beiden Kabelenden des Kabels montiert werden.

Der auf dem ersten Kabelende zu montierende Steckverbinder kann auch als erster Steckverbinder und der auf dem zweiten Kabelende zu montierende Steckverbinder als zweiter Steckverbinder bezeichnet werden.

Der Bereich des elektrischen Kabels, in dem die Bearbeitung bzw. die Konfektionierung / Montage des Steckverbinders vornehmlich stattfindet, wird nachfolgend mitunter auch als "zu bearbeitender Kabelabschnitt" bezeichnet. Bei dem zu bearbeitenden Kabelabschnitt kann es sich um ein Kabelendstück handeln, insbesondere das erste Kabelende und/oder das zweite Kabelende. Vorzugsweise werden zwei Kabelabschnitte des Kabels, insbesondere beide Kabelenden bearbeitet bzw. teilweise oder vollständig mit einem jeweiligen Steckverbinder versehen.

Insbesondere kann die Erfindung für eine teilautomatisierte oder vollautomatisierte Konfektionierung eines elektrischen Kabels vorgesehen sein.

Grundsätzlich kann im Rahmen der Erfindung ein beliebiger Steckverbinder auf einem beliebigen elektrischen Kabel montiert werden.

Besonders vorteilhaft eignet sich die Erfindung zur Konfektionierung von elektrischen Kabeln mit großem Querschnitt für eine hohe Stromübertragung, beispielsweise im Fahrzeugbereich, besonders bevorzugt im Bereich der Elektromobilität. Es kann somit ein elektrisches Kabel für den Hochvoltbereich vorgesehen sein, insbesondere eine Hochvoltleitung.

Vorzugsweise weist das elektrische Kabel einen Außenleiter auf bzw. ist als geschirmtes elektrisches Kabel ausgebildet.

Der genau eine Innenleiter (im Falle eines einadrigen Kabels) oder die mehreren Innenleiter (im Falle eines mehradrigen Kabels) verlaufen von dem ersten Kabelende zu dem zweiten Kabelende.

Es sei betont, dass Merkmale und Vorteile der Vorrichtung oder des nachfolgend noch beschriebenen Verfahrens, die sich auf ein einadriges Kabel beziehen, auch auf die Bearbeitung des mehradrigen Kabels übertragen werden können - und umgekehrt, sofern dies technisch nicht ausgeschlossen ist.

Unter einem Innenleiter wird im Rahmen der Erfindung insbesondere eine durch das Kabel verlaufende Leitung verstanden, die aus einer Isolation und einem innerhalb der Isolation verlaufenden elektrischen Leiter (Ader) besteht. Der elektrische Leiter bzw. die Ader kann als Einzeldraht oder als Verbund mehrerer Drähte ausgebildet sein (auch als Litze bezeichnet). Grundsätzlich kann der im Rahmen der Erfindung genannte Innenleiter allerdings auch ausschließlich aus dem elektrischen Leiter bzw. der Ader bestehen oder aber neben dem Isolator auch noch weitere Komponenten aufweisen.

Das elektrische Kabel bzw. der wenigstens eine elektrische Steckverbinder kann insbesondere eine beliebige Anzahl Innenleiter aufweisen, beispielsweise auch nur einen einzigen Innenleiter. Es können auch zwei Innenleiter oder mehr Innenleiter, drei Innenleiter oder mehr Innenleiter, vier Innenleiter oder noch mehr Innenleiter vorgesehen sein. Sofern das Kabel mehrere Innenleiter aufweist, können diese verdrillt durch das Kabel verlaufen, in der Art eines aus der Telekommunikations- bzw. Nachrichtentechnik bekannten Twisted-Pair-Kabels. Die Innenleiter können in dem Kabel allerdings auch parallel geführt sein.

Besonders bevorzugt ist das elektrische Kabel als Koaxialkabel mit genau einem Innenleiter und genau einem Außenleiter ausgebildet oder als mit genau einem Außenleiter geschirmtes Kabel mit genau zwei Innenleitern ausgebildet.

Der zu montierende elektrische Steckverbinder weist vorzugsweise genau ein elektrisches Kabel auf. Der Steckverbinder kann aber auch genau zwei (oder noch mehr) elektrische Kabel aufweisen. Es kann somit also beispielsweise auch vorgesehen sein, einen gemeinsamen Steckverbinder auf zwei (oder mehr) Kabeln zu montieren. Grundsätzlich kann der zu montierende elektrische Steckverbinder eine beliebige Anzahl Kabel aufweisen, beispielsweise drei elektrische Kabel oder mehr elektrische Kabel, vier elektrische Kabel oder mehr elektrische Kabel, fünf elektrische Kabel oder mehr elektrische Kabel, sechs elektrische Kabel oder noch mehr elektrische Kabel.

Sofern nachfolgend von "dem" elektrischen Kabel oder von "einem" elektrischen Kabel gesprochen wird so ist dies nicht einschränkend zu verstehen sondern soll lediglich der besseren Lesbarkeit dienen. Grundsätzlich können sich alle nachfolgend beschriebenen Weiterbildungen, Ausgestaltungen und Varianten der Erfindung auf genau ein elektrisches Kabel, auf genau zwei elektrische Kabel oder auf noch mehr elektrische Kabel beziehen, auch wenn dies nicht explizit angegeben ist. Insbesondere können sich Merkmale und Varianten, die sich auf das elektrische Kabel beziehen auch auf das nachfolgend als "zweites" elektrisches Kabel bezeichnete Kabel beziehen - und umgekehrt.

Das elektrische Kabel und/oder der elektrische Steckverbinder können als Teil der Vorrichtung betrachtet werden. Das elektrische Kabel und/oder der elektrische Steckverbinder können gegebenenfalls aber auch unabhängig von der Vorrichtung sein.

Erfindungsgemäß weist die Vorrichtung zumindest eine Modulgruppe mit wenigstens zwei Bearbeitungsmodulen zur Bearbeitung des Kabels auf. Die Vorrichtung weist ferner eine Zustelleinrichtung auf um das Kabelende entlang einer Zustellrichtung an einen Bearbeitungsplatz in der Modulgruppe zuzustellen.

Die Bearbeitung des Kabelendes findet in der Modulgruppe vorzugsweise an dem Bearbeitungsplatz statt.

Vorzugsweise erfolgt die Zustellung des Kabels entlang der Zustellrichtung geradlinig bzw. linear.

Erfindungsgemäß weist die Modulgruppe eine Modultransporteinrichtung zur Zustellung jeweils eines der Bearbeitungsmodule der Modulgruppe an den Bearbeitungsplatz auf.

Vorzugsweise vermag die Zustelleinrichtung das Kabelende in das sich bereits an dem Bearbeitungsplatz befindliche Bearbeitungsmodul einzuführen.

Erfindungsgemäß ist die Zustelleinrichtung eingerichtet um das Kabelende nach der Bearbeitung wieder aus der Modulgruppe entgegen der Zustellrichtung zu entfernen.

Es können vorzugsweise mehrere Zustelleinrichtungen vorgesehen sein, insbesondere eine Zustelleinrichtung für jede Modulgruppe. Grundsätzlich kann aber auch nur eine einzige Zustelleinrichtung vorgesehen sein, die beispielsweise von der nachfolgen noch erwähnten Transporteinrichtung zwischen den Modulgruppen weiterbewegt wird.

Das Kabelende kann nach der Bearbeitung durch eines, mehrere oder alle der Bearbeitungsmodule der Modulgruppe wieder vollständig aus der Modulgruppe entfernt werden. Es kann insbesondere vorgesehen sein, dass die Zustelleinrichtung eingerichtet ist um das Kabelende nach jedem Bearbeitungsvorgang durch eines der Bearbeitungsmodule zumindest soweit aus der Modulgruppe herauszuziehen, dass der Modultransporteinrichtung ein Auswechseln des Bearbeitungsmoduls an dem Bearbeitungsplatz ermöglicht wird, ohne dass ein Bearbeitungswerkzeug eines der Bearbeitungsmodule mit dem Kabelende kollidiert. Insbesondere kann die Zustelleinrichtung eingerichtet sein um das Kabelende nach jeder Bearbeitung durch eines der Bearbeitungsmodule entgegen der Zustellrichtung zumindest von dem Bearbeitungsplatz zu entfernen.

In vorteilhafterweise ist es durch die Erfindung möglich eine modulare und besonders einfach konfigurierbare Vorrichtung für die Steckverbindermontage bereitzustellen. Die einzelnen Bearbeitungsmodule können in der Modulgruppe komfortabel auswechselbar sein. Die Modulgruppe kann autonom eine Reihe von Bearbeitungsvorgängen im Rahmen der Steckverbindermontage durchführen (in Abhängigkeit der enthaltenen Bearbeitungsmodule).

Bei einer Modulgruppe handelt es sich somit vorzugsweise um eine Einheit, die auch unabhängig von den weiteren Modulgruppe betrieben werden kann und die vorzugsweise eine definierte und in sich abgeschlossene Bearbeitungsabfolge im Rahmen der Kabelkonfektionierung bzw. Steckverbindermontage auszuführen vermag.

Auch bei einem Bearbeitungsmodul kann es sich allerdings vorzugsweise um eine Einheit handeln, die unabhängig von den weiteren Bearbeitungsmodulen betrieben werden kann und die vorzugsweise einen definierten und in sich abgeschlossenen Bearbeitungsvorgang im Rahmen der Kabelkonfektionierung bzw. Steckverbindermontage auszuführen vermag.

Jedes der Bearbeitungsmodule kann eines oder mehrere Bearbeitungswerkzeuge aufweisen, die vorzugsweise in einem gemeinsamen Modulgehäuse aufgenommen sind.

Die Bearbeitungsmodule können räumlich innerhalb der Modulgruppe voneinander getrennt sein.

Die einzelnen Bearbeitungsmodule können modular aufgebaut sein, wodurch einzelne Bearbeitungsmodule der Vorrichtung bzw. einer der Modulgruppen ohne großen Aufwand ersetzt, modifiziert oder entfernt werden können. Hierdurch kann die Vorrichtung, insbesondere für die Bearbeitung verschiedener Kabelarten oder Steckverbinder, mit einfachen Mitteln konfigurierbar sein.

Die erfindungsgemäße Verteilung der Bearbeitungsschritte auf mehrere voneinander unabhängige Bearbeitungsmodule und Modulgruppen ermöglicht es, die Vorrichtung als "Fließbandprozess" bzw. als "Taktautomat" mit aufeinanderfolgenden Einzelschritten zu betreiben, um die Bearbeitungszeit bei einer Massenabfertigung zu reduzieren.

Vorzugsweise wird das Kabel von der Zustelleinrichtung in die Modulgruppe zugestellt, während die Modulgruppe stillsteht. Es kann aber auch vorgesehen sein, dass die Modulgruppe an das Kabel zugestellt wird, während das Kabel stillsteht. Auch eine gemeinsame Zustellung des Kabels und der Modulgruppe kann vorgesehen sein.

In einer vorteilhaften Weiterbildung der Erfindung (d. h. im Rahmen einer rein optionalen Ergänzung, zusätzlich zu den Merkmalen der unabhängigen Patentansprüche) kann vorgesehen sein, dass zumindest eine der Modulgruppen und/oder eines der Bearbeitungsmodule eine Steuereinheit aufweist um die Bearbeitung des Kabels zu steuern und/oder zu überwachen.

Vorzugsweise weist jede der Modulgruppen eine eigene Steuereinheit auf. Die Steuereinheit kann vorzugsweise autonom und unabhängig von den weiteren Modulgruppen die Bearbeitung innerhalb der ihr zugewiesenen Modulgruppe steuern und/oder überwachen. Optional kann eine Kommunikationsverbindung zwischen den Steuereinheiten mehrerer Modulgruppen vorgesehen sein.

Die Steuereinheit kann als Mikroprozessor ausgebildet sein. Anstelle eines Mikroprozessors kann auch eine beliebige weitere Einrichtung zur Implementierung der Steuereinheit vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Gemäß einer Weiterbildung der Erfindung kann vorgesehen sein, dass die Modultransporteinrichtung ausgebildet ist um die Bearbeitungsmodule der Modulgruppe entlang einer Modultransportrichtung an den Bearbeitungsplatz zuzustellen.

Die Modultransporteinrichtung verläuft vorzugsweise geradlinig. Die Modultransporteinrichtung muss allerdings nicht unbedingt geradlinig verlaufen und kann beispielsweise auch einem kurvigen Verlauf folgen.

Gemäß einer Weiterbildung der Erfindung kann vorgesehen sein, dass die Zustellrichtung von der Modultransportrichtung abweicht, vorzugsweise im Wesentlichen orthogonal und besonders bevorzugt orthogonal zu der Modultransportrichtung verläuft.

Die Modultransporteinrichtung kann somit insbesondere verwendet werden um die Bearbeitungsmodule seitlich an den Bearbeitungsplatz zuzustellen, während die Zustelleinrichtung das Kabelende von vorne an den Bearbeitungsplatz zustellt.

In einer Weiterbildung der Erfindung kann vorgesehen sein, dass die Modultransporteinrichtung ausgebildet ist um jeweils nur ein einziges der Bearbeitungsmodule der Modulgruppe an den Bearbeitungsplatz zuzustellen.

Der Bearbeitungsplatz kann dimensioniert sein um nur ein einziges der Bearbeitungsmodule aufzunehmen. Somit kann vorgesehen sein, dass das Kabelende immer nur von einem einzigen der Bearbeitungsmodule und nicht von mehreren Bearbeitungsmodulen gleichzeitig bearbeitet wird.

In einer Weiterbildung der Erfindung kann vorgesehen sein, dass die Modultransporteinrichtung ausgebildet ist um alle Bearbeitungsmodule der Modulgruppe in einer gekoppelten Bewegung gleichzeitig zu bewegen.

Die Bearbeitungsmodule können hierzu beispielsweise über einen gemeinsamen Rahmen miteinander verbunden sein, wobei der Rahmen schließlich von der Modultransporteinrichtung transportiert wird. Die Modultransporteinrichtung kann hierdurch besonders einfach konstruiert sein, selbst wenn viele Bearbeitungsmodule in der Modulgruppe vorgesehen sind.

In einer vorteilhaften Weiterbildung der Erfindung (d. h. im Rahmen einer rein optionalen Ergänzung, zusätzlich zu den Merkmalen der unabhängigen Patentansprüche) kann vorgesehen sein, dass zumindest eines der Bearbeitungsmodule der Modulgruppe ein Bearbeitungswerkzeug aufweist das an das Kabelende zustellbar ist, wenn sich das Bearbeitungsmodul und das Kabelende an dem Bearbeitungsplatz befinden.

Beispielsweise können ein Messer und/oder ein Gegenhalter und/oder ein Abziehwerkzeug einer Abisoliereinrichtung oder eines nachfolgend noch beschriebenen Abisoliermoduls gleichzeitig oder nacheinander an das Kabelende zugestellt werden, nachdem das Kabelende und das Abisoliermodul zuvor jeweils an dem Bearbeitungsplatz positioniert wurden.

In einer Weiterbildung der Erfindung (d. h. im Rahmen einer rein optionalen Ergänzung, zusätzlich zu den Merkmalen der unabhängigen Patentansprüche) kann vorgesehen sein, dass die Modulgruppe zumindest einen Lagerplatz aufweist um zumindest eines der Bearbeitungsmodule der Modulgruppe zu lagern.

Somit können insbesondere Bearbeitungsmodule auf den Lagerplätzen zwischengelagert werden, solange diese nicht verwendet werden, beispielsweise während sich eines der Bearbeitungsmodule an dem Bearbeitungsplatz zur Bearbeitung des Kabelendes befindet.

In einer vorteilhaften Weiterbildung der Erfindung (d. h. im Rahmen einer rein optionalen Ergänzung, zusätzlich zu den Merkmalen der unabhängigen Patentansprüche) kann vorgesehen sein, dass die Anzahl an Lagerplätzen der Modulgruppe der doppelten Anzahl von Bearbeitungsmodulen der Modulgruppe entspricht, abzüglich eines Lagerplatzes.

Hierdurch kann vorteilhaft ein gekoppelter Bearbeitungsmodultransport ausgehend von einer ersten Seite der Modulgruppe zu einer der ersten Seite gegenüberliegenden, zweiten Seite der Modulgruppe orthogonal zu der Zuführrichtung erfolgen. Insbesondere wenn die Bearbeitungsmodule in der Modulgruppe in einer Reihe nebeneinander in der für die Bearbeitung vorgesehenen Reihenfolge angeordnet sind kann ein Wechsel der Bearbeitungsmodule an dem Bearbeitungsplatz besonders effizient erfolgen, wobei auf der Seite, auf die die Bearbeitungsmodule zugestellt werden ausreichend Lagerplätze zur Verfügung stehen, damit auch das letzte Bearbeitungsmodul in der Reihe den Bearbeitungsplatz erreichen kann.

In einer vorteilhaften Weiterbildung der Erfindung (d. h. im Rahmen einer rein optionalen Ergänzung, zusätzlich zu den Merkmalen der unabhängigen Patentansprüche) kann vorgesehen sein, dass zumindest ein einzelnes Bearbeitungsmodul vorgesehen ist, das nicht Teil einer Modulgruppe von Bearbeitungsmodulen ist.

Somit können insbesondere auch Einzelstationen vorgesehen sein, beispielsweise auch manuelle Bearbeitungsmodule, an denen ein Mitarbeiter der Produktion manuelle oder maschinell unterstütze Bearbeitungsvorgänge durchführen kann.

In einer vorteilhaften Weiterbildung der Erfindung kann vorgesehen sein, dass die Modulgruppe genau zwei Bearbeitungsmodule oder mehr Bearbeitungsmodule, drei Bearbeitungsmodule oder mehr Bearbeitungsmodule, vier Bearbeitungsmodule oder mehr Bearbeitungsmodule oder fünf Bearbeitungsmodule oder noch mehr Bearbeitungsmodule aufweist.

Grundsätzlich kann eine beliebige Anzahl Bearbeitungsmodule vorgesehen sein. Die Anzahl hängt dabei im Wesentlichen davon ab, inwieweit sich einzelne Bearbeitungsschritte der Steckverbindermontage sinnvoll gruppieren lassen, insbesondere auch im Hinblick auf die Prozesszeiten in der Vorrichtung. In der Regel ist eine geringe Anzahl Bearbeitungsmodule innerhalb der Modulgruppe vorteilhaft um die Bearbeitungsdauer zu minimieren, da die Bearbeitung innerhalb der Modulgruppe durch die Bearbeitungsmodule sequentiell stattfindet. Eine Kombination von drei bis vier Bearbeitungsmodulen ist in der Regel am praktikabelsten.

In einer Weiterbildung der Erfindung kann vorgesehen sein, dass genau eine Modulgruppe oder mehr Modulgruppen, zwei Modulgruppen oder mehr Modulgruppen, drei Modulgruppen oder mehr Modulgruppen, vier Modulgruppen oder mehr Modulgruppen, fünf Modulgruppen oder mehr Modulgruppen, sechs Modulgruppen oder mehr Modulgruppen, sieben Modulgruppen oder mehr Modulgruppen, acht Modulgruppen oder noch mehr Modulgruppen vorgesehen sind.

Grundsätzlich kann eine beliebige Anzahl Modulgruppen vorgesehen sein. In der Regel ist eine hohe Anzahl Modulgruppen mit jeweils einer geringen Anzahl Bearbeitungsmodule vorteilhaft, da die Bearbeitung der einzelnen Modulgruppen parallel bzw. gleichzeitig stattfinden kann, was den Durchsatz an konfektionierten Kabeln erhöhen kann. Allerdings ist dann der Kostenaufwand zur Bereitstellung der Vorrichtung gegebenenfalls höher.

Es können Modulgruppen mit jeweils einer unterschiedlichen Anzahl von Bearbeitungsmodulen vorgesehen sein, insbesondere um die verschiedenen Prozesszeiten der Bearbeitungsschritte der Bearbeitungsmodule sinnvoll aufzuteilen.

Gemäß einer Weiterbildung der Erfindung kann vorgesehen sein, dass die Vorrichtung eine gemeinsame Transporteinrichtung zum Transport des Kabels entlang einer Transportrichtung zwischen mehreren Modulgruppen oder zwischen zumindest einer Modulgruppe und zumindest einem einzelnen Bearbeitungsmodul aufweist.

Die Transportrichtung muss nicht unbedingt geradlinig verlaufen und kann beispielsweise auch einem kurvigen Verlauf folgen. Vorzugsweise verläuft die Transportrichtung allerdings möglichst linear bzw. geradlinig.

Die Zustelleinrichtung, die Modultransporteinrichtung und die Transporteinrichtung sind vorzugsweise jeweils unabhängig voneinander antreibbar.

Die Modulgruppen und/oder die einzelnen Bearbeitungsmodule können räumlich entlang der Transportrichtung voneinander getrennt sein.

In einer vorteilhaften Weiterbildung der Erfindung kann vorgesehen sein, dass die Zustellrichtung von der Transportrichtung abweicht. Vorzugsweise verläuft die Zustellrichtung im Wesentlichen orthogonal zu der Transporteinrichtung. Besonders bevorzugt verläuft die Zustellrichtung orthogonal zu der Transportrichtung.

In einer vorteilhaften Weiterbildung der Erfindung kann außerdem vorgesehen sein, dass die Modultransportrichtung der Transportrichtung entspricht, vorzugsweise parallel zu der Transportrichtung verläuft.

Vorzugsweise führt die Zustelleinrichtung das Kabel mit dem zu bearbeitenden Kabelende in die zuvor von der Transporteinrichtung angefahrene Modulgruppe ein.

Gemäß einer Weiterbildung der Erfindung kann vorgesehen sein, dass die Transporteinrichtung ein Werkstückträgersystem mit zumindest einem Werkstückträger für das Kabel aufweist, um das Kabel entlang der Transportrichtung zu transportieren.

Der Werkstückträger kann auch als Kabelträger bezeichnet werden. Das Kabel kann zum Transport auf dem Werkstückträger befestigt sein, vorzugsweise verdrehsicher befestigt sein.

Das Werkstückträgersystem kann mittels eines Werkstückförderers (beispielsweise ein Fließband/Förderband) das auf dem Werkstückträger befestigte Kabel zwischen den einzelnen Modulgruppen bzw. den einzelnen Bearbeitungsmodulen entlang der Fertigungslinie bzw. entlang der Transportrichtung transportieren. Grundsätzlich können auch mehrere Werkstückträger vorgesehen sein, beispielsweise ein Werkstückträger pro Modulgruppe.

Der Werkstückträger kann eines oder mehrere Fixiermittel aufweisen, um das Kabel axial und/oder radial zu fixieren.

Die Zustelleinrichtung kann auch Teil des Werkstückträgersystems sein. Beispielsweise kann die Zustelleinrichtung auf dem Werkstückträger angeordnet sein um das Kabel in die Modulgruppe zuzustellen.

Vorzugsweise ist der Werkstückträger dem Kabel während der gesamten Steckverbindermontage zugeordnet. Es kann allerdings auch vorgesehen sein, dass der Werkstückträger dem Kabel lediglich während eines Abschnitts der Montage zugeordnet ist und dass das Kabel nach der Bearbeitung durch eine ersten Modulgruppe zur weiteren Konfektionierung bzw. zur Bearbeitung durch eine zweite Modulgruppe zunächst zu einem weiteren Werkstückträger weitergereicht wird bzw. einem anderen Werkstückträger zugeordnet wird.

In einer besonders vorteilhaften Weiterbildung der Erfindung kann vorgesehen sein, dass die Transporteinrichtung eine Greifereinrichtung mit zumindest einem Greifer aufweist um das Kabel entlang der Transportrichtung zu transportieren.

Das Kabel kann beispielsweise mittels der Greifereinrichtung zwischen einzelnen Zustelleinrichtungen einzelner Modulgruppen weitergereicht werden, vorzugsweise in einer bekannten oder unveränderten Ausrichtung bzw. Orientierung.

Die Greifereinrichtung kann auch vorteilhaft zum Wenden bzw. Umlegen des Kabels verwendet werden, beispielsweise um nach der Montage des ersten Steckverbinders auf dem ersten Kabelende das Kabel zu drehen, um in einem zweiten Bearbeitungszyklus den zweiten Steckverbinder auf dem zweiten Kabelende zu montieren.

In einer Ausgestaltung der Erfindung kann vorgesehen sein, dass die Transporteinrichtung eine Rollenbahn aufweist um einen manuellen Transport des Kabels zwischen zumindest zwei der Modulgruppen zu unterstützen oder um eine reibungsarme Auflage für lange Kabel bereitzustellen.

Anstelle eines Werkstückförderers oder eines sonstigen automatischen Systems kann der Werkstückträger auch von einem Mitarbeiter der Produktion zwischen den einzelnen Bearbeitungsmodulen transportiert werden, beispielsweise unter Zuhilfenahme der genannten Rollenbahn.

In einer vorteilhaften Weiterbildung der Erfindung kann vorgesehen sein, dass die wenigstens zwei Bearbeitungsmodule und/oder die Modulgruppen synchronisiert getaktet sind.

Die Montage des Steckverbinders durch die einzelnen Modulgruppen kann insbesondere hierdurch zeitlich ideal aufeinander abgestimmt werden, wodurch die Bearbeitungszeit bei einer Massenabfertigung weiter reduziert werden kann.

Vorzugsweise ist auch die Transporteinrichtung und/oder die Zustelleinrichtung mit den Modulgruppen synchronisiert getaktet.

In einer Weiterbildung der Erfindung kann vorgesehen sein, dass die Vorrichtung eine Steuereinrichtung aufweist um die Montage des Steckverbinders durch die Modulgruppen zu steuern und/oder zu überwachen.

Die Steuereinrichtung kann insbesondere mit den Steuereinheiten der Modulgruppen kommunikationsverbunden sein, um von den Steuereinheiten im Rahmen der Steckverbindermontage gesammelte Daten zu sammeln und gegebenenfalls auszuwerten und/oder zu dokumentieren. Die Steuereinrichtung kann auch eingerichtet sein, um die Steuereinheiten zu kontrollieren, um den Montageprozess insgesamt zu steuern.

Die Steuereinrichtung kann in einer der Modulgruppen integriert sein oder von den Modulgruppen unabhängig ausgebildet sein. Es kann insbesondere auch vorgesehen sein, dass eine der Steuereinheiten der Modulgruppen die Steuereinrichtung ausbildet - oder umgekehrt.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

In einer Ausgestaltung der Vorrichtung kann vorgesehen sein, dass jeweils eine Prüfeinrichtung zumindest einer der Modulgruppen (vorzugsweise der Mehrzahl der Modulgruppen und besonders bevorzugt allen Modulgruppen) vorgeordnet ist, beispielsweise entlang der Zustellrichtung vorgeordnet ist, um während des Einführens des Kabels in die Modulgruppen und/oder während des Hinausbewegens des Kabels aus der Modulgruppen eine korrekte Bearbeitung des Kabels zu prüfen.

Insbesondere kann vorgesehen sein, mittels der Prüfeinrichtung eine korrekte Vorbestückung des Kabelmantels des Kabels mit Steckverbinderkomponenten (beispielsweise einer Leitungsdichtung) zu überprüfen.

Es kann insbesondere vorgesehen sein, das Vorhandensein, die korrekte Reihenfolge, das korrekte Abstandsmaß und/oder die Unversehrtheit von auf das Kabel aufgeschobenen Steckverbinderkomponenten zu überprüfen. Ganz besonders bevorzugt kann die Prüfung während des Zustellens des Kabels durch die Zustelleinrichtung erfolgen.

Auch die Unversehrtheit des Kabels an sich kann geprüft werden. Somit können beispielsweise abstehende Litzen eines Kabelschirmgeflechts erkannt und das Kabel gegebenenfalls aussortiert werden.

Beispielsweise kann die Prüfeinrichtung eine optische Qualitätsprüfung mittels optischer Sensoren durchführen.

Ein nicht korrekt bearbeitetes bzw. bestücktes Kabel kann beispielsweise von der nachfolgenden Montage ausgeschlossen, als fehlerhaft gekennzeichnet bzw. markiert, in eine entsprechende Güteklasse einsortiert und/oder nachbearbeitet werden.

In einer vorteilhaften Weiterbildung der Erfindung kann vorgesehen sein, dass zumindest eine der folgenden Modulgruppen vorgesehen ist, wobei die Bezeichnungen "erste", "zweite" usw. nicht unbedingt eine spezifische Reihenfolge in der Anordnung andeuten sondern im Wesentlichen der sprachlichen Unterscheidbarkeit der Modulgruppen dienlich sein sollen. Es können auch Modulgruppen mehrfach in der Vorrichtung vorhanden sein.

Es kann eine erste Modulgruppe vorgesehen sein, umfassend Bearbeitungsmodule zur Ausrichtung, Orientierung, Vermessung und/oder Markierung des Kabels.

Es kann eine zweite Modulgruppe vorgesehen sein, umfassend Bearbeitungsmodule zum Vorbestücken des Kabels mit Steckverbinderkomponenten des Steckverbinders.

Es kann eine dritte Modulgruppe vorgesehen sein, umfassend Bearbeitungsmodule zum Abisolieren und Bearbeiten von Kabelkomponenten des Kabels.

Es kann eine vierte Modulgruppe vorgesehen sein, umfassend Bearbeitungsmodule zur Montage von Steckverbinderkomponenten auf dem Kabel.

Es kann eine kombinierte Modulgruppe vorgesehen sein, umfassend Bearbeitungsmodule zum Abisolieren und Bearbeiten von Kabelkomponenten des Kabels sowie zur Montage von Steckverbinderkomponenten auf dem Kabel sowie optional zur Reinigung des Kabelendes. Die kombinierte Modulgruppe kann somit insbesondere Bearbeitungsmodule der dritten und vierten Modulgruppe vorteilhaft kombinieren.

Es kann eine fünfte Modulgruppe vorgesehen sein, umfassend Bearbeitungsmodule zum Prüfen und/oder Reinigen des Kabelendes.

Grundsätzlich können auch noch weitere Modulgruppen vorgesehen sein. Die Modulgruppen können auch anderweitig unterteilt oder zusammengefasst sein. Es kann auch vorgesehen sein, dass nur ein einziges Bearbeitungsmodul eine Modulgruppe ausbildet.

In einer vorteilhaften Ausgestaltung der Erfindung kann die Vorrichtung eine Fördereinrichtung aufweisen die eingerichtet ist, um das elektrische Kabel von einer Kabeltrommel abzurollen.

Insbesondere kann eine Rollenfördereinrichtung mit einer, zwei oder noch mehr Rollen vorgesehen sein, um das elektrische Kabel zwischen den Rollen linear zu führen. Es kann auch ein Bandförderer oder eine sonstige Fördereinrichtung vorgesehen sein, um das Kabel von der Kabeltrommel abzurollen.

In einer vorteilhaften Ausgestaltung der Erfindung kann die Vorrichtung eine Schneideeinrichtung aufweisen die eingerichtet ist, um das elektrische Kabel auf eine definierte Konfektionierungslänge zuzuschneiden.

In einer Ausgestaltung der Erfindung kann vorgesehen sein, dass eines der Bearbeitungsmodule als Ausrichtungsmodul zur Ausrichtung des elektrischen Kabels ausgebildet ist. Das Ausrichtungsmodul kann vorzugsweise von der ersten Modulgruppe umfasst sein.

Insbesondere wenn das elektrische Kabel an beiden Kabelenden mit einem elektrischen Steckverbinder versehen werden soll, sind in der Regel Vorgaben für eine Sollverdrehung zwischen den jeweiligen Steckverbindern bzw. eine relative Ausrichtung der Steckverbinder zueinander bereits im Rahmen der Kabelkonfektionierung bzw. Steckverbindermontage zu beachten.

Die Berücksichtigung einer Sollverdrehung bei der Steckverbindermontage gestaltet sich insbesondere im Rahmen einer teilautomatisierten bzw. vollautomatisierten Steckverbindermontage als schwierig. Ferner gilt es Vorgaben des Kabelherstellers und Sicherheitsvorgaben zu beachten, die die Möglichkeiten hinsichtlich der Verdrehung von Innenleitern des Kabels einschränken können.

Das vorgeschlagene Ausrichtungsmodul kann vorzugsweise die nachfolgend noch beschriebenen Merkmale aufweisen.

Unter einer "Ausrichtung " im Sinne der Erfindung kann insbesondere eine radiale Ausrichtung entlang der Längsachse bzw. Mittelachse des Kabels verstanden werden. Eine Verdrehung des Kabels um seine Mittelachse bzw. Längsachse kann somit zu einer Veränderung der Ist-Ausrichtung führen.

Bei einer Steckverbinderkomponente kann es sich beispielsweise um einen Kontaktteileträger des späteren elektrischen Steckverbinders handeln. Der Kontaktteileträger kann auch als Innengehäuse oder innere Gehäuseschale bezeichnet werden und wird nachfolgend noch näher beschrieben. Vorzugsweise ist der Kontaktteileträger aus einem Kunststoff ausgebildet.

Bei einer Steckverbinderkomponente kann es sich allerdings auch um ein Kontaktelement (auch als Innenleiterkontaktelement bezeichnet), beispielsweise um einen Buchsenkontakt handeln, der auf einem Innenleiter des Kabels befestigt ist. Das Innenleiterkontaktelement kann mit dem Innenleiter des elektrischen Kabels beispielsweise verpresst (insbesondere vercrimpt), verschweißt und/oder verlötet sein.

Bei der Steckverbinderkomponente kann es sich auch um eine Stützhülse bzw. Ferrule, ein Umgehäuse (auch als äußere Gehäuseschale oder Außengehäuse bezeichnet), beispielsweise ein Buchsengehäuse, handeln.

Ferner kann es sich bei der Steckverbinderkomponente um eine Verschlusskappe bzw. Haltekappe, eine Leitungsdichtung, einen sogenannten Power-Kontakt oder eine Isolierschale handeln.

Es können in Abhängigkeit des jeweiligen Steckverbindertyps auch beliebige weitere Steckverbinderkomponenten vorgesehen sein.

Bei der Steckverbinderkomponente im Sinne der Erfindung kann es sich auch um eine Baugruppe aus mehreren einzelnen Komponenten des Steckverbinders handeln. Gegebenenfalls kann auch der gesamte Steckverbinder im Sinne der Erfindung als "Steckverbinderkomponente" bezeichnet werden.

Grundsätzlich kommt es im Rahmen der Ausrichtung des einadrigen Kabels insbesondere darauf an, dass auf dem zweiten Kabelende bereits wenigstens eine Komponente bzw. ein Teil des späteren Steckverbinders montiert bzw. befestigt ist (die sich auf die Ist-Ausrichtung und die Soll-Ausrichtung bezieht). In einer Ausgestaltung der Erfindung kann vorgesehen sein, dass eines der Bearbeitungsmodule als Abisoliermodul zum Einschneiden und Abziehen eines Teilstücks einer Kabelkomponente des Kabels ausgebildet ist. Das Abisoliermodul kann vorzugsweise von der dritten Modulgruppe umfasst sein.

Bei der "Kabelkomponente" kann es sich im Rahmen der Erfindung um eine beliebige Kabelkomponente handeln. Das Abisoliermodul kann aber insbesondere ausgebildet sein, um verschiedenste Kabeltypen von ihren Isolierungen bzw. Dielektrika zu befreien. Bei der "Kabelkomponente" kann es sich somit insbesondere um einen Kabelmantel des Kabels, um eine mehrere Innenleiter gemeinsam umhüllende Füllschicht (auch als "Filler" bezeichnet), um eine einen jeweiligen Innenleiter einzeln umhüllende Isolation (auch als "Primärisolation" bezeichnet) und/oder um ein Dielektrikum des Kabels handeln.

Das Abisoliermodul kann allerdings auch zum Abisolieren sonstiger Kabelkomponenten verwendet werden, beispielsweise auch zum Abisolieren einer Kabelfolie oder einem Außenleiter des Kabels, zum Beispiel einem Kabelschirmgeflecht.

Als "Teilstück" wird im Rahmen der Erfindung der abgetrennte oder zumindest teilweise abgetrennte axiale Abschnitt der Kabelkomponente bezeichnet.

In einer vorteilhaften Weiterbildung der Erfindung kann vorgesehen sein, dass eines der Bearbeitungsmodule als Mehrfachbestückungsmodul ausgebildet und eingerichtet ist, um das Kabel ausgehend von einem der Kabelenden mit zwei oder mehr Steckverbinderkomponenten des Steckverbinders zu bestücken. Das Mehrfachbestückungsmodul kann vorzugsweise Kammern zur Aufnahme der einzelnen Steckverbinderkomponenten aufweisen. Die Kammern können derart angeordnet sein, dass die in den Kammern aufgenommenen Steckverbinderkomponenten einen gemeinsamen Kanal mit einer gemeinsamen Mittelachse ausbilden.

Gemäß einer Weiterbildung der Erfindung kann vorgesehen sein, dass eines der Bearbeitungsmodule als Einzelbestückungsmodul ausgebildet und eingerichtet ist, um das Kabel an einer definierten axialen Position mit einem elastischen Ringkörper zu bestücken.

Der Ringkörper kann vorzugsweise aus einem Elastomer, also aus einem elastisch verformbaren Kunststoff bestehen, beispielsweise aus einem Vulkanisat aus Naturkautschuk oder Silikonkautschuk, beispielsweise Gummi.

Grundsätzlich kann der Ringkörper allerdings auch noch weitere Komponenten aufweisen, beispielsweise metallische Komponenten oder Komponenten aus einem nicht elastischen Kunststoff. Der elastische Teil des Ringkörpers kann dann vorzugsweise dem Kabel zugewandt sein, beispielsweise in der Art eines Innenrings. Die nicht elastischen Komponenten können von dem Kabel abgewandt sein, beispielsweise in der Art eines den Innenring in sich führenden Außenrings.

Das Einzelbestückungsmodul weist vorzugsweise ein Schrägrohr mit einer gegenüber einem Rohrquerschnitt des Schrägrohrs um einen Anstellwinkel geneigten Stirnfläche auf, das in eine Durchgangsbohrung des Ringkörpers einführbar ist.

In anderen Worten kann das Schrägrohr einen abgeschrägten Endabschnitt aufweisen, mit dem es in die Durchgangsbohrung des Ringkörpers einführbar ist.

In einer vorteilhaften Weiterbildung der Erfindung kann deshalb vorgesehen sein, dass die Zustelleinrichtung ein erstes Transportmodul und ein zweites Transportmodul aufweist, wobei das erste Transportmodul ausgebildet ist um das Kabelende entlang der Zustellrichtung in eines der Bearbeitungsmodule zur Bearbeitung des Kabelendes zu transportieren oder entgegen der Zustellrichtung aus dem Bearbeitungsmodul hinaus zu transportieren.

Die Transportmodule können jeweils ausgebildet sein um genau ein elektrisches Kabel zu transportieren. Die Transportmodule können aber auch ausgebildet sein um genau zwei elektrische Kabel zu transportieren (oder noch mehr Kabel). Insbesondere wenn der Steckverbinder mehrere elektrische Kabel aufweist können die Transportmodule dann zum Transport einer entsprechenden Anzahl elektrischer Kabel ausgebildet sein.

Sofern mehr als ein elektrisches Kabel vorgesehen ist bzw. durch ein jeweiliges Bearbeitungsmodul bearbeitet werden soll kann vorgesehen sein, dass die Transportmodule die Kabel gleichzeitig nebeneinander transportieren. Es kann aber auch ein gleichzeitiger Transport vorgesehen sein, bei dem die Kabel stirnseitig axial zueinander versetzt sind. Außerdem können die Kabel gegebenenfalls auch nacheinander transportiert werden, dies ist jedoch weniger bevorzugt.

Sofern im Rahmen der Zustelleinrichtung vorstehend oder nachfolgend von "dem" elektrischen Kabel oder von "einem" elektrischen Kabel gesprochen wird so ist dies nicht einschränkend zu verstehen sondern soll lediglich der besseren Lesbarkeit dienen. Grundsätzlich können sich alle nachfolgend beschriebenen Weiterbildungen und Varianten der Erfindung auf genau ein elektrisches Kabel, auf genau zwei elektrische Kabel oder auf noch mehr elektrische Kabel beziehen, auch wenn dies nicht explizit angegeben ist.

Das zweite Transportmodul ist vorzugsweise an einer in Zustellrichtung von dem ersten Transportmodul beabstandeten Position angeordnet und ausgebildet ist, um das Kabelende entlang oder entgegen der Zustellrichtung zu transportieren.

Vorzugsweise ist das zweite Transportmodul unabhängig von dem ersten Transportmodul antreibbar. Das zweite Transportmodul kann gegebenenfalls aber auch mit dem ersten Transportmodul synchronisiert bewegbar sein.

In vorteilhafter Weise kann aufgrund der erfindungsgemäßen Verwendung von zwei antreibbaren Transportmodulen die Flexibilität beim Transport des elektrischen Kabels bzw. bei der Zustellung des zu bearbeitenden Kabelabschnitts in ein jeweiliges Bearbeitungsmodul verbessert sein. Das elektrische Kabel kann dabei gleichzeitig von beiden Transportmodulen, vorzugsweise aber wahlweise von dem ersten Transportmodul oder dem zweiten Transportmodul transportiert werden. Der Transport des Kabels kann dabei ideal auf die Art der Bearbeitung des Kabelabschnitts bzw. auf das Bearbeitungsmodul abgestimmt werden.

Vorzugsweise weist das erste Transportmodul an das Kabel zustellbare Transporteinheiten auf die derart umpositionierbar sind, dass auf dem zu bearbeitenden Kabelende aufgebrachte Steckverbinderkomponenten des Steckverbinders durch das erste Transportmodul passieren können, während das zweite Transportmodul den Transport des Kabels durchführt.

Die Transporteinheiten des ersten Transportmoduls können in Richtung auf die Mittelachse des Kabels zustellbar sein.

Insbesondere kann das zweite Transportmodul den Transport des Kabels übernehmen, wenn ein Weitertransport durch das erste Transportmodul aufgrund einer anstehenden Kollision des ersten Transportmoduls mit einer Steckverbinderkomponente nicht mehr möglich ist. Die Transporteinheiten des ersten Transportmoduls können dann umpositioniert und damit aus dem Verschiebeweg der Steckverbinderkomponente entfernt werden.

In einer vorteilhaften Ausgestaltung der Zustelleinrichtung kann vorgesehen sein, dass die Transporteinheiten bezogen auf die Mittelachse des Kabels radial geöffnet werden, um die Steckverbinderkomponenten passieren zu lassen.

Vorzugsweise sind genau zwei Transporteinheiten vorgesehen, die jeweils in Richtung auf die Mittelachse des Kabels aufeinander zustellbar sind. Das Kabel kann somit im Falle der geschlossenen bzw. zugestellten Transporteinheiten zwischen den Transporteinheiten verlaufen.

Grundsätzlich können auch noch weitere Transporteinheiten vorgesehen sein, beispielsweise insgesamt drei Transporteinheiten, vier Transporteinheiten oder noch mehr Transporteinheiten.

Gemäß einer Ausgestaltung der Zustelleinrichtung kann vorgesehen sein, dass die Transporteinheiten als antreibbare Transportrollen ausgebildet sind, die das Kabel tangential zwischeneinander zu führen vermögen.

Vorzugsweise sind genau zwei Transportrollen vorgesehen, zwischen denen das Kabel verläuft.

Die Transportrollen können eine aufgeraute Oberfläche aufweisen, um die Reibung zwischen der Transportrolle und dem Kabel zu erhöhen. Die Transportrollen können außerdem entlang des Umfangs Einkerbungen oder ein Negativ eines Kabelmantelabschnitts enthalten, um die Führung des Kabels zu verbessern.

Sofern das erste Transportmodul zum gemeinsamen Transport von mehr als einem Kabel vorgesehen ist, beispielsweise zum Transport von zwei Kabeln, können die Kabel entlang der Drehachse der Transportrollen axial versetzt durch die Transportrollen verlaufen. Die Transportrollen können optional für jedes der Kabel jeweils eine Einkerbung oder ein Negativ des Kabelmantels aufweisen, insbesondere auch um ein axiales Verrutschen der Kabel zu vermeiden und einen definierten Abstand zwischen den Kabeln vorzugeben.

Sofern das erste Transportmodul zum gemeinsamen Transport von mehr als einem Kabel vorgesehen ist, beispielsweise zum Transport von zwei Kabeln, können auch für jedes der Kabel eigene Transporteinheiten, beispielsweise Transportrollen, vorgesehen sein (insbesondere zwei Transportrollen pro Kabel). Die Transportrollen können koaxial zueinander angeordnet sein, wobei der Abstand und die axiale Länge der Transportrollen derart bestimmt sein können, dass ein definierter Abstand zwischen den Kabeln vorgegeben wird. Die Transportrollen der verschiedenen Kabel können ausgebildet sein um die Kabel synchron oder jeweils einzeln zu transportieren.

Die Transportrollen sind vorzugsweise antreibbar, wodurch das Kabel durch eine rotative Antriebsbewegung des ersten Transportmoduls linear entlang oder entgegen der Zustellrichtung bewegbar ist. Das Transportmodul kann somit als Rollenfördereinrichtung ausgebildet sein.

Das Transportmodul kann allerdings auch als Bandfördereinrichtung mit einem oder mehreren als Transportbänder ausgebildeten Transporteinheiten oder als Greifereinrichtung mit einer oder mehreren als Greifer ausgebildeten Transporteinheiten ausgebildet sein. Vorzugsweise ist allerdings eine Rollenfördereinrichtung mit genau zwei Transportrollen vorgesehen.

Gemäß einer Ausgestaltung der Zustelleinrichtung kann vorgesehen sein, dass das zweite Transportmodul einen Linearantrieb aufweist, um den zu bearbeitenden Kabelabschnitt entlang oder entgegen der Zustellrichtung zu transportieren.

Der Linearantrieb des zweiten Transportmoduls kann beispielsweise ein Schienensystem aufweisen.

In einer Ausgestaltung der Zustelleinrichtung kann vorgesehen sein, dass das zweite Transportmodul in Richtung auf die Mittelachse des Kabels zustellbare Klemmkörper aufweist.

Vorzugsweise sind zwei Klemmkörper vorgesehen, die in Richtung auf die Mittelachse des Kabels aufeinander zustellbar sind. Die Klemmkörper können das Kabel somit zwischeneinander aufnehmen.

Es kann somit vorgesehen sein, dass das zweite Transportmodul das Kabel zusammen mit den an das Kabel zugestellten Klemmkörpern linear in Richtung auf das erste Transportmodul bzw. auf das Bearbeitungsmodul zu transportieren vermag (oder in die entgegengesetzte Richtung).

Grundsätzlich kann allerdings eine beliebige Anzahl Klemmkörper vorgesehen sein, beispielsweise auch drei Klemmkörper, vier Klemmkörper oder noch mehr Klemmkörper.

In einer Ausgestaltung der Zustelleinrichtung kann vorgesehen sein, dass die Klemmkörper als Rollenkörper ausgebildet sind, die das Kabel tangential zwischeneinander zu führen vermögen.

Vorzugsweise sind genau zwei Rollenkörper vorgesehen, zwischen denen das Kabel tangential verläuft.

Die Rollenkörper können eine aufgeraute Oberfläche aufweisen, um die Reibung zwischen dem Rollenkörper und dem Kabel zu erhöhen. Die Rollenkörper können außerdem entlang des Umfangs Einkerbungen oder ein Negativ eines Kabelmantelabschnitts enthalten, um die Führung des Kabels zu verbessern.

Sofern das zweite Transportmodul zum gemeinsamen Transport von mehr als einem Kabel vorgesehen ist, beispielsweise zum Transport von zwei Kabeln, können die Kabel entlang der Drehachse der Rollenkörper axial versetzt durch die Rollenkörper verlaufen. Die Rollenkörper können optional für jedes der Kabel jeweils eine Einkerbung oder ein Negativ des Kabelmantels aufweisen, insbesondere auch um ein axiales Verrutschen der Kabel zu vermeiden und einen definierten Abstand zwischen den Kabeln vorzugeben.

Sofern das zweite Transportmodul zum gemeinsamen Transport von mehr als einem Kabel vorgesehen ist, beispielsweise zum Transport von zwei Kabeln, können auch für jedes der Kabel eigene Klemmkörper, beispielsweise Rollenkörper, vorgesehen sein (insbesondere zwei Rollenkörper pro Kabel). Die Rollenkörper können koaxial zueinander angeordnet sein, wobei der Abstand und die axiale Länge der Rollenkörper derart bestimmt sein können, dass ein definierter Abstand zwischen den Kabeln vorgegeben wird.

In einer vorteilhaften Ausgestaltung der Zustelleinrichtung kann vorgesehen sein, dass die Rollenkörper durch eine Bremseinheit blockierbar sind, um das Kabel wahlweise zwischen den Rollenkörpern in einem blockierten Zustand in Zustellrichtung zu fixieren oder in einem freigegebenen Zustand in Zustellrichtung beweglich zu lagern.

Die Rollenkörper bzw. Klemmkörper des zweiten Transportmoduls können somit wahlweise zur Fixierung oder zur - möglichst kräftefreien - tangentialen Führung des Kabels verwendbar sein.

Vorzugsweise sind die Rollenkörper des zweiten Transportmoduls nicht antreibbar.

Sofern die Rollenkörper durch die Bremseinheit blockiert sind, ist es möglich, das Kabel unter Verwendung des Linearantriebs des zweiten Transportmoduls entlang oder entgegen der Zustellrichtung zu transportieren. Sofern die Rollenkörper durch die Bremseinheit nicht blockiert bzw. freigegeben sind und sich damit frei drehen können, ist hingegen ein Transport durch das erste Transportmodul möglich.

Mehrere Rollenkörper können gemeinsam oder jeweils einzeln durch die Bremseinheit blockierbar sein. Vorzugsweise sind alle Rollenkörper gemeinsam blockierbar. Grundsätzlich kann eine beliebige Anzahl Bremseinheiten vorgesehen sein, beispielsweise eine Bremseinheit für jeden Rollenkörper. Es kann allerdings auch eine gemeinsame Bremseinheit für alle Rollenkörper vorgesehen sein.

In einer Ausgestaltung der Zustelleinrichtung kann vorgesehen sein, dass das erste Transportmodul in Zustellrichtung näher an dem Bearbeitungsmodul (insbesondere an einem Bearbeitungswerkzeug des Bearbeitungsmoduls) angeordnet ist als das zweite Transportmodul, wobei das erste Transportmodul vorzugsweise unmittelbar an das Bearbeitungsmodul (insbesondere an ein Bearbeitungswerkzeug des Bearbeitungsmoduls) angrenzend angeordnet ist.

Vorzugsweise kann das erste Transportmodul in Zustellrichtung so nah wie technisch realisierbar an dem Bearbeitungsmodul angeordnet sein.

Dadurch, dass das erste Transportmodul in Zustellrichtung näher an dem Bearbeitungsmodul, vorzugsweise möglichst nah bzw. unmittelbar an das Bearbeitungsmodul angrenzend angeordnet ist, kann das erste Transportmodul das Kabel - sofern erforderlich - auch mit sehr hohen Kräften in das Bearbeitungsmodul einführen (oder wieder aus dem Bearbeitungsmodul hinausbewegen), ohne beispielsweise ein Abknicken des Kabels zu verursachen. Insbesondere kann es somit von Vorteil sein, den Abstand bzw. die Kabellänge zwischen dem ersten Transportmodul und einem oder mehreren Werkzeugen des Bearbeitungsmoduls zu verkürzen.

In einer vorteilhaften Ausgestaltung der Zustelleinrichtung kann vorgesehen sein, dass zumindest eine von dem ersten Transportmodul und von dem zweiten Transportmodul in Zustellrichtung beabstandete Führungseinrichtung zur Führung des Kabels vorgesehen ist.

Es kann beispielsweise eine erste Führungseinrichtung vorgesehen sein, die in Zustellrichtung vor dem zweiten Transportmodul (d. h. weiter von dem Bearbeitungsmodul beabstandet als das zweite Transportmodul) angeordnet ist, um das Kabel beispielsweise in einem Einführbereich der Zustelleinrichtung abzustützen.

Beispielsweise kann auch eine zweite Führungseinrichtung zwischen dem ersten Transportmodul und dem zweiten Transportmodul vorgesehen sein. Hierdurch kann das Kabel zwischen den beiden Transportmodulen vorteilhaft abgestützt werden.

Beispielsweise kann außerdem eine dritte Führungseinrichtung zwischen dem ersten Transportmodul und dem Bearbeitungsmodul vorgesehen sein, um das Kabel beim Einführen oder Hinausbewegen aus dem Bearbeitungsmodul zusätzlich abzustützen. Vorzugsweise ist allerdings keine Führungseinrichtung zwischen dem ersten Transportmodul und dem Bearbeitungsmodul vorgesehen um den Abstand zwischen dem ersten Transportmodul und dem Bearbeitungsmodul noch zu verringern.

Die Führungseinrichtung kann frei drehbare Rollen oder Kugelkörper aufweisen, um das Kabel möglichst kräftefrei bzw. reibungsfrei zu lagern.

Die Verwendung einer Zustelleinrichtung mit den beschriebenen zwei Transportmodulen zusammen mit einem Bestückungsmodul (insbesondere mit dem Mehrfachbestückungsmodul und/oder dem Einzelbestückungsmodul) eignet sich in ganz besonderer Weise, da die Bestückung des Kabels mit einer oder mehreren Steckverbinderkomponenten in der Regel eine vergleichsweise exakte Führung des Kabels bei gleichzeitig hohen Einführkräften zum Einschieben des Kabels in die Steckverbinderkomponenten erfordert.

Aufgrund der hohen Flexibilität durch Verwendung von zwei voneinander unabhängig ausgebildeten Transportmodulen kann sich insbesondere das erste Transportmodul gut eignen, um das Kabel mit dem zu bearbeiteten Kabelabschnitt bzw. mit dem entsprechenden Kabelende durch auf den Kabelmantel aufzubringende Steckverbinderkomponenten hindurchzuführen, wofür hohe Kräfte erforderlich sein können, insbesondere wenn die Durchgangsbohrungen im Hinblick auf den Durchmesser des Kabelmantels klein sind (wie dies beispielsweise bei Dichtungen naturgemäß der Fall ist). Durch Aufteilen der Transportaufgabe auf zwei Transportmodule ist es möglich, das erste Transportmodul möglichst nah an dem Bestückungsmodul anzuordnen, wodurch ein Abknicken und eine fehlerhafte Positionierung während des Einführens des Kabels in die Steckverbinderkomponenten verhindert werden kann.

Die Zustelleinrichtung mit den zwei Transportmodulen eignet sich auch vorteilhaft zur Bestückung des Kabels mit einer vorzugsweise von dem Steckverbinder unabhängigen Mantelklemme, beispielsweise durch eine nachfolgend noch beschriebene Bestückungseinheit.

In einer Ausgestaltung der Erfindung kann vorgesehen sein, dass eines der Bearbeitungsmodule als Qualitätsüberwachungsmodul zur Qualitätsüberwachung der Bearbeitung des Kabelendes ausgebildet ist. Das Qualitätsüberwachungsmodul kann vorzugsweise von der fünften Modulgruppe umfasst sein.

Das Qualitätsüberwachungsmodul kann die nachfolgend noch beschriebenen Merkmale aufweisen.

Gemäß einer Weiterbildung der Erfindung kann vorgesehen sein, dass ein Qualitätsüberwachungsmodul zur Qualitätsüberwachung der Bearbeitung des Kabelendes vorgesehen ist, aufweisend zumindest einen optischen Sensor der ausgebildet ist, um den Zustand des Kabelendes vor und/oder nach dem Bearbeiten durch zumindest eines der Bearbeitungsmodule zu erfassen.

Dadurch, dass eine optische Qualitätsüberwachung vorgesehen ist, um den Qualitätszustand bzw. den Bearbeitungszustand des Kabels optisch, insbesondere durch Erfassen und Auswerten einer oder mehrerer optischen Abbildungen des zu bearbeitenden Kabelendes, zu erfassen, lässt sich das Qualitätsüberwachungsmodul vorteilhaft zur Überwachung verschiedener Qualitätsmerkmale verwenden. Eine Anpassung des Qualitätsüberwachungsmoduls kann insbesondere im Rahmen einer modularen Vorrichtung, bei dem beispielsweise auch die Bearbeitungsmodule modular aufgebaut sind, vorteilhaft möglich sein.

In einer Weiterbildung der Erfindung kann vorgesehen sein, dass das Kabel, eine auf dem Kabel befestigte Mantelklemme und/oder ein dem Kabel während dessen Bearbeitung zugeordneter Werkstückträger einen Informationsträger zur Identifizierung aufweist, und wobei eine Dokumentation der Montage des Steckverbinders für die Bearbeitung durch zumindest eines der Bearbeitungsmodule dem Kabel mittels des Informationsträgers zugeordnet ist.

Vorzugsweise erfolgt die Zuordnung der Dokumentation der Bearbeitung des Kabels unter Berücksichtigung von auf dem Informationsträger aufgeprägten bzw. eingeprägten Informationen.

Die Dokumentation kann insbesondere im Rahmen eines Dokumentationsmoduls vorgenommen werden. Das Dokumentationsmodul kann vorzugsweise von der ersten Modulgruppe umfasst sein.

Für die Zuordnung der Dokumentation kann eine oder können mehrere der Steuereinheiten und/oder die Steuereinrichtung vorgesehen sein.

In einer Ausgestaltung der Erfindung kann vorgesehen sein, dass eines der Bearbeitungsmodule als Reinigungsmodul ausgebildet ist. Das Reinigungsmodul kann vorzugsweise von der fünften Modulgruppe umfasst sein.

Bekanntermaßen treten während der Bearbeitung von elektrischen Kabeln im Rahmen der Steckverbindermontage Verunreinigungen auf, insbesondere Partikel verschiedenster Art, die schließlich zu einem gewissen Grad an dem Kabel, an den Steckverbinderkomponenten und/oder in der Fertigungsanlage zurück bleiben. Um eine ausreichend hohe Qualität der Steckverbinder sicherzustellen und Fehlerquellen in dem fertigen Produkt ausschließen zu können (beispielsweise Kurzschlüsse durch metallische Partikel, mechanische Blockade und Undichtigkeit etc.), gilt es den Partikeleintrag zu reduzieren und die sogenannte technische Sauberkeit als Qualitätsmerkmal im Rahmen der Konfektionierung elektrischer Kabel heranzuziehen.

Das Reinigungsmodul kann hierzu vorzugsweise die nachfolgend noch beschriebenen Merkmale aufweisen.

Die Erfindung betrifft auch ein Verfahren zur Montage eines elektrischen Steckverbinders auf einem ersten Kabelende und/oder auf einem zweiten Kabelende eines einen oder mehrere Innenleiter aufweisenden elektrischen Kabels, wonach das Kabel von wenigstens zwei Bearbeitungsmodulen zumindest einer gemeinsamen Modulgruppe bearbeitet wird. Eine Zustelleinrichtung stellt das Kabelende entlang einer Zustellrichtung an einen Bearbeitungsplatz in der Modulgruppe zu. Eine Modultransporteinrichtung der Modulgruppe stellt jeweils eines der Bearbeitungsmodule zur Bearbeitung des Kabelendes an den Bearbeitungsplatz zu. Das Kabelende wird nach der Bearbeitung wieder entgegen der Zustellrichtung aus der Modulgruppe entfernt.

Es kann vorgesehen sein, dass das vorstehend und nachfolgend beschriebene Verfahren unter Verwendung der bereits beschriebenen Vorrichtung durchgeführt wird.

Gemäß einer Weiterbildung der Erfindung kann vorgesehen sein, dass wenigstens eine Steuereinheit die Bearbeitung des Kabels durch zumindest eine Modulgruppe und/oder eines der Bearbeitungsmodule steuert und/oder überwacht.

Gemäß einer Weiterbildung der Erfindung kann vorgesehen sein, dass die Zustellrichtung von einer Modultransportrichtung, entlang der die Modultransporteinrichtung die Bearbeitungsmodule der Modulgruppe an den Bearbeitungsplatz zustellt, abweicht, vorzugsweise im Wesentlichen orthogonal und besonders bevorzugt orthogonal zu der Modultransportrichtung verläuft.

In einer vorteilhaften Weiterbildung der Erfindung kann vorgesehen sein, dass die Modultransporteinrichtung die Bearbeitungsmodule der Modulgruppe nacheinander an den Bearbeitungsplatz zustellt.

In einer Weiterbildung der Erfindung kann vorgesehen sein, dass die Modultransporteinrichtung die Bearbeitungsmodule der Modulgruppe in einer gekoppelten Bewegung gleichzeitig bewegt.

Gemäß einer Weiterbildung der Erfindung kann vorgesehen sein, dass zuerst eines der Bearbeitungsmodule der Modulgruppe an den Bearbeitungsplatz zugestellt wird, bevor das Kabelende an den Bearbeitungsplatz zugestellt wird.

Gemäß einer Weiterbildung der Erfindung kann vorgesehen sein, dass zumindest eines der Bearbeitungsmodule der Modulgruppe ein Bearbeitungswerkzeug aufweist, das an das Kabelende zugestellt wird, nachdem das Bearbeitungsmodul und das Kabelende an den Bearbeitungsplatz zugestellt wurden.

In einer Weiterbildung der Erfindung kann vorgesehen sein, dass eine gemeinsame Transporteinrichtung das Kabel entlang einer Transportrichtung zwischen mehreren Modulgruppen oder zwischen zumindest einer Modulgruppe und zumindest einem einzelnen Bearbeitungsmodul transportiert.

Gemäß einer Weiterbildung der Erfindung kann vorgesehen sein, dass die wenigstens zwei Bearbeitungsmodule und/oder die Modulgruppen synchronisiert getaktet werden.

Vorzugsweise werden alle Bearbeitungsmodule synchronisiert getaktet.

In einer vorteilhaften Weiterbildung der Erfindung kann vorgesehen sein, dass das Kabelende mittels eines ersten Transportmoduls entlang einer Zustellrichtung in eines der Bearbeitungsmodule zur Bearbeitung des Kabelendes transportiert wird, wobei das Kabelende außerdem mittels eines zweiten Transportmoduls, das an einer in Zustellrichtung von dem ersten Transportmodul beabstandeten Position angeordnet ist, entlang oder entgegen der Zustellrichtung transportiert wird, wobei an das Kabel zustellbare Transporteinheiten des ersten Transportmoduls derart umpositioniert werden, dass auf dem zu bearbeitenden Kabelende aufgebrachte Steckverbinderkomponenten des Steckverbinders durch das erste Transportmodul passieren können, während das zweite Transportmodul den Transport des Kabels durchführt.

Es kann somit ein äußerst flexibler Transport des Kabels im Rahmen einer Steckverbindermontage erfolgen.

Es kann insbesondere vorgesehen sein, dass die Transporteinheiten des ersten Transportmoduls geöffnet werden, um auf dem zu bearbeitenden Kabelabschnitt aufgebrachte Steckverbinderkomponenten durch das erste Transportmodul passieren zu lassen, während das zweite Transportmodul den Transport des Kabels durchführt.

Insbesondere kann das zweite Transportmodul den Transport des Kabels übernehmen, wenn ein Weitertransport durch das erste Transportmodul aufgrund einer Kollision des ersten Transportmoduls mit der Steckverbinderkomponente nicht mehr möglich ist.

In einer vorteilhaften Ausgestaltung der Erfindung kann vorgesehen sein, dass das Kabel durch Zustellen von zumindest zwei Klemmkörpern in Richtung auf die Mittelachse des Kabels in dem zweiten Transportmodul gehalten wird, nachdem ein Benutzer das Kabel in das zweite Transportmodul eingelegt hat.

Optional kann eine mehrstufige Klemmkraft zum Halten des Kabels in dem zweiten Transportmodul vorgesehen sein, insbesondere eine zweistufige Klemmkraft. So kann beispielsweise eine erste Klemmkraft für die Klemmkörper durch eine oder mehrere mechanische Federelemente bereitgestellt werden und eine zweite Klemmkraft, die gegenüber der ersten Klemmkraft erhöht ist, durch einen pneumatischen oder hydraulischen Aktor.

Die erste Klemmkraft kann dann beispielsweise vorteilhaft auf die Klemmkörper aufgebracht werden, solange sich der das Kabel einlegende Benutzer noch in Zugriffsreichweite der Klemmkörper befindet bzw. noch keinen ausreichenden Sicherheitsabstand zu den Klemmkörpern einhält. Eine Überwachung des Benutzers oder dessen Hände kann zum Beispiel durch einen Lichtvorhang erfolgen. Erst wenn der Benutzer einen ausreichenden Sicherheitsabstand zu den Klemmkörpern einhält können die Klemmkörper mit der höheren, zweiten Klemmkraft beaufschlagt werden. Eine Verletzung des Benutzers kann somit ausgeschlossen werden, während gleichzeitig die Zugänglichkeit und die Benutzerfreundlichkeit für das Einlegen des Kabels besonders hoch ist.

In einer vorteilhaften Ausgestaltung der Erfindung kann vorgesehen sein, dass das Kabel von dem zweiten Transportmodul linear entlang der Zustellrichtung in das erste Transportmodul eingeführt wird, wonach anschließend zumindest zwei Transporteinheiten des ersten Transportmoduls in Richtung auf die Mittelachse des Kabels zugestellt werden.

Vorzugsweise kann somit eine erste Transportbewegung des Kabels durch das zweite Transportmodul erfolgen, die das Kabel hierdurch zur weiteren Transportierung an das erste Transportmodul übergibt.

Gemäß einer Ausgestaltung der Erfindung kann vorgesehen sein, dass der Transport des Kabels wahlweise von dem ersten Transportmodul oder von dem zweiten Transportmodul übernommen wird.

Somit sind die Transportmodule vorzugsweise unabhängig voneinander ansteuerbar. Die Transportmodule können aber auch gleichzeitig, vorzugsweise synchronisiert, angesteuert werden und das Kabel dadurch synchron transportieren - dies ist aufgrund des erhöhten Aufwands und der Belastung des Kabelmantels bei einer unzureichenden Synchronisation allerdings nicht bevorzugt.

In einer vorteilhaften Ausgestaltung der Erfindung kann vorgesehen sein, dass die Klemmkörper des zweiten Transportmoduls als Rollenkörper ausgebildet sind, die mittels einer Bremseinheit blockiert werden, während das zweite Transportmodul den zu bearbeitenden Kabelabschnitt linear zustellt, und die von der Bremseinheit frei drehbar freigegeben werden, während das erste Transportmodul den Kabelabschnitt zustellt.

Es kann somit vorgesehen sein, dass das zweite Transportmodul während der Zustellung des Kabels durch das erste Transportmodul die Funktion einer möglichst kräftefreien Lagerung des Kabels übernimmt.

In einer vorteilhaften Ausgestaltung der Erfindung kann vorgesehen sein, dass die Zustellung des zu bearbeitenden Kabelabschnitts in das jeweilige Bearbeitungsmodul durch das erste Transportmodul erfolgt, während das zweite Transportmodul in Zustellrichtung stillsteht.

Vorzugsweise ist die Bremseinheit der Klemmkörper des zweiten Transportmoduls freigegeben, während das zweite Transportmodul in Zustellrichtung stillsteht. Hierdurch kann sich das Kabel frei durch das zweite Transportmodul bewegen, während das erste Transportmodul das Kabel beispielsweise in das Bearbeitungsmodul einführt.

Nachfolgend werden Ausführungsbeispiele der Erfindung anhand der Zeichnung näher beschrieben.

In den Figuren sind funktionsgleiche Elemente mit denselben Bezugszeichen versehen.

Es zeigen schematisch:
- Figur 1: ein beispielhaftes zweiadriges elektrisches Kabel in einer Seitenansicht;
- Figur 2: das elektrische Kabel der Figur 1 in einer Vorderansicht;
- Figur 3: ein beispielhaftes einadriges elektrisches Kabel in einer Seitenansicht vor und nach einer Ausrichtung des ersten Kabelendes;
- Figur 4: eine Zustelleinrichtung und eine Schneideeinrichtung, um das Kabel von einer Kabeltrommel abzurollen und gemäß einer Konfektionierungslänge abzulängen;
- Figur 5: das erste Ende des elektrischen Kabels der Figur 1 nach einem Verdrehen der Innenleiter und einer resultierenden Längenverkürzung;
- Figur 6: ein auf einem Werkstückträger mit beiden Kabelenden fixiertes Kabel, einen Laser zur Erzeugung einer Markierung auf dem Kabelmantel des Kabels, eine elektronische Baugruppe zur Konfigurierung eines elektronischen Bauteils auf dem Kabelmantel des Kabels, sowie Sensorik zur Erfassung der Ist-Ausrichtung;
- Figur 7: ein Aktuatormodul zur Angleichung der Istverdrehung der Innenleiter an die Sollverdrehung;
- Figur 8: eine beispielhafte Verschiebung der axialen Position einer Steckverbinderkomponente entlang der Mittelachse des Kabels aufgrund der Längenverkürzung;
- Figur 9: ein Abisoliermodul zum Einschneiden und Abziehen eines Teilstücks einer Kabelkomponente in perspektivischer Ansicht;
- Figur 10: den Rotationskopf des Abisoliermoduls gemäß Figur 9 in einer perspektivischen Ansicht;
- Figur 11: ein beispielhaftes einadriges elektrisches Kabel mit zwei abisolierten Teilstücken;
- Figur 12: ein lineares Messer mit gerader Schneide und einem Anschlag für das Kabel;
- Figur 13: ein Rundmesser mit einem Anschlag für das Kabel;
- Figur 14: ein m-förmiges Formmesser zum Abisolieren einer die Innenleiter gemeinsam einhüllenden Füllschicht;
- Figur 15: ein weiteres vorteilhaftes Messer zum Abisolieren einer die Innenleiter gemeinsam einhüllenden Füllschicht;
- Figur 16: ein mit vier Steckverbinderkomponenten und mehreren Mantelklemmen bestücktes, beispielhaftes zweiadriges elektrisches Kabel in einer Seitenansicht;
- Figur 17: ein mit drei Steckverbinderkomponenten und mehreren Mantelklemmen bestücktes, beispielhaftes einadriges elektrisches Kabel in einer Seitenansicht;
- Figur 18: ein Mehrfachbestückungsmodul in einer seitlichen Schnittdarstellung;
- Figur 19: einen Ausschnitt des Mehrfachbestückungsmoduls gemäß Figur 18 nach dem Durchführen des elektrischen Kabels durch die Steckverbinderkomponenten;
- Figur 20: einen Ausschnitt des Mehrfachbestückungsmoduls gemäß Figur 18 während des Entnehmens des elektrischen Kabels;
- Figur 21: zwei Kammern des Mehrfachbestückungsmoduls der Figur 18 in einer perspektivischen Schnittdarstellung;
- Figur 22: ein Mehrfachbestückungsmodul zur Montage eines mehrere elektrische Kabel aufweisenden elektrischen Steckverbinders;
- Figur 23: eine Erweiterung für ein Bestückungsmodul mit einem Führungsdorn als Einführhilfe für das Kabel;
- Figur 24: ein Einzelbestückungsmodul gemäß einem ersten Ausführungsbeispiel mit einem Schrägrohr, einem Abstreifmittel und einem Stützkörper, vor dem Einführen des Schrägrohrs in den Ringkörper;
- Figur 25: das Einzelbestückungsmodul der Figur 24 nach dem Einführen des Schrägrohrs in den Ringkörper und nach dem Positionieren des Kabels in dem Schrägrohr;
- Figur 26: ein beispielhaftes Abstreifmittel in einer perspektivischen Darstellung;
- Figur 27: eine Möglichkeit der Vorbehandlung des Kabels vor dem Bestücken;
- Figur 28: ein Einzelbestückungsmodul gemäß einem zweiten Ausführungsbeispiel mit einer Aktuatorbaugruppe zum Einführen des Schrägrohrs in den Ringkörper und mit einem Einzelmagazin für die Ringkörper, vor dem Einführen des Schrägrohrs in den Ringkörper;
- Figur 29: die Vorrichtung der Figur 28 während des Einführens des Schrägrohrs in den Ringkörper;
- Figur 30: die Vorrichtung der Figur 28 nach dem Positionieren des Kabels in dem Schrägrohr;
- Figur 31: die Vorrichtung der Figur 28 nach dem Abstreifen des Ringkörpers auf das Kabel;
- Figur 32: die Vorrichtung der Figur 28 in einer perspektivischen Darstellung mit einem teilweise geöffneten, zweiteiligen Stützkörper;
- Figur 33: ein Einzelbestückungsmodul zur Montage eines mehrere elektrische Kabel aufweisenden elektrischen Steckverbinders, aufweisend zwei Schrägrohre;
- Figur 34: ein Einpressmodul gemäß einem ersten Ausführungsbeispiel während des Einführens zweier elektrischer Kabel in jeweilige Vorschubeinrichtungen;
- Figur 35: das Einpressmodul der Figur 34 nach dem Fixieren der Kabel in einer jeweiligen Halteeinrichtung;
- Figur 36: das Einpressmodul der Figur 34 nach dem Fixieren der Gehäusebaugruppe durch eine Fixiereinrichtung und während des Zustellens des vorderen Endes des ersten Kabels in die Gehäusebaugruppe durch die erste Vorschubeinrichtung;
- Figur 37: das Einpressmodul der Figur 34 nachdem das Innenleiterkontaktelement des ersten Kabels die Sollposition in der Gehäusebaugruppe erreicht hat;
- Figur 38: eine Vorspanneinrichtung des Einpressmoduls mit einem Teleskopstößel zum mechanischen Vorspannen eines Rastmittels innerhalb der Gehäusebaugruppe;
- Figur 39: die Vorspanneinrichtung der Figur 38, während das Innenleiterkontaktelement durch Berührung eines Tasterelements des Teleskopstößels ein Entfernen des Teleskopstößels aus dem Verschiebeweg des Innenleiterkontaktelements auslöst;
- Figur 40: die Vorspanneinrichtung der Figur 38 während die Sensoreinheit die Istposition des Innenleiterkontaktelements innerhalb der Gehäusebaugruppe im Verlauf des weiteren Einpressens des Kabelendes überwacht;
- Figur 41: die Vorspanneinrichtung der Figur 38, nachdem das Innenleiterkontaktelement die Sollposition innerhalb der Gehäusebaugruppe erreicht hat;
- Figur 42: ein Einpressmodul gemäß einem zweiten, bevorzugten Ausführungsbeispiel während des Einführens des elektrischen Kabels in die Vorschubeinrichtung;
- Figur 43: das Einpressmodul der Figur 42 nach dem lagerichtigen Ausrichten des Kabels in der Ausgangsposition unter Verwendung der Ausrichtungshilfe;
- Figur 44: das Einpressmodul der Figur 42 nach dem Fixieren der Gehäusebaugruppe durch die Fixiereinrichtung und nach dem Fixieren des Kabels in der Halteeinrichtung;
- Figur 45: einen beispielhaften Steckverbinder mit zwei elektrischen Kabeln nach dem Einpressen beider Kabel während der Endmontage;
- Figur 46: eine Zustelleinrichtung der erfindungsgemäßen Vorrichtung mit zwei Transportmodulen, während des Einlegens eines elektrischen Kabels in das zweite Transportmodul;
- Figur 47: die Zustelleinrichtung der Figur 46 während des Transportierens des elektrischen Kabels durch das zweite Transportmodul in Richtung auf das erste Transportmodul;
- Figur 48: die Vorrichtung der Figur 46 während der Übergabe des Kabels an das erste Transportmodul zum Weitertransport;
- Figur 49: die Vorrichtung der Figur 46 während der Zustellung des Kabels in eines der Bearbeitungsmodule durch das erste Transportmodul;
- Figur 50: die Vorrichtung der Figur 46 während des Hinausbewegens des Kabels aus dem Bearbeitungsmodul durch das erste Transportmodul;
- Figur 51: die Vorrichtung der Figur 46 während des weiteren Hinausbewegen des Kabels aus dem Bearbeitungsmodul durch das zweite Transportmodul, während die Transportrollen des ersten Transportmoduls geöffnet sind, um die Steckverbinderkomponente durch das erste Transportmodul passieren zu lassen;
- Figur 52: die Vorrichtung der Figur 46 während der Öffnens der Klemmkörper des zweiten Transportmoduls zur Freigabe des bestückten Kabels;
- Figur 53: eine vergrößerte Seitendarstellung von Rollenkörpern des zweiten Transportmoduls zum Transport bzw. zur Lagerung eines einzigen elektrischen Kabels;
- Figur 54: eine vergrößerte Seitendarstellung von Rollenkörpern des zweiten Transportmoduls zum gleichzeitigen Transport bzw. zur Lagerung von zwei elektrischen Kabeln gemäß einer ersten Variante;
- Figur 55: eine vergrößerte Seitendarstellung von Rollenkörpern des zweiten Transportmoduls zum Transport bzw. zur Lagerung von zwei elektrischen Kabeln gemäß einer zweiten Variante;
- Figur 56: ein auf einem Werkstückträger befestigtes elektrisches Kabel, zwei beispielhafte Informationsträger sowie eine Steuereinrichtung und eine globale Datenbank zur Zuordnung einer Dokumentation der Steckverbindermontage;
- Figur 57: ein Montagemodul zur Montage eines Kontaktteileträgers während des Aufschiebens des Kontaktteileträgers auf zwei Innenleiterkontaktelemente des elektrischen Kabels;
- Figur 58: das Montagemodul der Figur 57 zusammen mit einem Sensormodul zur Erfassung einer axialen Istposition der Innenleiterkontaktelemente innerhalb des Kontaktteileträgers;
- Figur 59: das Montagemodul der Figur 57 während des Montierens einer Schirmhülse auf dem Kontaktteileträger;
- Figur 60: ein von dem Sensormodul angesteuertes Betätigungsmittel zur Betätigung einer Sekundärsicherung des Kontaktteileträgers;
- Figur 61: ein Qualitätsüberwachungsmodul mit zwei optischen Sensoren und zwei Beleuchtungseinheiten für eine optische Qualitätsüberwachung der Steckverbindermontage;
- Figur 62: eine Ringdüse eines Reinigungsmoduls in einer Draufsicht;
- Figur 63: eine mit einem lonisator versehene Ringdüse eines Reinigungsmoduls in Kombination mit einer Absaugeinrichtung in einer Seitenansicht;
- Figur 64: ein Reinigungsmodul mit einer impulsgesteuerten Düse;
- Figur 65: ein Reinigungsmodul mit einer weiteren Düse in Kombination mit einer weiteren Absaugeinrichtung;
- Figur 66: ein Reinigungsmodul mit vier antreibbaren Bürsten;
- Figur 67: ein Reinigungsmodul mit einer Spiralbürste;
- Figur 68: ein Reinigungsmodul mit zwei Halbschalen und zwei Folien zur Durchführung eines Adhäsionsverfahrens;
- Figur 69: ein Reinigungsmodul mit einem Rüttler;
- Figur 70: ein Reinigungsmodul mit einer Düse in Kombination mit einer Absaugeinrichtung in einem geschlossenen Gehäuse;
- Figur 71: eine erfindungsgemäße Vorrichtung mit drei Modulgruppen und einer gemeinsamen Transporteinrichtung zum Transport der Kabel zwischen den Modulgruppen;
- Figur 72: eine der Modulgruppen in einer vereinfachten Schnittdarstellung;
- Figur 73: ein erster Ausschnitt einer erfindungsgemäßen Vorrichtung zur Montage des elektrischen Steckverbinders gemäß einem ersten Ausführungsbeispiel mit einer beispielhaften Verteilung von Bearbeitungsmodulen auf jeweilige Modulgruppen;
- Figur 74: ein sich entlang der Transportrichtung an den ersten Ausschnitt anschließender, zweiter Ausschnitt der erfindungsgemäßen Vorrichtung des ersten Ausführungsbeispiels;
- Figur 75: ein sich entlang der Transportrichtung an den zweiten Ausschnitt anschließender, dritter Ausschnitt der erfindungsgemäßen Vorrichtung des ersten Ausführungsbeispiels;
- Figur 76: ein sich entlang der Transportrichtung an den dritten Ausschnitt anschließender, vierter Ausschnitt der erfindungsgemäßen Vorrichtung des ersten Ausführungsbeispiels;
- Figur 77: ein erster Ausschnitt einer erfindungsgemäßen Vorrichtung zur Montage des elektrischen Steckverbinders gemäß einem zweiten Ausführungsbeispiel mit einer beispielhaften Verteilung von Bearbeitungsmodulen auf jeweilige Modulgruppen;
- Figur 78: ein sich entlang der Transportrichtung an den ersten Ausschnitt anschließender, zweiter Ausschnitt der erfindungsgemäßen Vorrichtung des zweiten Ausführungsbeispiels;
- Figur 79: ein sich entlang der Transportrichtung an den zweiten Ausschnitt anschließender, dritter Ausschnitt der erfindungsgemäßen Vorrichtung des zweiten Ausführungsbeispiels; und
- Figur 80: ein sich entlang der Transportrichtung an den dritten Ausschnitt anschließender, vierter Ausschnitt der erfindungsgemäßen Vorrichtung des zweiten Ausführungsbeispiels.

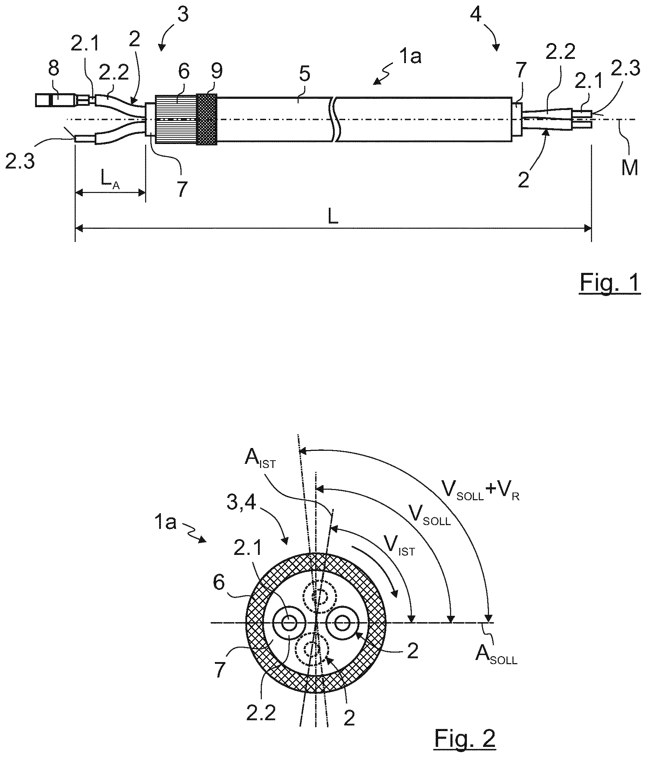

In Figur 1 ist beispielhaft ein mehradriges Kabel 1a in einer Seitenansicht vergrößert dargestellt. Figur 2 zeigt eine Vorderansicht des mehradrigen Kabels 1a.

Wie in Figur 1 dargestellt, erstrecken sich die Innenleiter 2 jeweils von einem ersten Kabelende 3 zu einem zweiten Kabelende 4. Das dargestellte mehradrige elektrische Kabel 1a ist bereits teilweise vorkonfektioniert. Das mehradrige Kabel 1a weist einen Kabelmantel 5 und ein unter dem Kabelmantel 5 verlaufendes Kabelschirmgeflecht 6 auf. Oberhalb des Kabelschirmgeflechts 6 kann optional eine Schirmfolie verlaufen (nicht dargestellt). Unterhalb des Kabelschirmgeflechts 6 verlaufen innerhalb einer Füllschicht 7 die Innenleiter 2. Die beiden Innenleiter 2 weisen jeweils einen elektrischen Leiter 2.1 bzw. eine Ader auf, die von einer Isolation 2.2 umhüllt ist. Im Rahmen der vorhergehenden Konfektionierungsschritte wurden die elektrischen Leiter 2.1 der Innenleiter 2 im Bereich der Innenleiterenden 2.3 an beiden Kabelenden 3, 4 bereits freigelegt.

An den freigelegten Leitern 2.1 werden anschließend die Innenleiterkontaktelemente 8 befestigt, insbesondere vercrimpt (für den in Figur 1 dargestellten oberen Innenleiter 2 des ersten Kabelendes 3 beispielhaft dargestellt). Ferner wurde das Kabelschirmgeflecht 6 an dem ersten Kabelende 3 nach hinten über den Kabelmantel 5, vorzugsweise über eine nicht dargestellte Metallhülse bzw. Stützhülse umgeschlagen und optional mit einem Gewebeband 9 fixiert. Das in Figur 1 dargestellte rechte Kabelende (vorliegend das zweite Kabelende 4) ist bis auf das Freilegen der Innenleiter 2 und das Abisolieren der Leiter 2.1 im Bereich der Innenleiterenden 2.3 noch unbearbeitet.

Das im Ausführungsbeispiel dargestellte zweiadrige Kabel 1a ist lediglich beispielhaft zur Verwendung mit der Erfindung zu verstehen. Grundsätzlich eignet sich die Erfindung zur Verwendung mit einer beliebigen Kabelart, beispielsweise auch zur Verwendung mit einem mehradrigen Kabel 1a mit mehr als zwei Innenleitern 2. Die Erfindung eignet sich allerdings auch zur Verwendung mit einem einadrigen Kabel 1b, wie nachfolgend noch aufgezeigt wird.

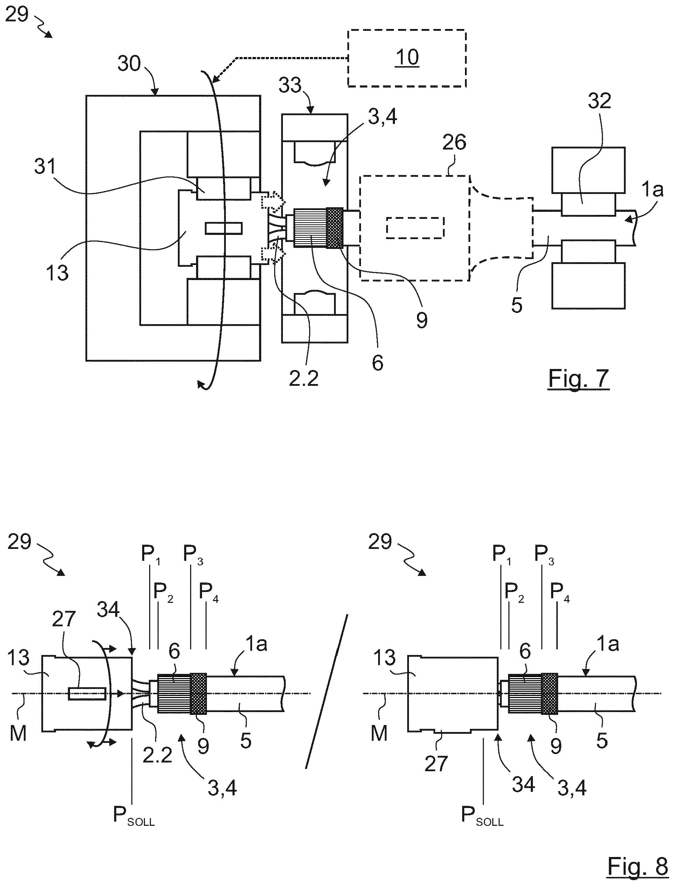

Vorliegend verlaufen die Innenleiter 2 verdrillt durch das Kabel 1a, weshalb in Abhängigkeit der Kabellänge (vorliegend als Konfektionierungslänge L bezeichnet) im unbearbeiteten Zustand eine Istverdrehung V_{IST} zwischen den aus dem jeweiligen Kabelende 3, 4 austretenden Innenleiterenden 2.3 vorliegt. Optional wird die Istverdrehung V_{IST} beispielsweise von einer Steuereinheit 10 (vgl. beispielsweise Figur 7) erfasst. Ferner kann von der Steuereinheit 10 auch die Sollverdrehung V_{SOLL} für die aus dem jeweiligen Kabelende 3, 4 austretenden Innenleiterenden 2.3 erfasst werden.

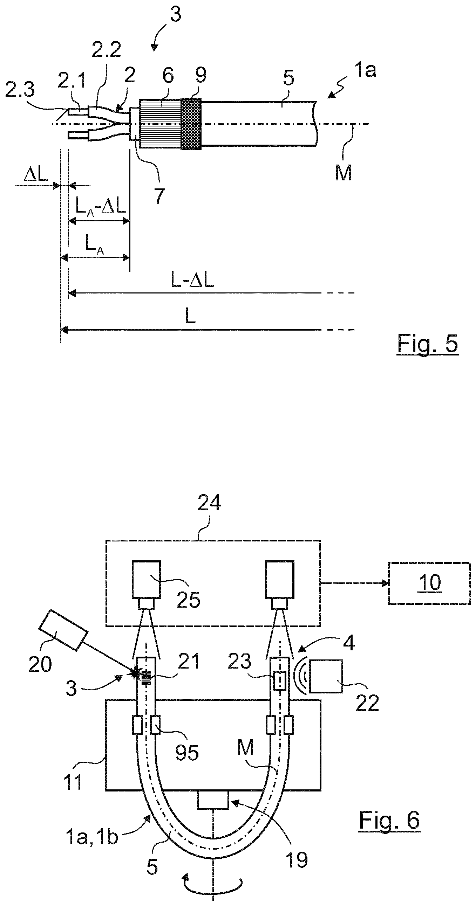

Es kann im Rahmen der erfindungsgemäßen Steckverbindermontage vorgesehen sein, dass die Steuereinheit 10 eine Ist-Ausrichtung A_{IST} und eine Soll-Ausrichtung A_{SOLL} der Innenleiter 2 des ersten Kabelendes 3 bestimmt, wobei das erste Kabelende 3 ausgerichtet wird, um die Ist-Ausrichtung A_{IST} an die Soll-Ausrichtung A_{SOLL} anzugleichen, und wobei das ausgerichtete erste Kabelende 3 auf einem Werkstückträger 11 (vgl. beispielsweise Figur 6) fixiert wird.

In Figur 2 sind beispielhaft eine Ist-Ausrichtung A_{IST} und eine Soll-Ausrichtung A_{SOLL} der Innenleiter 2 des mehradrigen Kabels 1a dargestellt, wobei der Zustand bzw. die Ist-Ausrichtung A_{IST} des ersten Kabelendes 3 vor dessen Ausrichtung gestrichelt dargestellt ist. Die Ausrichtungen A_{IST}, A_{SOLL} beziehen sich auf eine radiale Ausrichtung bezogen auf die Längs- bzw. Mittelachse M des Kabels 1. Durch eine Verdrehung des mehradrigen Kabels 1 entlang dessen Mittelachse M kann die Ist-Ausrichtung A_{IST} somit an die Soll-Ausrichtung A_{SOLL} angeglichen werden, wie in Figur 2 angedeutet.

Insbesondere kann vorgesehen sein, dass für die Konfektionierung des mehradrigen Kabels 1a die Soll-Ausrichtung A_{SOLL} der Innenleiter 2 des ersten Kabelendes 3 von der Steuereinheit 10 entsprechend einer Montage-Ausrichtung einer auf dem ersten Kabelende 3 zu montierenden Steckverbinderkomponente eines ersten Steckverbinders 12 bestimmt wird. Bei der Steckverbinderkomponente kann es sich beispielsweise um einen Kontaktteileträger 13 (vgl. beispielsweise Figur 7, Figur 8 oder Figur 57) handeln, der prozessbedingt nur in einer vorgegebenen Montage-Ausrichtung auf die Innenleiter 2 des mehradrigen Kabels 1a aufschiebbar ist, weshalb eine Ausrichtung des ersten Kabelendes 3 unter Berücksichtigung der Montage-Ausrichtung von Vorteil sein kann.

Insbesondere kann für die Konfektionierung des mehradrigen Kabels 1a die Soll-Ausrichtung A_{SOLL} der Innenleiter 2 des ersten Kabelendes 3 von der Steuereinheit 10 auch unter Berücksichtigung einer Farbcodierung der Innenleiter 2 bestimmt werden (beispielsweise schwarz und rot für die Festlegung der Pinbelegung Masse bzw. "Minus" und "Plus").

Auch eine Berücksichtigung der Ausrichtung der Innenleiter 2 des zweiten Kabelendes 4 bei der Bestimmung der Soll-Ausrichtung A_{SOLL} kann bezüglich des mehradrigen Kabels 1a von Vorteil sein, beispielsweise auch um eine nachfolgend noch beschriebene Verdrehung der Innenleiterenden 2.3 der jeweiligen Kabelenden 3, 4 zu berücksichtigen.

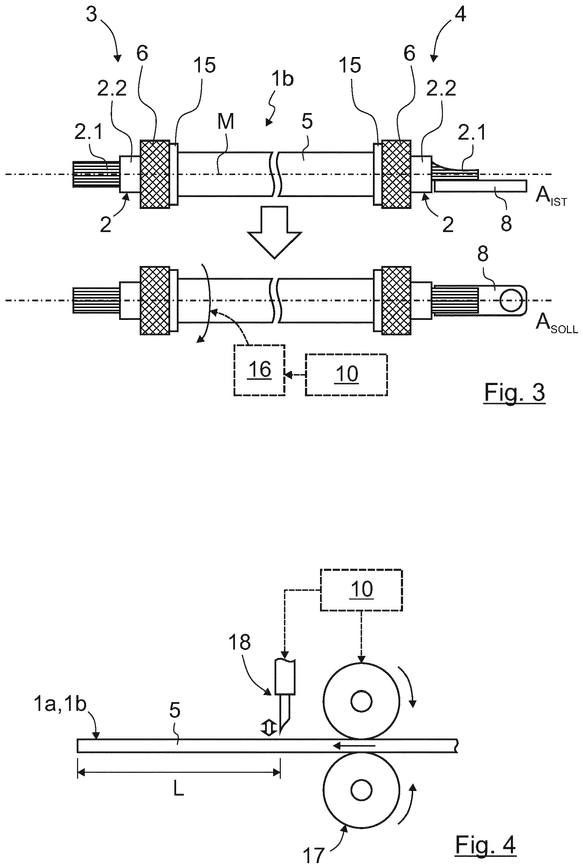

Wie bereits erwähnt, eignet sich die Erfindung auch zur Verwendung bzw. Konfektionierung eines einadrigen Kabels 1b mit nur einem Innenleiter 2, beispielsweise in koaxialer Ausführung. Ein entsprechendes einadriges Kabel 1b ist beispielhaft in Figur 3 in einer Seitenansicht dargestellt.

Im Rahmen der Kabelkonfektionierung bzw. Steckverbindermontage kann vorgesehen sein, dass an dem zweiten Kabelende 4 eine Steckverbinderkomponente eines zweiten Steckverbinders (nicht dargestellt) befestigt ist, vorzugsweise verdrehsicher befestigt ist. Beispielhaft ist in Figur 3 ein Innenleiterkontaktelement 8 dargestellt, das stoffschlüssig mit dem Innenleiter 2 des einadrigen Kabels 1b verbunden ist.

Das in Figur 3 dargestellte einadrige Kabel 1b ist rein beispielhaft zu verstehen. Das einadrige Kabel 1b weist ebenfalls einen Kabelmantel 5 und ein unter dem Kabelmantel 5 verlaufendes Kabelschirmgeflecht 6 auf. Das Kabelschirmgeflecht 6 ist auf eine Stützhülse 15 umgeschlagen. Unter dem Kabelschirmgeflecht 6 verläuft die Isolation 2.2 bzw. die Primärisolation des Innenleiters 2. Der Innenleiter 2 kann beispielsweise als Litze aus mehreren Einzeldrähten ausgebildet sein; grundsätzlich kommt es auf den genauen Aufbau des einadrigen Kabels 1b allerdings nicht an.

Im Rahmen der Konfektionierung des einadrigen Kabels 1b kann vorgesehen sein, dass beispielsweise die Steuereinheit 10 eine Ist-Ausrichtung A_{IST} und eine Soll-Ausrichtung A_{SOLL} der auf dem zweiten Kabelende 4 montierten Steckverbinderkomponente (vorliegend des Innenleiterkontaktelements 8) des zweiten Steckverbinders bestimmt, wobei das erste Kabelende 3 anschließend ausgerichtet wird, um die Ist-Ausrichtung A_{IST} an die Soll-Ausrichtung A_{SOLL} anzugleichen, und wobei das ausgerichtete erste Kabelende 3 auf dem Werkstückträger 11 fixiert wird.

In Figur 3 ist der Verfahrensschritt des Ausrichtens des ersten Kabelendes 3 beispielhaft angedeutet, wobei der obere Teil der Figur 3 die Steckverbinderkomponente bzw. das Innenleiterkontaktelement 8 in der Ist-Ausrichtung A_{IST} und der untere Teil der Figur 3 die Steckverbinderkomponente bzw. das Innenleiterkontaktelement 8 in der Soll-Ausrichtung A_{SOLL} zeigt. Beispielhaft ist eine Verdrehung um etwa 90° vorgesehen.

Grundsätzlich kann für die Konfektionierung des einadrigen Kabels 1b vorgesehen sein, dass die Soll-Ausrichtung A_{SOLL} der Steckverbinderkomponente bzw. des Innenleiterkontaktelements 8 des zweiten Steckverbinders von der Steuereinheit 10 unter Berücksichtigung einer Montage-Ausrichtung (beispielsweise einer prozessbedingten Montage-Ausrichtung) einer auf dem ersten Kabelende 3 zu montierenden Steckverbinderkomponente eines ersten Steckverbinders und einer vorgesehenen Sollverdrehung V_{SOLL} zwischen dem ersten Steckverbinder 12 und dem zweiten Steckverbinder bestimmt wird.

Hierbei kann beispielsweise berücksichtigt werden, dass im Rahmen eines späteren Ultraschallschweißverfahrens oder eines Widerstandsschweißverfahrens die Steckverbinderkomponente bzw. das Innenleiterkontaktelement 8 des ersten Steckverbinders 12 nur unter einem definierten Winkel an dem Innenleiterende 2.3 des ersten Kabelendes 3 befestigbar ist. Das erste Kabelende 3 kann somit vorteilhaft bereits ausgerichtet werden, um eine vorgesehene Sollverdrehung V_{SOLL} zwischen den Steckverbindern bzw. deren Steckverbinderkomponenten sicherzustellen.

Für das Verdrehen bzw. Ausrichten des ersten Kabelendes 3 kann eine Aktuatoreinrichtung 16 vorgesehen sein, die mit der Steuereinheit 10 kommunikationsverbunden ist. Die Aktuatoreinrichtung 16 ist in Figur 3 als Black-Box zusammen mit der Steuereinheit 10 angedeutet. Eine entsprechende Aktuatoreinrichtung 16 kann auch zur Ausrichtung des ersten Kabelendes 3 des mehradrigen Kabels 1a vorgesehen sein.

Im Rahmen der erfindungsgemäßen Steckverbindermontage kann vorgesehen sein, dass das elektrische Kabel 1a, 1b von einer Kabeltrommel abgerollt und auf die definierte Konfektionierungslänge L zugeschnitten wird. Hierzu kann eine in Figur 4 angedeutete Fördereinrichtung 17 vorgesehen sein. Ferner kann ein ebenfalls in Figur 4 angedeutetes Ablängmodul 18 vorgesehen und eingerichtet sein, um das elektrische Kabel 1a, 1b entsprechend auf die Konfektionierungslänge L zuzuschneiden.

Im Rahmen der Konfektionierung des mehradrigen Kabels 1a kann vorgesehen sein, die Istverdrehung V_{IST} der aus dem jeweiligen Kabelende 3, 4 austretenden Innenleiterenden 2.3 an eine vorgegebene Sollverdrehung V_{SOLL} anzugleichen, indem die Innenleiter 2 an zumindest einem der Kabelenden 3, 4 verdreht werden. Die Verdrehung kann anschließend fixiert werden, beispielsweise indem ein auf die Innenleiterenden 2.3 aufgebrachter Kontaktteileträger 13 verdrehsicher an dem Kabelmantel 5 festgelegt wird.

Durch das Angleichen der Istverdrehung V_{IST} an die Sollverdrehung V_{SOLL} verkürzt sich allerdings die Gesamtlänge bzw. die Konfektionierungslänge L des Kabels 1a, wie beispielsweise bei einem Vergleich der Figuren 5 und 1 ersichtlich wird.

Beispielhaft ist in Figur 5 eine durch die Verdrehung des ersten Kabelendes 3 verursachte Längenverkürzung ΔL dargestellt, die sich einerseits auf die Konfektionierungslänge L des Kabels 1a auswirkt und diese entsprechend verkürzt und die sich andererseits auch auf die Längen einzelner Abschnitte des Kabels 1a, beispielsweise auf vorgegebene Abisolierlängen L_{A}, entlang der die Innenleiter 2 und/oder deren Adern bzw. elektrischen Leiter 2.1 ausgehend von deren Innenleiterenden 2.3 freigelegt wurden, auswirkt.

Um die Längenverkürzung ΔL bereits bei dem Ablängen des elektrischen Kabels 1a zu berücksichtigen kann vorgesehen sein, dass beispielsweise die Steuereinheit 10 die durch die spätere Angleichung der Istverdrehung V_{IST} an die Sollverdrehung V_{SOLL} bedingte axiale Längenverkürzung ΔL bereits vorab berechnet, bevor das Kabel 1a tatsächlich abgelängt wird. Somit kann die Längenverkürzung ΔL berücksichtigt und die Konfektionierungslänge L vergrößert werden (beispielsweise um die Längenverkürzung ΔL), um die Längenverkürzung ΔL zumindest teilweise zu kompensieren.

Beispielhaft ist in Figur 4 die Ansteuerung der Fördereinrichtung 17 und der Schneideeinrichtung 18 durch die Steuereinheit 10 angedeutet.

In Figur 6 ist beispielhaft ein Werkstückträger 11 zum Fixieren des Kabels 1a, 1b angedeutet. Es kann vorgesehen sein, dass auch das zweite Kabelende 4 auf dem Werkstückträger 11 fixiert wird. In Abhängigkeit der Konfektionierungslänge L bzw. der Kabellänge kann das Kabel 1a, 1b vorzugsweise derart fixiert werden, dass das Kabel 1a, 1b einen U-förmigen Verlauf zwischen den beiden Kabelenden 3, 4 ausbildet, wie in Figur 6 dargestellt. Hierdurch kann beispielsweise in vorteilhafter Weise eine Bearbeitung beider Kabelenden 3, 4 in sequenzieller Abfolge vorgesehen sein.

Es kann vorgesehen sein, dass das Kabel 1a, 1b nach dem Konfektionieren des ersten Kabelendes 3 umgelegt wird, um durch Vertauschen der beiden Kabelenden 3, 4 auf dem Werkstückträger 11 das zweite Kabelende 4 in einem zweiten Steckverbindermontagedurchlauf zu bearbeiten.

Entsprechend kann dann insbesondere für die Konfektionierung des mehradrigen Kabels 1a die Steuereinheit 10 eine Ist-Ausrichtung A_{IST} und eine Soll-Ausrichtung A_{SOLL} der Innenleiter 2 des zweiten Kabelendes 4 bestimmen, wobei das zweite Kabelende 4 ausgerichtet wird, um die Ist-Ausrichtung A_{IST} an die Soll-Ausrichtung A_{SOLL} anzugleichen.

Zum Umlegen des Kabels 1a, 1b kann ein Umlegemodul 19 vorgesehen sein. Beispielsweise kann das Umlegemodul 19 eine Rotation des Werkstückträgers 11 um 180° bewirken. Auch ein sonstiges Umlegen des Kabels 1a, 1b und sogar ein manuelles Umlegen des Kabels 1a, 1b kann vorgesehen sein.

Im Rahmen der Steckverbindermontage kann beispielsweise zur Qualitätssicherung vorgesehen sein, dass das erste Kabelende 3 und/oder das zweite Kabelende 4 für eine Dokumentation der Steckverbindermontage markiert wird. In Figur 6 ist beispielhaft ein Laser 20 dargestellt, um eine optische Markierung 21 (beispielsweise einen Strichcode, einen QR-Code oder eine sonstige Markierung) auf dem ersten Kabelende 3 aufzubringen.

Ein weiteres Beispiel für eine Markierung kann eine elektronische Markierung sein, die auf das Kabel 1a, 1b aufgebracht und/oder konfiguriert wird, was ebenfalls in Figur 6 angedeutet ist. Hierzu kann beispielsweise eine elektronische Baugruppe 22 vorgesehen sein, die einen Transponder 23 eines RFID-Systems zu konfigurieren vermag.

Zur Erfassung der Ist-Ausrichtung A_{IST} des auf dem zweiten Kabelende 4 montierten zweiten Steckverbinders und/oder der Ist-Ausrichtung A_{IST} der Innenleiter 2 des ersten Kabelendes 3 kann diverse Sensorik 24 vorgesehen und mit der Steuereinheit 10 kommunikationsverbunden sein. Beispielhaft sind in Figur 6 zwei Kameras 25 dargestellt. Grundsätzlich kann allerdings beliebige Sensorik 24 vorgesehen sein.

Wie vorstehend bereits angedeutet, kann im Rahmen der Steckverbindermontage auf dem mehradrigen Kabel 1a auch vorgesehen sein, dass die Steuereinheit 10 die Istverdrehung V_{IST} und die Sollverdrehung V_{SOLL} von aus dem jeweiligen Kabelende 3, 4 austretenden Innenleiterenden 2.3 erfasst. Die Istverdrehung V_{IST} kann an die Sollverdrehung V_{SOLL} angeglichen werden, indem die Innenleiter 2 an zumindest einem der Kabelenden 3, 4 verdreht werden. Die Verdrehung kann anschließend fixiert werden, indem ein auf die Innenleiterenden 2.3 aufgebrachter Kontaktteileträger 13 verdrehsicher an dem Kabel 1a bzw. an dessen Kabelmantel 5 festgelegt wird.

Der Kontaktteileträger 13 kann beispielsweise verdrehsicher festgelegt werden, indem er unmittelbar auf dem entsprechenden Kabelende 3, 4 verpresst wird, beispielsweise mittelbar oder unmittelbar auf dem Kabelmantel 5, vorzugsweise auf einer auf dem Kabelmantel 5 befestigten Stützhülse bzw. auf einem über dem Kabelmantel 5 nach hinten umgeschlagenen Kabelschirmgeflecht 6.

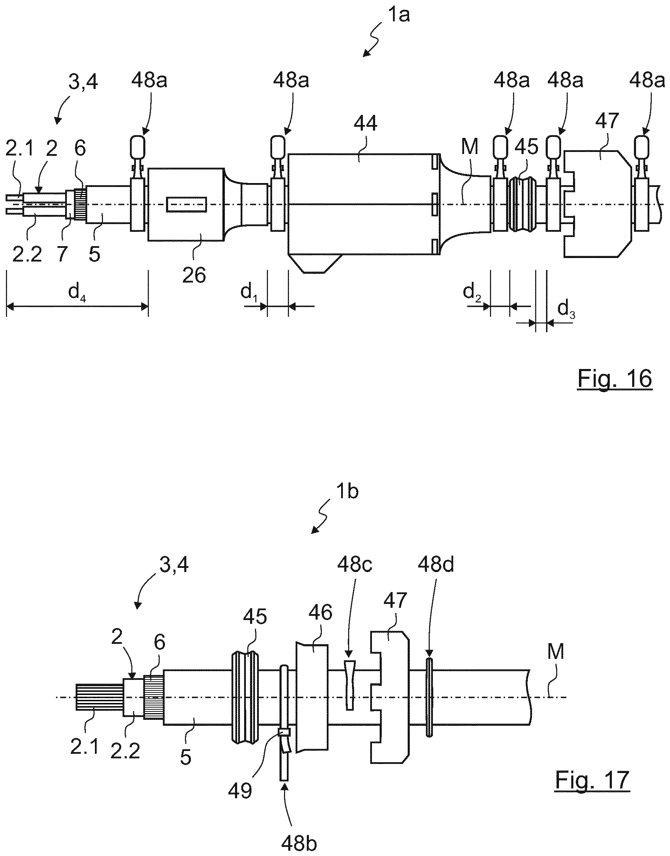

Besonders bevorzugt ist vorgesehen, dass der Kontaktteileträger 13 mittelbar an dem Kabelmantel 5 des zugeordneten Kabelendes 3, 4 festgelegt wird, indem eine Schirmhülse 26 (vgl. beispielsweise Figur 7 oder Figur 16) verdrehsicher auf dem Kontaktteileträger 13 montiert und auf dem entsprechenden Kabelende 3, 4, beispielsweise auf der nicht dargestellten Stützhülse oder dem umgeschlagenen Kabelschirmgeflecht 6 verpresst, vorzugsweise vercrimpt wird.

Hinsichtlich der Angleichung der Istverdrehung V_{IST} an die Sollverdrehung V_{SOLL} kann vorgesehen sein, dass das Kabelende 3, 4 gedreht wird, wobei der Kontaktteileträger 13 verdrehsicher gehalten wird. Alternativ oder zusätzlich kann auch vorgesehen sein, dass der Kontaktteileträger 13 zusammen mit den in dem Kontaktteileträger 13 aufgenommenen Innenleiterenden 2.3 verdreht wird und/oder dass die Schirmhülse 26 verdrehsicher auf dem Kontaktteileträger 13 montiert und gemeinsam mit dem Kontaktteileträger 13 und den in dem Kontaktteileträger 13 aufgenommenen Innenleiterenden 2.3 verdreht wird.

Vorzugsweise weisen Schirmhülse 26 und Kontaktteileträger 13 eine mechanische Kodierung auf, um nur in einer oder in zwei definierten Orientierungen miteinander verbindbar zu sein. Beispielsweise können eine Rastnase und eine Rastnut, wie in der nachfolgenden Figur 7 angedeutet, vorgesehen sein.

Um die mechanische Belastung des mehradrigen Kabels 1a zu verringern kann vorgesehen sein, dass die Steuereinheit 10 eine Verdrehung beider Kabelenden 3, 4 bestimmt, insbesondere wenn die Istverdrehung V_{IST} der Innenleiterenden 2.3 an den beiden Kabelenden 3, 4 um mehr als 90° von der Sollverdrehung V_{SOLL} abweicht. Die Steuereinheit 10 kann außerdem eine elastizitätsbedingte Rückverdrehung V_{R} der Innenleiterenden 2.3 bei der Angleichung der Istverdrehung V_{IST} an die Sollverdrehung V_{SOLL} berücksichtigen. Die Istverdrehung V_{IST} kann somit an die Sollverdrehung V_{SOLL} angeglichen werden, indem sie zunächst bis zu einer Verdrehung aus Sollverdrehung V_{SOLL} plus einer Rückverdrehung V_{R} überkompensiert wird.

Zur Erfassung der Istverdrehung V_{IST} kann es von Vorteil sein, wenn die Steuereinheit 10 einen Drall der Innenleiter 2 berücksichtigt, der zuvor beispielsweise messtechnisch oder experimentell ermittelt wurde. Unter Berücksichtigung der Konfektionierungslänge L bzw. der Kabellänge des mehradrigen Kabels 1a kann somit nach dem Erfassen der Orientierung der Innenleiterenden 2.3 an einem der beiden Kabelenden 3, 4 die Orientierung der Innenleiter 2 an dem gegenüberliegenden Kabelende 4, 3 berechnet werden.

Figur 7 zeigt beispielhaft einen Ausschnitt eines Montagemoduls 29 zur Montage des Kontaktteileträgers 13 auf den Innenleiterkontaktelementen 8 des mehradrigen Kabels 1a mit einigen, nur schematisch zu verstehenden Einzelheiten.

Das Montagemodul 29 weist die besagte Steuereinheit 10 auf, die unter anderem auch eingerichtet ist, um die Istverdrehung V_{IST} und die Sollverdrehung V_{SOLL} zwischen den aus den Kabelenden 3, 4 austretenden Innenleiterenden 2.3 zu erfassen.

Das Montagemodul 29 weist ferner ein Aktuatormodul 30 auf, die mit der Steuereinheit 10 kommunikationsverbunden und eingerichtet ist, um die Innenleiter 2 an zumindest einem der Kabelenden 3, 4 zu verdrehen, um nach Vorgabe der Steuereinheit 10 die Istverdrehung V_{IST} an die Sollverdrehung V_{SOLL} anzugleichen. Beispielhaft ist ein drehbares Aktuatormodul 30 mit an den Kontaktteileträger 13 zustellbaren Aktuator-Klemmbacken 31 dargestellt. Ferner sind Kabelklemmbacken 32 zur Fixierung des mehradrigen Kabels 1a an dessen Kabelmantel 5 dargestellt, um das mehradrige Kabel 1a während des Verdrehens des Kontaktteileträgers 13 verdrehsicher zu fixieren. Bei dem Aktuatormodul 30 zum Verdrehen des Kontaktteileträgers 13 kann es sich auch um ein Aktuatormodul 30 handeln, das grundsätzlich auch zum linearen Aufschieben des Kontaktteileträgers 13 auf die Innenleiterkontaktelemente 8 und/oder zum Ausrichten des ersten Kabelendes 3 zur Angleichung der Ist-Ausrichtung A_{IST} an die Soll-Ausrichtung A_{SOLL} verwendet wird.

Das Montagemodul 29 kann ferner ein Presswerkzeug 33 aufweisen das ausgebildet ist, um den Kontaktteileträger 13 an dem Kabelmantel 5 des Kabels 1a verdrehsicher festzulegen, um die Verdrehung zu fixieren. Das in Figur 7 dargestellte Presswerkzeug 33 ist insbesondere ausgebildet, um die Schirmhülse 26 nach dem Montieren auf dem Kontaktteileträger 13 im Bereich des umgelegten Kabelschirmgeflechts 6 zu vercrimpen. Die Schirmhülse 26 ist im Rahmen einer Vormontage bereits auf den Kabelmantel 5 aufgeschoben (gestrichelt dargestellt) und kann nach dem Verdrehen des Kontaktteileträgers 13 von hinten über den Kontaktteileträger 13 in der entsprechenden Orientierung aufgeschoben werden.

Um die bereits genannte Längenverkürzung ΔL bei der Angleichung der Istverdrehung V_{IST} an die Sollverdrehung V_{SOLL} der Innenleiterenden 2.3 bereits bei dem Freilegen der Innenleiter 2 zu berücksichtigen kann vorgesehen sein, dass die Steuereinheit 10 die durch die spätere Angleichung der Istverdrehung V_{IST} an die Sollverdrehung V_{SOLL} bedingte axiale Längenverkürzung ΔL bereits vorab berechnet, bevor die Innenleiter 2 an dem entsprechenden Kabelende 3, 4 tatsächlich freigelegt werden. Somit kann die Längenverkürzung ΔL berücksichtigt werden und die Abisolierlänge L_{A}, entlang der die Innenleiter 2 ausgehend von deren Innenleiterenden 2.3 freigelegt werden, vergrößert werden (beispielsweise um die Längenverkürzung ΔL), um die Längenverkürzung ΔL zumindest teilweise zu kompensieren.

Die vorgegebene Abisolierlänge L_{A} kann dabei anteilig für das jeweilige Kabelende 3, 4 um die berechnete Längenverkürzung ΔL, gegebenenfalls im Hinblick auf definierte Toleranzen, vergrößert werden. Grundsätzlich kann es erstrebenswert sein, die Längenverkürzung ΔL vollständig zu kompensieren. Auch eine teilweise Kompensierung kann allerdings ausreichend sein, wenn sich diese noch innerhalb definierter Toleranzbereiche befindet.

Es kann vorgesehen sein, dass nur die vorgegebene Abisolierlänge L_{A} der freizulegenden Innenleiter 2 an dem ersten Kabelende 3 vergrößert wird, wenn ausschließlich eine Verdrehung des ersten Kabelendes 3 vorgesehen ist. Entsprechend kann auch vorgesehen sein, dass nur die vorgegebene Abisolierlänge L_{A} der freigelegten Innenleiter 2 an dem zweiten Kabelende 4 vergrößert wird, wenn ausschließlich ein Verdrehen des zweiten Kabelendes 4 vorgesehen ist. Sofern beide Kabelenden 3, 4 verdreht werden kann auch vorgesehen sein, die vorgegebenen Abisolierlängen L_{A} an beiden Kabelenden 3, 4 zu vergrößern. Insbesondere wenn es lediglich auf die Gesamtlänge bzw. Konfektionierungslänge L des Kabels 1 ankommt, kann auch eine Verteilung der Kompensation der Längenverkürzung ΔL unabhängig von der Verdrehung auf eines der Kabelenden 3, 4 oder auf beide Kabelenden 3, 4 vorgesehen sein.

Hinsichtlich der Längenverkürzung ΔL kann es besonders problematisch sein, dass diese die axiale Position von die Innenleiter 2 in sich aufnehmenden Steckverbinderkomponenten bzw. Gehäusekomponenten (also beispielsweise des Kontaktteileträgers 13) des späteren Steckverbinders 12 bezüglich der Mittelachse M des Kabels 1a beeinflussen kann.

In vorteilhafter Weise kann die Längenverkürzung ΔL im Rahmen der Steckverbindermontage somit berücksichtigt werden, um eine axiale Sollposition P_{SOLL} eines kabelseitigen Endes 34 einer die Innenleiter 2 in sich aufnehmenden Steckverbinderkomponente, beispielsweise des Kontaktteileträgers 13, entlang der Mittelachse M des Kabels 1a vorzugeben bzw. zu korrigieren. Das Problem der Beeinflussung der axialen Sollposition P_{SOLL} ist beispielhaft in Figur 8 für den Kontaktteileträger 13 dargestellt.

Es ist erkennbar, dass die Position des hinteren bzw. kabelseitigen Endes 34 des Kontaktteileträgers 13 aufgrund der Verdrehung bzw. Angleichung der Istverdrehung V_{IST} an die Sollverdrehung V_{SOLL} näher an das gegenüberliegende Kabelende 3, 4 heranbewegt wird. Die relative Position des kabelseitigen Endes 34 des Kontaktteileträgers 13 zu definierten axialen Positionen P₁₋₄ entlang der Mittelachse M bzw. entlang Strukturen des Kabels 1 kann dadurch von einer Vorgabe abweichen. Die in Figur 8 dargestellten vier Positionen P₁₋₄ sind lediglich beispielhaft zu verstehen. Häufig ist beispielsweise die axiale Sollposition P_{SOLL} des Kontaktteileträgers 13 relativ zu einer auf den Kabelmantel 5 des Kabels 1a aufgebrachten Stützhülse 15 relevant für die Steckverbindermontage und muss innerhalb vorgegebener Toleranzen eingehalten werden. Durch die Berücksichtigung der Längenverkürzung ΔL kann dies gewährleistet sein.

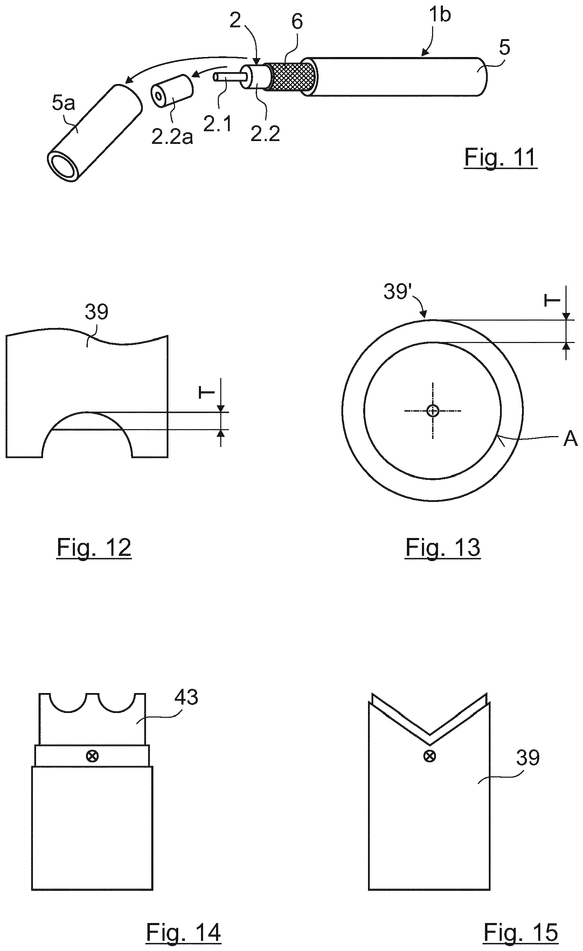

Die Innenleiter 2 bzw. deren Leiter 2.1 können im Rahmen der Kabelkonfektionierung freigelegt werden, indem ein die Innenleiter 2 bzw. die Leiter 2.1 einhüllendes Teilstück 5a, 2.2a wenigstens einer Kabelkomponente des Kabels 1a, 1b entfernt wird (vgl. Figur 11). Beispielsweise kann ein Teilstück 5a des Kabelmantels 5 des Kabels 1a, 1b abisoliert werden und/oder ein Teilstück des Außenleiters bzw. des Kabelschirmgeflechts 6 des Kabels 1a, 1b abisoliert oder nach hinten über den Kabelmantel 5 umgelegt werden und/oder ein Teilstück der die Innenleiter 2 gemeinsam einhüllenden, dielektrischen Füllschicht 7 abisoliert werden und/oder ein Teilstück 2.2a der Isolation 2.2 der Innenleiter 2 abisoliert werden.

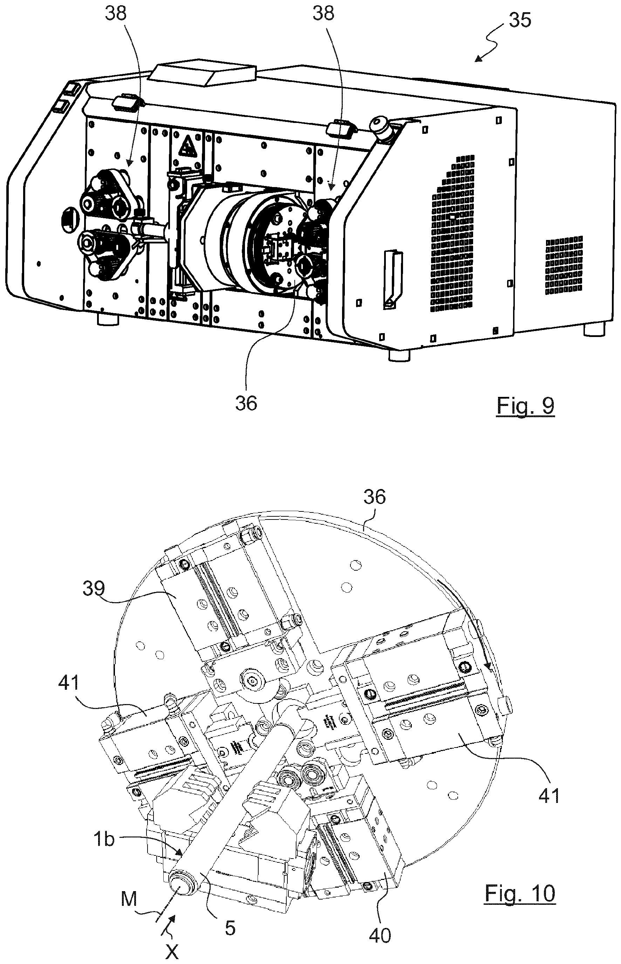

Zum Freilegen des Innenleiters 2 bzw. des Leiters 2.1 oder der Innenleiter 2 bzw. der Leiter 2.1 kann ein Abisoliermodul 35 vorgesehen sein, das beispielhaft in Figur 9 dargestellt ist.

Grundsätzlich kann das Abisoliermodul 35 beliebig aufgebaut sein. Es können auch mehrere Abisoliermodule 35 mit identischem oder verschiedenem Aufbau vorgesehen sein. Beispielsweise kann ein jeweiliges Abisoliermodul 35 für jedes zu entfernende Teilstück 5a, 2.2a des Kabels 1a, 1b vorgesehen sein. Der nachfolgend beschriebene Aufbau ist lediglich beispielhaft zu verstehen.

Das dargestellte Abisoliermodul 35 weist einen um eine Mittelachse M rotierbaren Rotationskopf 36 auf, der zur Verdeutlichung in Figur 10 ausschnittsweise vergrößert dargestellt ist. Der Rotationskopf 36 ist als Scheibe ausgebildet, wobei zur Rotation des Rotationskopfes 36 ein Riemenantrieb vorgesehen sein kann.

Um das Kabel 1a, 1b entlang der Mittelachse M in das Abisoliermodul 35 einzuführen, kann das Abisoliermodul 35 Fördermodule 38 zum linearen Fördern des Kabels 1a, 1b entlang einer Zustellrichtung X aufweisen. Es kann allerdings auch vorgesehen sein, die nachfolgend noch beschriebene Zustelleinrichtung zum Zustellen des Kabels 1a, 1b in das Abisoliermodul 35 zu verwenden. Der Rotationskopf 36 kann bevorzugt zwischen zwei der Fördermodule 38 angeordnet sein, wie in Figur 9 dargestellt. Das Kabel 1a, 1b kann vorzugsweise zunächst abgelängt und anschließend abisoliert werden.

Insbesondere wenn nachfolgend Komponenten des Abisoliermoduls 35 beschrieben sind, die auf dem Rotationskopf 36 angeordnet sind, so können diese auch im Rahmen eines Abisoliermoduls 35 verwendbar sein, das keinen Rotationskopf 36 sondern beispielsweise nur eine starre Befestigung für die jeweiligen Komponenten aufweist.

Zum Freilegen der Innenleiter 2 entlang der vorgegebenen oder verlängerten Abisolierlänge L_{A} kann wenigstens ein Messer 39 verwendet werden, um einen radialen Einschnitt in die Kabelkomponente des Kabels 1a, 1b zu erzeugen. Ferner kann ein dem Messer 39 gegenüberliegend positionierter Gegenhalter 40 verwendet werden, der das Kabel 1a, 1b während des Einschneidens fixiert.

In dem beispielhaften Abisoliermodul 35 sind auf dem Rotationskopf 36 ein Messer 39 und ein Gegenhalter 40 für das Kabel 1a, 1b einander gegenüberliegend und auf die Mittelachse M ausgerichtet angeordnet (vgl. insbesondere Figur 10). Figur 9 zeigt den Rotationskopf 36 nur in vereinfachter Darstellung, wonach lediglich das Messer 39 auf dem Rotationskopf 36 montiert dargestellt ist. Das Messer 39 ist in Richtung auf die Mittelachse M an das Kabel 1a, 1b zustellbar, um an einer definierten Axialposition einen radialen Einschnitt in die Kabelkomponente des Kabels 1a, 1b, beispielsweise in den Kabelmantel 5, zu erzeugen.

Im Ausführungsbeispiel gemäß der Figuren 9 und 10 ist das Messer 39 als Formmesser ausgebildet. Das Messer 39 kann allerdings grundsätzlich eine beliebige Schneide aufweisen. Das Messer 39 kann beispielsweise auch einen linearen Aufbau bzw. eine gerade Schneide aufweisen, wie in Figur 12 dargestellt. Ferner kann ein Rundmesser 39' vorgesehen sein (vgl. Figur 13). Das Rundmesser 39' kann insbesondere antriebslos und frei drehbar gelagert sein, um sich während einer Drehung um das Kabel 1a, 1b auf dem Kabel 1a, 1b abrollen zu können.

Der Gegenhalter 40 bildet eine an den Außendurchmesser der Kabelkomponente angepasste Anlage aus. Der Gegenhalter 40 kann grundsätzlich eine beliebige Anlage ausbilden, insbesondere eine sich verjüngende Anlage, beispielsweise eine V-förmige Anlage oder eine durch Rollen gebildete Anlage. Der Gegenhalter 40 ist im Ausführungsbeispiel ebenfalls in Richtung auf die Mittelachse M an das Kabel 1a, 1b zustellbar. Grundsätzlich kann der Gegenhalter 40 allerdings auch unbeweglich (auf dem Rotationskopf 36) angeordnet sein.

Um eine Schnitttiefenbegrenzung auszubilden, kann der Gegenhalter 40 derart ausgebildet sein, dass dieser einen Anschlag für das Messer 39 ausbildet. Die maximale Tiefe T (vgl. Figuren 12 und 13) des radialen Einschnitts in die Kabelkomponente kann dadurch begrenzt und eine Verletzung von unter der Kabelkomponente befindlichen weiteren Komponenten des Kabels 1a, 1b verhindert werden. Alternativ oder zusätzlich kann auch das Messer 39 selbst einen Anschlag für das Kabel 1a, 1b zur Schnitttiefenbegrenzung aufweisen bzw. ausbilden. Beispielhaft ist ein lineares Messer 39 in Figur 12 dargestellt, wobei die Schneide derart in einer Messeraufnahme montiert ist, dass die Messeraufnahme bzw. das Messer 39 einen Anschlag ausbildet, der eine maximale Tiefe T zum Einschneiden formschlüssig vorgibt. Auch das Rundmesser 39' kann einen Anschlag aufweisen, wie beispielsweise in Figur 13 dargestellt. Das Rundmesser 39' gemäß Figur 13 weist hierfür einen zylindrischen Anschlag A auf, dessen Radius kleiner ist als der Radius der Schneide, um die maximale Tiefe T zum Einschneiden vorzugeben.

Grundsätzlich kann vorgesehen sein, dass das Messer 39 die Kabelkomponente bzw. das Teilstück 5a, 2.2a nicht vollständig abtrennt und beispielsweise einzelne Stege oder einen radialen Innenring zurücklässt. Das Teilstück 5a, 2.2a kann somit durch den radialen Einschnitt gegebenenfalls zunächst nicht vollständig abgetrennt werden.

Vorzugsweise rotiert der Rotationskopf 36 (vgl. Figur 10), während das Messer 39 den Einschnitt erzeugt, um einen radial vollständig umlaufenden Einschnitt zu erzeugen.

Es kann weiter vorgesehen sein, dass das Abisoliermodul 35 zum Freilegen der Innenleiter 2 wenigstens ein Abziehwerkzeug 41 aufweist, das in den von dem Messer 39 erzeugten Einschnitt eingreift, um das abisolierte Teilstück 5a, 2.2a zumindest teilweise von dem Kabel 1a, 1b abzuziehen.

Im Ausführungsbeispiel sind zwei Abziehwerkzeuge 41 auf dem Rotationskopf 36 angeordnet, wobei die Abziehwerkzeuge 41 derart zu dem Messer 39 positioniert sind, dass diese zum Abziehen des Teilstücks 5a, 2.2a der Kabelkomponente in den von dem Messer 39 erzeugten Einschnitt eingreifen, wenn die Abziehwerkzeuge 41 an das Kabel 1a, 1b zugestellt sind. Die Abziehwerkzeuge 41 sind einander gegenüberliegend angeordnet und jeweils auf die Mittelachse M ausgerichtet. Wie dargestellt sind die Abziehwerkzeuge 41 bevorzugt um 90° versetzt zu dem Messer 39 und dem Gegenhalter 40 angeordnet. Grundsätzlich können die beiden Abziehwerkzeuge 41 allerdings in einem beliebigen Winkel relativ zu der Ausrichtung des Messers 39 und des Gegenhalters 40 angeordnet sein.

Ähnlich dem Messer 39 können auch die Abziehwerkzeuge 41 als Formwerkzeuge ausgebildet sein, insbesondere um an den Innendurchmesser der Kabelkomponente angepasst zu sein. Die Abziehwerkzeuge 41 können jedoch auch linear ausgebildet sein.

Die Abziehwerkzeuge 41, das Messer 39 und der Gegenhalter 40 sind nebeneinander auf dem Rotationskopf 36 angeordnet und jeweils gleich weit von einer Stirnseite des Rotationskopfes 36 beabstandet, um bei einer radialen Zustellung jeweils auf denselben axialen Punkt auf der Mittelachse M zuzulaufen.

Zur Zustellung des Messers 39, des Gegenhalters 40 und/oder des wenigstens einen Abziehwerkzeugs 41 an das Kabel 1a, 1b kann eine jeweilige Kulisseneinrichtung vorgesehen sein (nicht näher dargestellt). Es kann allerdings auch ein Schienensystem oder ein sonstiges System vorgesehen sein (ebenfalls nicht näher dargestellt).

Vorzugsweise steht der Rotationskopf 36 still während das Teilstück durch das wenigstens eine Abziehwerkzeug 41 abgezogen wird. Zum Abziehen des Teilstücks kann das Kabel 1a, 1b nach der Zustellung der Abziehwerkzeuge 41 entgegen der Zustellrichtung X entlang der Mittelachse M zumindest teilweise wieder aus dem Abisoliermodul 35 herausgezogen werden, um das Teilstück 5a, 2.2a zumindest teilweise (Teilabzug) oder vollständig (Vollabzug) von dem Kabel 1a, 1b abzuziehen.

Wie bereits erwähnt kann das Abisoliermodul 35 allerdings auch ohne Rotationskopf 36 ausgebildet sein. Beispielsweise kann ein Rotationskopf 36 nicht immer geeignet sein, um eine bestimmte Kabelkomponente abzuisolieren. Beispielsweise kann zum Abisolieren der Füllschicht 7 ein speziell an die Geometrie des mehradrigen Kabels 1a angepasstes Formmesser 43 vorgesehen sein, wie in Figur 14 angedeutet.

Das Formmesser 43 ist dabei annähernd m-förmig bzw. w-förmig ausgebildet, um die Innenleiter 2 innerhalb der Füllschicht 7 nicht zu beschädigen. Vorzugsweise sind zum Abisolieren der Füllschicht 7 zwei einander gegenüberliegende Formmesser 43 in der Art wie in Figur 14 gezeigt vorgesehen, die radial in Richtung auf die Mittelachse M des mehradrigen Kabels 1a zustellbar sind, um in die Füllschicht 7 einzuschneiden.

Das Formmesser 43 kann eine jeweilige halbkreisförmige Ausnehmung für jeden Innenleiter 2 des Kabels 1a aufweisen; im Ausführungsbeispiel sind zwei halbkreisförmige Ausnehmungen vorgesehen, da das beispielhafte Kabel 1a zwei Innenleiter 2 aufweist, wodurch die Schneidebereiche annähernd einer m- bzw. w-Form folgen.

Es kann allerdings zum Abisolieren der Füllschicht 7 auch ein beliebiges anderes Messer 39, 43 vorgesehen sein, beispielsweise ein in Figur 15 dargestelltes Messer 39, das dem Negativ der in der Füllschicht 7 angeordneten Innenleiter 2 nicht folgt. Beispielhaft weist das Messer 39 eine V-förmige Schneide auf. Ein zweites, identisch oder ähnlich ausgebildetes Messer 39 kann das Kabel 1a von der gegenüberliegenden Seite einschneiden. Die Füllschicht 7 kann anschließend an den Einschnittstellen bzw. an den verbleibenden Stegen abgerissen werden, um das abzuisolierende Teilstück 5a, 2.2a der Füllschicht 7 vollständig abzutrennen. Bei dieser Variante kann es ein besonderer Vorteil sein, dass die Orientierung des Messers 39 nicht an die Ausrichtung der Innenleiter 2 in dem Kabel 1a angepasst sein muss.

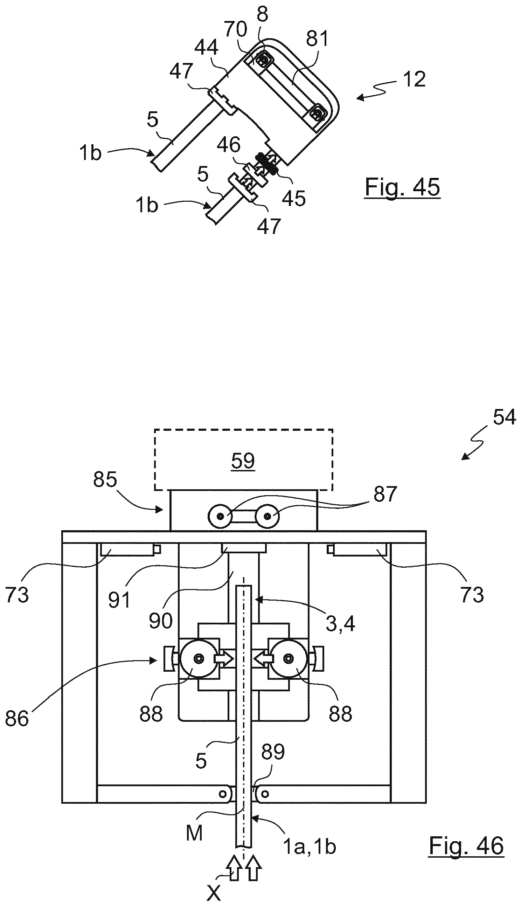

Im Rahmen der Steckverbindermontage kann vorgesehen sein, den Kabelmantel 5 des Kabels 1a, 1b ausgehend von einem der Kabelenden 3, 4 mit zwei oder mehreren Steckverbinderkomponenten 26, 44, 45, 46, 47 zu bestücken. Bei den Steckverbinderkomponenten kann es sich beispielsweise um die bereits beschriebene Schirmhülse 26 (vgl. beispielsweise Figur 16), um eine Gehäusebaugruppe bzw. um ein Steckverbindergehäuse 44 (vgl. beispielsweise Figur 16 und 45), um eine Leitungsdichtung 45 (vgl. beispielsweise Figur 16 oder Figur 17), eine Kabelfesthaltung 46 (vgl. beispielsweise Figur 17), eine Haltekappe bzw. Abschlusskappe 47 (vgl. beispielsweise Figur 16 oder Figur 17) oder eine Winkelkappe handeln. Grundsätzlich kommt es auf die Ausgestaltung der Steckverbinderkomponente im Rahmen der Erfindung nicht an.

Im Rahmen der Vorbestückung eines zwei- oder mehradrigen elektrischen Kabels 1a kann sich allerdings insbesondere eine Bestückung gemäß der in Figur 16 dargestellten Reihenfolge aus einer Schirmhülse 26, gefolgt von einem Buchsengehäuse bzw. einem Steckverbindergehäuse 44, gefolgt von einer Leitungsdichtung 45, gefolgt von einer Haltekappe 47 (oder einer Winkelkappe im Falle eines winkligen Steckverbinders) gut eignen. Im Falle einer Vorbestückung eines einadrigen elektrischen Kabels 1b kann sich vorzugsweise eine Bestückung gemäß Figur 17 gut eignen, wonach eine Leitungsdichtung 45, gefolgt von einer Kabelfesthaltung 46, gefolgt von einer Haltekappe 47, ausgehend von einem der Kabelenden 3, 4 auf den Kabelmantel 5 aufgeschoben sind.

Es kann von Vorteil sein sicherzustellen, dass die im Rahmen der Vorbestückung aufgebrachten Steckverbinderkomponenten 26, 44, 45, 46, 47 an den gewünschten axialen Positionen entlang der Mittelachse bzw. Längsachse M des Kabels 1a, 1b verbleiben. Hierzu kann es von Vorteil sein, jede der Steckverbinderkomponenten 26, 44, 45, 46, 47 mit zwei Mantelklemmen 48a, 48b, 48c, 48d zu umgeben, um eine ungewollte Verschiebung der Steckverbinderkomponente 26, 44, 45, 46, 47 in beiden Richtungen entlang der Mittelachse M des Kabels 1a, 1b zu verhindern. In Abhängigkeit der Steckverbinderkomponente 26, 44, 45, 46, 47 kann die Notwendigkeit hierfür allerdings auch entfallen, beispielsweise wenn es sich bei der Steckverbinderkomponente 26, 44, 45, 46, 47 um eine Dichtung, beispielsweise um die Leitungsdichtung 45 handelt, die in der Regel bereits ausreichend fest auf dem Kabelmantel 5 des Kabels 1a, 1b verspannt ist.

Die Mantelklemmen 48a, 48b, 48c, 48d können beispielsweise mittels einer Bestückungseinheit auf das Kabel 1a, 1b aufgebracht werden.

Grundsätzlich können verschiedene Arten von Mantelklemmen 48a, 48b, 48c, 48d vorgesehen sein. Beispielsweise können die Figuren 16 dargestellten Klammern 48a vorgesehen sein, die einen Betätigungsbereich und einen Befestigungsbereich aufweisen. Mittels des Betätigungsbereichs können die an dem gegenüberliegenden Ende zweier Klemmschenkel befindlichen Klemmen, die den Befestigungsbereich ausbilden, entgegen der Federkraft einer Rückstellfeder geöffnet und die Klammer 48a somit radial auf das Kabel 1a, 1b aufgebracht werden. Alternativ können allerdings auch Mantelklemmen 48b mit Verzurrelementen 49 in der Art eines Kabelbinders (vgl. Figur 17), vorgesehen sein. Eine weitere beispielhafte Mantelklemme 48c, die einen auf dem Kabelmantel 5 verspannbaren metallischen Teilring aufweist, ist in Figur 17 ebenfalls dargestellt. Ferner zeigt Figur 17 eine weitere beispielhafte Mantelklemme 48d, die einen elastischen Ring aufweist, beispielsweise einen Gummiring, ähnlich einem Dichtring. Auf die genaue Ausgestaltung der Mantelklemme 48a, 48b, 48c, 48d kommt es im Rahmen der Erfindung nicht unbedingt an. Vorzugsweise werden die Mantelklemmen 48a, 48b, 48c, 48d kraftschlüssig und reversibel an dem Kabelmantel 5 des Kabels 1a, 1b befestigt.

Die wenigstens eine Mantelklemme 48a, 48b, 48c, 48d kann nach der Steckverbindermontage gegebenenfalls wieder von dem Kabelmantel 5 des Kabels 1a, 1b entfernt werden.

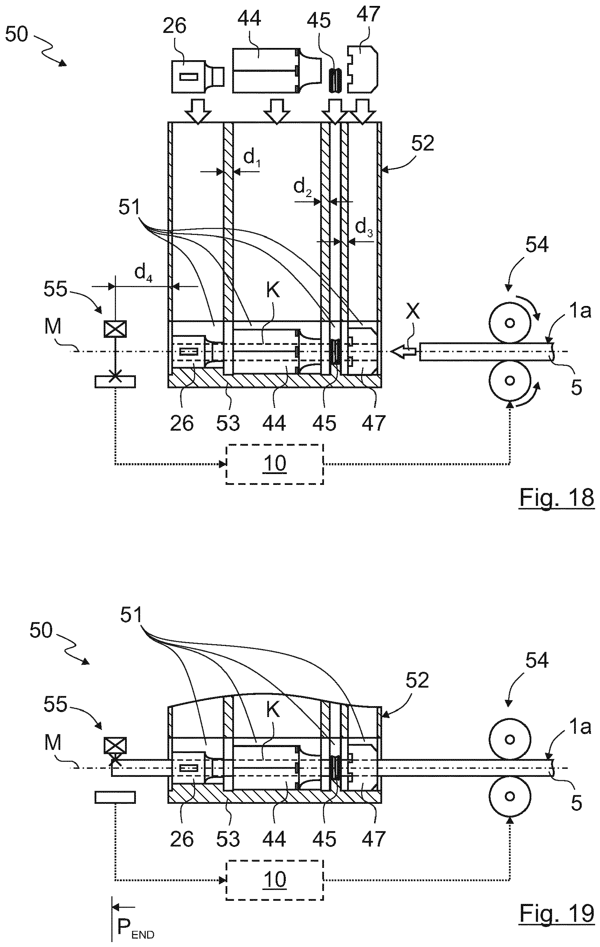

In Figur 18 ist schematisch in einer seitlichen Schnittdarstellung ein Mehrfachbestückungsmodul 50 zur Verwendung im Rahmen einer Steckverbindermontage dargestellt. Das Mehrfachbestückungsmodul 50 ist eingerichtet, um ein Kabel 1a, 1b ausgehend von einem vorderen, freien Ende bzw. ausgehend von einem der Kabelenden 3, 4 des Kabels 1a, 1b für die Steckverbindermontage mit einer oder mehreren Steckverbinderkomponenten 26, 44, 45, 46, 47 zu bestücken. Nur beispielhaft ist das Mehrfachbestückungsmodul 50 zur Bestückung des zweiadrigen Kabels 1a dargestellt.

Das Mehrfachbestückungsmodul 50 weist Kammern 51 zur Aufnahme der einzelnen Steckverbinderkomponenten 26, 44, 45, 46, 47 auf, wobei die Kammern 51 derart angeordnet sind, dass die in den Kammern 51 aufgenommenen Steckverbinderkomponenten 26, 44, 45, 46, 47 einen gemeinsamen Kanal K (vgl. strichlinierte Darstellung in Figur 18) mit einer gemeinsamen Mittelachse M ausbilden.

Wie im Ausführungsbeispiel dargestellt, kann das Mehrfachbestückungsmodul 50 ein Magazin 52 aufweisen, um die Steckverbinderkomponenten 26, 44, 45, 46, 47 zur Bestückung weiterer Kabel 1a, 1b vorzuhalten. Im Ausführungsbeispiel ist ein Schachtmagazin dargestellt; grundsätzlich kann aber ein beliebiges Magazin vorgesehen sein.

Die Kammern 51 des Mehrfachbestückungsmoduls 50 können derart angeordnet sein, dass die in den Kammern 51 aufgenommenen Steckverbinderkomponenten 26, 44, 45, 46, 47 entlang der Mittelachse M in definierten Abständen voneinander beabstandet sind. In Abhängigkeit der jeweiligen Steckverbinderkomponente 26, 44, 45, 46, 47 und der nachfolgenden Montage kann vorgesehen sein, für verschiedene Steckverbinderkomponenten 26, 44, 45, 46, 47 verschiedene Abstände voneinander vorzusehen, die beispielsweise durch eine entsprechende Wandungsdicke der Kammern 51 und/oder des Magazins 52 vorgegeben werden können.

Beispielsweise kann ein erster Abstand di zwischen der vordersten Steckverbinderkomponente (im Ausführungsbeispiel die Schirmhülse 26) und der zweiten Steckverbinderkomponente (im Ausführungsbeispiel das Steckverbindergehäuse 44), ein zweiter Abstand d₂ zwischen der zweiten Steckverbinderkomponente bzw. dem Steckverbindergehäuse 44 und einer dritten Steckverbinderkomponente (im Ausführungsbeispiel die Leitungsdichtung 45) und ein dritter Abstand d₃ zwischen der dritten Steckverbinderkomponente bzw. der Leitungsdichtung 45 und einer vierten Steckverbinderkomponente (im Ausführungsbeispiel die Haltekappe 47) vorgesehen sein. Es kann auch ein definierter Abstand d₄ der ersten Steckverbinderkomponente bzw. der Schirmhülse 26 zu dem vorderen Ende Kabels 1a, 1b vorgesehen sein, wenn das elektrische Kabel 1a, 1b vollständig in das Mehrfachbestückungsmodul 50 eingeschoben wurde. Die Abstände d₁, d₂, d₃, d₄ finden sich schließlich an dem bestückten Kabel 1a wieder (vgl. Figur 16).

In vorteilhafter Weise können die Kammern 51 des Mehrfachbestückungsmoduls 50 außerdem derart ausgebildet sein, dass durch die Steckverbinderkomponenten 26, 44, 45, 46, 47 verlaufende Durchgangsbohrungen zur Aufnahme des Kabels 1a, 1b koaxial zueinander ausgerichtet sind, wenn die Steckverbinderkomponenten 26, 44, 45, 46, 47 in den Kammern 51 aufgenommen sind. Hierzu kann beispielsweise die Auflagefläche bzw. ein unterer Boden 53 des Mehrfachbestückungsmoduls 50 in den jeweiligen Kammern 51 eine jeweils auf die Steckverbinderkomponente 26, 44, 45, 46, 47 ausgelegte Tiefe aufweisen, wie in Figur 18 dargestellt. Zusätzlich kann vorgesehen sein, dass die Kammern 51 des Mehrfachbestückungsmoduls 50 ausgebildet sind, um die Steckverbinderkomponenten 26, 44, 45, 46, 47 verdrehsicher zu halten, insbesondere wenn im Rahmen der nachfolgenden Steckverbindermontage eine bestimmte Ausrichtung bzw. Orientierung einzelner Steckverbinderkomponenten 26, 44, 45, 46, 47 vorgesehen ist.

Es kann eine Zustelleinrichtung 54 vorgesehen sein (die nicht unbedingt Teil des Mehrfachbestückungsmoduls 50 sein muss), um das Kabel 1a, 1b mit seinem Kabelende 3, 4 entlang der Mittelachse M durch die Steckverbinderkomponenten 26, 44, 45, 46, 47 hindurchzuführen, um die Steckverbinderkomponenten 26, 44, 45, 46, 47 auf den Kabelmantel 5 des Kabels 1a, 1b aufzuschieben. Das Kabel 1a, 1b kann somit mit seinem Kabelende 3, 4 entlang der Mittelachse M durch die Steckverbinderkomponenten 26, 44, 45, 46, 47 hindurchgeführt werden, bis es eine vorbestimmte Endposition P_{END} erreicht, wie in Figur 19 dargestellt. Im Ausführungsbeispiel weist die Zustelleinrichtung 54 eine Rollenfördereinrichtung mit zwei Rollen auf, zwischen denen das Kabel 1a, 1b geführt wird, um dieses linear zu verschieben.

Um die Position des Kabels 1a, 1b entlang der Mittelachse M zu überwachen, kann beispielsweise eine Lichtschranke 55 oder eines sonstige sensorische Einrichtung vorgesehen sein, um das Erreichen der Endposition P_{END} des elektrischen Kabels 1a, 1b in dem Mehrfachbestückungsmodul 50 zu erkennen und um die Kabelzuführung gegebenenfalls zu stoppen (vgl. Figuren 18 und 19). Es kann grundsätzlich auch eine kontinuierliche Erfassung der Position des Kabels 1a, 1b vorgesehen sein.

Insbesondere um zu vermeiden, dass die Steckverbinderkomponenten 26, 44, 45, 46, 47 während des Durchführens des elektrischen Kabels 1a, 1b entlang der Mittelachse M verschoben werden, kann vorgesehen sein, dass die Kammern 51 des Mehrfachbestückungsmoduls 50 ausgebildet sind, um die Steckverbinderkomponenten 26, 44, 45, 46, 47 in Axialrichtung, insbesondere in Zustellrichtung X (vgl. Pfeil in Figur 18) des elektrischen Kabels 1a, 1b, entlang der Mittelachse M formschlüssig zu blockieren. Hierfür können beispielsweise die Wandungen des Magazins 52 weitergeführt werden, wobei eine entsprechende Aussparung eine Durchführung des Kabel 1a, 1b ermöglichen kann.

Insbesondere wenn die Durchgangsbohrungen der Steckverbinderkomponenten 26, 44, 45, 46, 47 dem Durchmesser des Kabelmantels 5 entsprechen oder zumindest annähernd entsprechen, kann es von Vorteil sein, wenigstens eine der Steckverbinderkomponenten 26, 44, 45, 46, 47 unter Verwendung eines Schmierstoffs, vorzugsweise eines Alkohols oder eines Silikonöls, auf den Kabelmantel 5 aufzuschieben. Hierfür kann beispielsweise vorgesehen sein, den Kabelmantel 5 und/oder die Steckverbinderkomponente(n) 26, 44, 45, 46, 47 mit einem Schmierstoff zu versehen.

Im Rahmen der Konfektionierung des elektrischen Kabels 1 wird dieses in der Regel von einem sogenannten Endloskabel gemäß der vorgesehenen Länge abgelängt. Durch das Schneiden des Kabels 1 kann sich

Ein geeignetes Bestückungsverfahren kann mittels eines Computerprogrammprodukts mit Programmcodemitteln auf der Steuereinheit 10 des Mehrfachbestückungsmoduls 50 ausgeführt werden, wie in den Figuren 18 und 19 angedeutet.

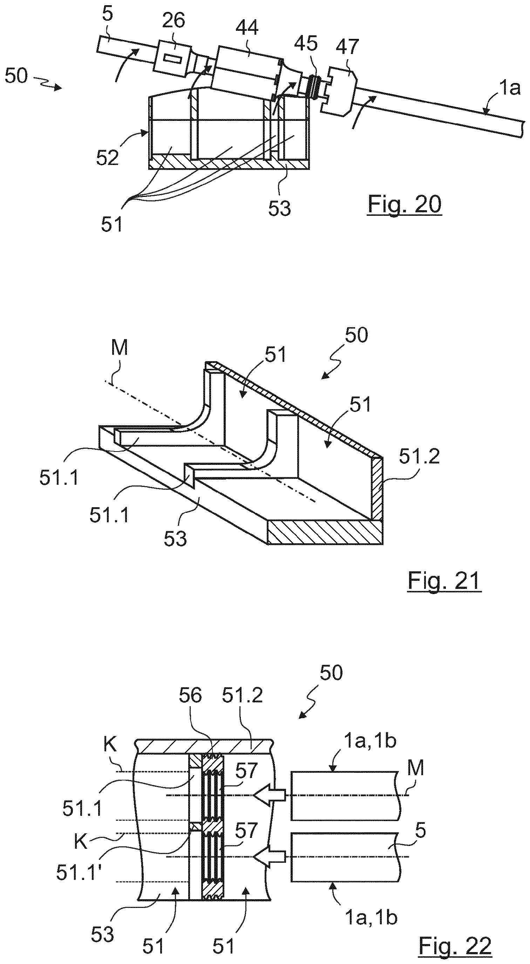

Das mit den Steckverbinderkomponenten 26, 44, 45, 46, 47 bestückte Kabel 1a, 1b kann nach dem Durchführen des Kabels 1a, 1b durch die Steckverbinderkomponenten 26, 44, 45, 46, 47 beispielsweise seitlich zur Zustellrichtung X des Kabels 1a, 1b oder entgegen der Zustellrichtung X des Kabels 1a, 1b aus dem Mehrfachbestückungsmodul 50 entnommen werden, wie in Figur 20 angedeutet.

In Figur 21 ist ein Ausschnitt des Mehrfachbestückungsmoduls 50 in einer perspektivischen Schnittdarstellung vergrößert dargestellt. Der Ausschnitt zeigt beispielhaft zwei Kammern 51 des Mehrfachbestückungsmoduls 50. Die Kammern 51 sind durch Zwischenwandungen 51.1 voneinander getrennt, die zur Realisierung der Abstände d₁, d₂, d₃, d₄ unterschiedliche Wandstärken aufweisen können. Die Zwischenwandungen 51.1 dienen gleichzeitig als Anschlag für die in die Kammern 51 eingelegten Steckverbinderkomponenten 26, 44, 45, 46, 47 (diese sind in Figur 21 ausgeblendet). Die Zwischenwandungen 51.1 sind ferner ausgebildet, um im Bereich des Kanals K um die Mittelachse M herum eine Ausnehmung zur Durchführung des Kabels 1a, 1b durch die Steckverbinderkomponenten 26, 44, 45, 46, 47 zu belassen. Der Boden 53 des Mehrfachbestückungsmoduls 50 weist Stufen auf, um innerhalb der Kammern 51 verschiedene Höhenebenen für die jeweiligen Steckverbinderkomponenten 26, 44, 45, 46, 47 bereitzustellen, um einen durchgängigen Kanal K bzw. eine koaxiale Positionierung der Steckverbinderkomponenten 26, 44, 45, 46, 47 zu ermöglichen. Um ein seitliches Herausfallen der Steckverbinderkomponenten 26, 44, 45, 46, 47 zu vermeiden, können außerdem Seitenwände vorgesehen sein. Im Ausführungsbeispiel ist nur eine hintere Seitenwand 51.2 vorgesehen, um das bestückte Kabel 1a, 1b, wie in Figur 20 angedeutet, noch seitlich aus dem Mehrfachbestückungsmodul 50 entnehmen zu können. Das über dem Mehrfachbestückungsmodul 50 angeordnete Magazin 52 (in Figur 21 ausgeblendet) weist vorzugsweise aber auf beiden Seiten Seitenwände auf. Der Boden 53, die Seitenwände und/oder die Zwischenwandungen 51.1 können optional ausgebildet sein, um die Steckverbinderkomponenten 26, 44, 45, 46, 47 in einer vordefinierten Ausrichtung bzw. Orientierung vorzuhalten.

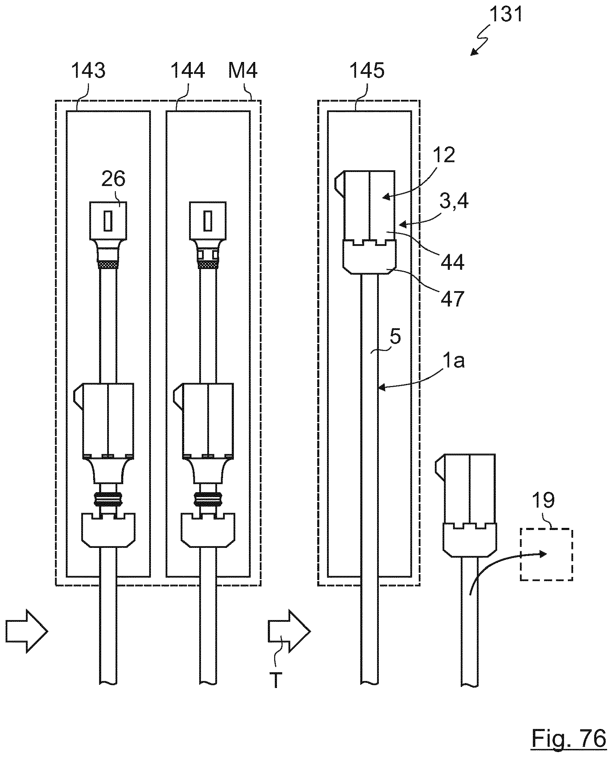

In Figur 22 ist in einer Schnittdarstellung ein Mehrfachbestückungsmodul 50 zur Montage eines mehrere elektrische Kabel 1a, 1b aufweisenden elektrischen Steckverbinders 12 (vgl. beispielsweise die Figuren 45 und 76) ausschnittsweise von oben gezeigt. Das Mehrfachbestückungsmodul 50 ist ausgebildet, um einen Kabelmantel 5 des jeweiligen Kabels 1a, 1b mit zwei oder mehr gemeinsamen Steckverbinderkomponenten 56 zu bestücken. Beispielhaft wird das Prinzip anhand einer gemeinsamen Leitungsdichtung 56 verdeutlicht. Bei einer gemeinsamen Steckverbinderkomponente 56 kann es sich grundsätzlich aber um eine beliebige Steckverbinderkomponente handeln, insbesondere um eine der vorstehend bereits beschriebenen Steckverbinderkomponenten 26, 44, 45, 46, 47. Die gemeinsame Steckverbinderkomponente bzw. die gemeinsame Leitungsdichtung 56 weist eine der Anzahl Kabel 1a, 1b korrespondierende Anzahl Durchgangsbohrungen 57 auf.

Im Ausführungsbeispiel gemäß Figur 22 wird dabei lediglich schematisch das Bestücken eines ersten elektrischen Kabels 1a, 1b und eines zweiten elektrischen Kabels 1a, 1b mit einer gemeinsamen Leitungsdichtung 56 demonstriert. Die Anzahl Kabel 1a, 1b und die Anzahl Durchgangsbohrungen 57 sowie die Geometrie und Ausgestaltung der Steckverbinderkomponente bzw. der Leitungsdichtung 56 sind nicht einschränkend zu verstehen.

Die gemeinsame Leitungsdichtung 56 ist in dem Mehrfachbestückungsmodul 50 in der ihr zugeordneten Kammer 51 derart angeordnet, dass die Leitungsdichtung 56 mit weiteren Steckverbinderkomponenten (nicht dargestellt) für jedes der Kabel 1a, 1b einen gemeinsamen Kanal K mit einer gemeinsamen Mittelachse M ausbildet. Hierbei kann es insbesondere auf eine korrekte Orientierung ankommen, um die Durchgangsbohrungen 57 korrekt auszurichten.

Die Kabel 1a, 1b können von der Zustelleinrichtung 54 gleichzeitig oder nacheinander durch die entsprechenden Steckverbinderkomponenten 56 hindurchgeführt werden, um die Steckverbinderkomponenten 56 auf die Kabel 1a, 1b bzw. auf deren Kabelmäntel 5 aufzuschieben. Vorzugsweise werden die Kabel 1a, 1b gleichzeitig durch die Steckverbinderkomponenten 56 hindurchgeführt, was beispielsweise den Aufbau der Zustelleinrichtung 54 vereinfachen kann. Es kann aber auch vorgesehen sein, insbesondere bei Steckverbinderkomponenten 56 mit - verglichen mit dem Kabeldurchmesser des Kabels 1a, 1b - sehr engen Durchgangsbohrungen 57 (beispielsweise bei einer gemeinsamen Leitungsdichtung 56), die Kabel 1a, 1b nacheinander hindurchzuführen, um die beim Einpressen der Kabel 1a, 1b entstehenden Kräfte zu reduzieren.

Das Mehrfachbestückungsmodul 50 kann im Wesentlichen aufgebaut sein, wie vorstehend bereits beschrieben. Um die Leitungsdichtung 56 bzw. die Steckverbinderkomponenten abzustützen können entsprechende Zwischenwandungen 51.1 vorgesehen sein, wie ebenfalls bereits gezeigt. Die Zwischenwandungen 51.1 können neben seitlichen Stützbereichen auch einen mittleren Stützbereich 51.1' aufweisen, um die gemeinsame Leitungsdichtung 56 bzw. Steckverbinderkomponente zum Einführen des zweiten Kabels 1a, 1b noch besser abzustützen.

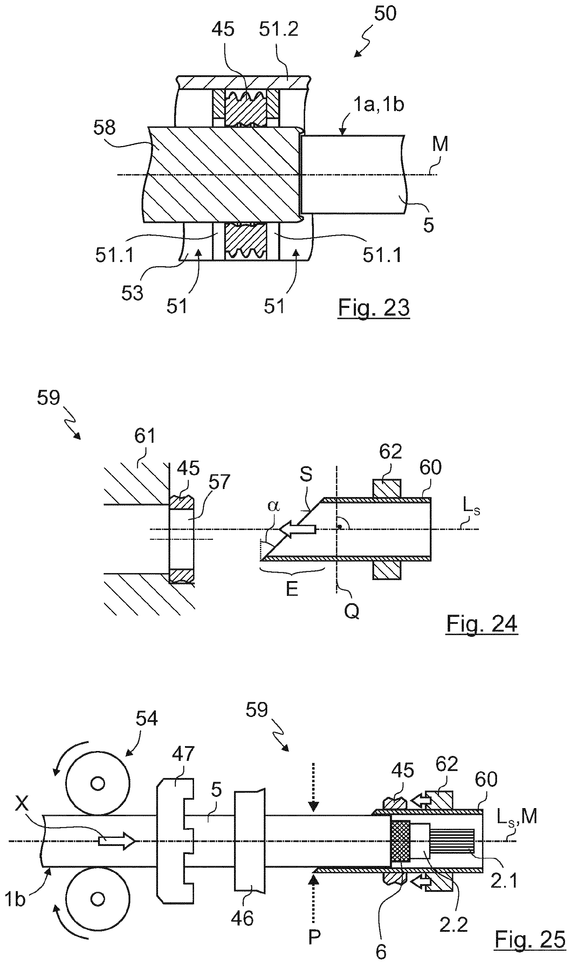

Schließlich zeigt Figur 23 noch eine Variante eines Bestückungsmoduls, insbesondere eines Mehrfachbestückungsmoduls 50, bei der ein Führungsdorn 58 als Einführhilfe für das Kabel 1a, 1b vorgesehen ist. Diese Variante eignet sich zur Verwendung mit einem beliebigen Bestückungsmodul und zur Bestückung eines oder mehrerer Kabel 1a, 1b mit beliebigen Steckverbinderkomponenten 26, 44, 45, 46, 47, 56 und ist lediglich beispielhaft und ausschnittsweise zur Bestückung des Kabels 1a, 1b mit einer Leitungsdichtung 45 gezeigt.

Der Führungsdorn 58 kann vor dem Einführen des Kabels 1a, 1b aus der der Zustellrichtung X des Kabels 1a, 1b entgegengesetzten Richtung durch die in den Kammern 51 aufgenommenen Steckverbinderkomponenten 26, 44, 45, 46, 47 hindurchgeführt werden. Der Führungsdorn 58 kann dabei durch alle oder nur durch einen Teil der Steckverbinderkomponenten 26, 44, 45, 46, 47 hindurchgeführt werden. Vorzugsweise wird der Führungsdorn 58 durch alle Steckverbinderkomponenten 26, 44, 45, 46, 47 hindurchgeführt.

Zum einfacheren Hindurchführen durch die Steckverbinderkomponenten 26, 44, 45, 46, 47 kann der Führungsdorn 58 an seinem vorderen Ende angeschrägt sein bzw. eine Fase aufweisen.

Der Führungsdorn 58 kann schließlich zur Führung des Kabels 1a, 1b an seinem vorderen Ende einen Führungsring aufweisen. Der Führungsring kann in die (optional vorhandene) Fase übergehen, wie in Figur 23 dargestellt.

Das Kabel 1a, 1b kann schließlich durch die Steckverbinderkomponenten 26, 44, 45, 46, 47 hindurchgeführt werden, während der Führungsdorn 58 gleichzeitig zurückgezogen und/oder von dem Kabel 1a, 1b zurückgeschoben wird. Vorzugsweise befindet sich das Kabel 1a, 1b dabei in Anlage mit der vorderen Stirnfläche des Führungsdorns 58.

Der Führungsdorn 58 vermag das Kabel 1a, 1b vorteilhaft durch die Steckverbinderkomponenten 26, 44, 45, 46, 47 hindurch zu führen. Ferner kann der Führungsdorn 58 Steckverbinderkomponenten 26, 44, 45, 46, 47 mit sehr enger Durchgangsbohrung 57 bereits aufweiten, wodurch sich das Kabel 1a, 1b einfacher durch diese hindurchführen lässt.

Auf dem Führungsdorn 58 kann ein Schmierstoff aufgebracht sein. Vorzugsweise ist der Führungsdorn 58 aus einem Metall oder aus einem Hartkunststoff ausgebildet.

Figur 24 zeigt ein Einzelbestückungsmodul 59 für die Vorbestückung des Kabels 1a, 1b mit einer oder mit mehreren Steckverbinderkomponenten 26, 44, 45, 46, 47 im Rahmen der Steckverbindermontage gemäß einem ersten Ausführungsbeispiel in einer Schnittdarstellung. Das Einzelbestückungsmodul 59 kann verwendet werden, um das Kabel 1a, 1b mit einem elastischen Ringkörper 45, im Ausführungsbeispiel die Leitungsdichtung 45, eines auf dem Kabel 1a, 1 b zu montierenden Steckverbinders 12, zu bestücken.

Bei dem elastischen Ringkörper 45 kann es sich grundsätzlich um eine beliebige Steckverbinderkomponente 26, 44, 45, 46, 47 des Steckverbinders 12 oder aber zum Beispiel auch um eine der vorstehend genannten Mantelklemmen 48a, 48b, 48c, 48d zur Befestigung auf dem Kabel 1a, 1b handeln. Die Mantelklemme 48a, 48b, 48c, 48d, die in der Regel unabhängig von dem Steckverbinder 12 ist, kann im Rahmen der Steckverbindermontage beispielsweise verwendet werden, um das Kabel 1a, 1b zu markieren und hierdurch zu identifizieren und/oder um auf dem Kabel 1a, 1b aufgebrachte Steckverbinderkomponenten 26, 44, 45, 46, 47, insbesondere lose vormontierte Steckverbinderkomponenten 26, 44, 45, 46, 47, gegen Verrutschen zu sichern (wie bereits erwähnt).

Gemäß einem ersten Verfahrensschritt der Einzelbestückung kann vorgesehen sein, ein Schrägrohr 60 mit einem abgeschrägten Endabschnitt E bzw. mit einer gegenüber einem Rohrquerschnitt Q des Schrägrohrs 60 um einen Anstellwinkel α geneigten Stirnfläche S in eine Durchgangsbohrung 57 des Ringkörpers 45 einzuführen. Der Rohrquerschnitt Q ist senkrecht zu der Längsachse Ls des Schrägrohrs 60 ausgerichtet. Der Endabschnitt E des Schrägrohrs 60 gemäß dem ersten Ausführungsbeispiel ist beispielhaft linear abgeschrägt. Der Anstellwinkel α zwischen dem Rohrquerschnitt Q und der Stirnfläche S des Schrägrohrs 60 beträgt in den Ausführungsbeispielen beispielhaft etwa 45°. Grundsätzlich kann der Anstellwinkel α allerdings beliebig sein, insbesondere 10° bis 80°, vorzugsweise 20° bis 70°, besonders bevorzugt 30° bis 60° und ganz besonders bevorzugt 40° bis 50° betragen.

Es kann in vorteilhafter Weise vorgesehen sein, das Schrägrohr 60 zu dem Ringkörper 45 vor und zumindest teilweise während des Einführens des Schrägrohrs 60 in den Ringkörper 45 achsversetzt zu positionieren. Ein entsprechender Achsversatz ist in allen dargestellten Ausführungsbeispielen vorgesehen. Grundsätzlich kann allerdings auch eine koaxiale Ausrichtung vorgesehen sein.

Um den Ringkörper 45 während des Einführens des Schrägrohrs 60 abzustützen kann ein Stützkörper 61 vorgesehen sein, der eine Durchgangsbohrung aufweisen kann, um das Kabel 1a, 1b im Verlauf des Bestückungsverfahrens hindurchführen zu können. Der Ringkörper 45 kann sich somit mit seiner von dem Schrägrohr 60 abgewandten Seite an dem Stützkörper 61 abstützen, während das Schrägrohr 60 entgegen der Zustellrichtung X des Kabels 1a, 1b (in Figur 25 durch einen Pfeil angedeutet), in den Ringkörper 45 eingeführt wird.

Um das Einführen des Schrägrohrs 60 in den Ringkörper 45 zu unterstützen kann optional vorgesehen sein, dass auf das Schrägrohr 60 und/oder auf den Ringkörper 45 ein Schmiermittel aufgetragen wird, vorzugsweise ein Alkohol oder ein Silikonöl.

In Figur 25 ist das Einzelbestückungsmodul 59 der Figur 24 nach dem Einführen des Schrägrohrs 60 in den Ringkörper 45 dargestellt. Ferner ist die Zustelleinrichtung 54 (beispielhaft ein Rollenförderer mit zwei Rollen) dargestellt, um das Kabel 1a, 1b in dem Schrägrohr 60 derart zu positionieren, dass sich der Ringkörper 45 an einer definierten axialen Position P auf dem Kabel 1a, 1b befindet, wenn der Ringkörper 45 von dem Schrägrohr 60 auf das Kabel 1a, 1b abgestreift wird. Um das Kabel 1a, 1b möglichst genau zu positionieren, kann beispielsweise eine nicht näher dargestellte sensorische Einheit vorgesehen sein.

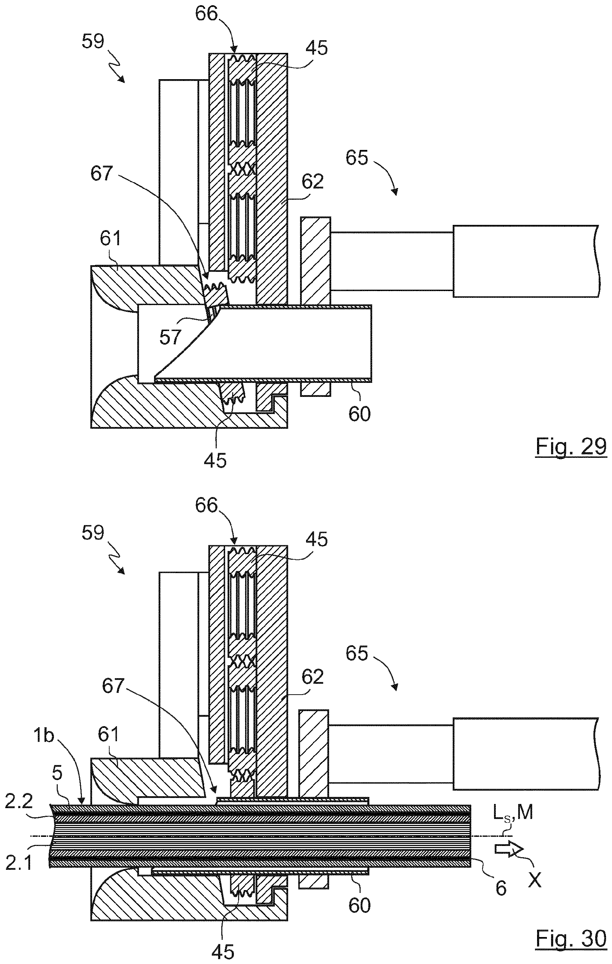

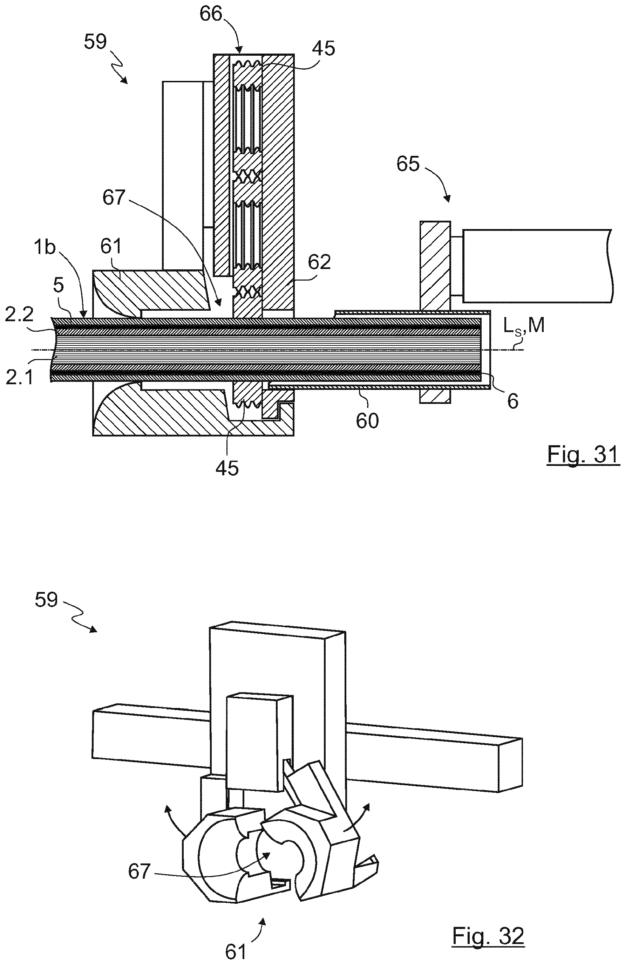

Lediglich zur Verdeutlichung des Funktionsprinzips des Einzelbestückungsmoduls 59 ist in den Figuren 25, 30 und 31 ein einadriges Kabel 1b dargestellt. Grundsätzlich kann mittels des Einzelbestückungsmoduls 59 ein beliebiges Kabel 1a, 1b, insbesondere auch das mehradrige Kabel 1a mit einer Steckverbinderkomponente 26, 44, 45, 46, 47, 56 vorbestückt werden. Aus Gründen der besseren Darstellbarkeit ist das Kabel 1b in Figur 25 in einer nicht geschnittenen Ansicht und in den Figuren 30 und 31 entlang seiner Mittelachse M geschnitten gezeigt. In Figur 25 ist das elektrische Kabel 1b teilweise abisoliert. Grundsätzlich kann das Kabel 1a, 1b allerdings im Rahmen des Bestückens auch noch vollständig unbearbeitet sein, wie in den Figuren 30 und 31 gezeigt. Grundsätzlich kommt es auf den genauen Aufbau und auf den Bearbeitungszustand des Kabels 1a, 1b allerdings nicht unbedingt an.

Das in Figur 25 dargestellte Kabel 1b ist bereits beispielhaft mit der Kabelfesthaltung 46 und mit der Abschlusskappe 47 vorbestückt. Im Rahmen der Einzelbestückung kann nun noch die Leitungsdichtung 45 auf den Kabelmantel 5 des Kabels 1b aufgebracht werden.

In Figur 25 ist das Kabel 1b in dem Schrägrohr 60 mit der definierten axialen Position P an dem Ende der Stirnfläche S bzw. an dem Endabschnitt E des Schrägrohrs 60 positioniert. Nach der Positionierung kann der Ringkörper 45 von dem Schrägrohr 60 auf das Kabel 1b bzw. auf den Kabelmantel 5 abgestreift werden.

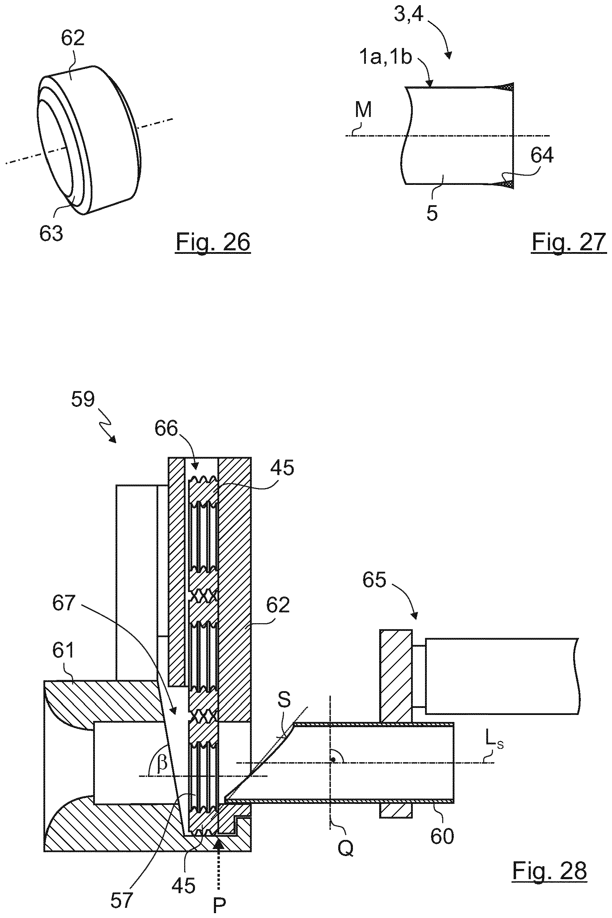

Zum Abstreifen des Ringkörpers 45 kann ein Abstreifmittel 62 vorgesehen sein. Im Ausführungsbeispiel der Figuren 24 und 25 ist ein ringförmig um das Schrägrohr 60 umlaufendes Abstreifmittel 62 vorgesehen, das zum Abstreifen des Ringkörpers 45 in Richtung auf die Stirnfläche S des Schrägrohrs 60 bzw. in Einführrichtung bewegt wird. Das Abstreifmittel 62 kann in vorteilhafter Weise bereits vorher auf dem Schrägrohr 60 montiert sein, wie in Figur 24 dargestellt. Das Abstreifmittel 62 kann optional an seinem dem Ringkörper 45 zugewandten Ende einen sich konisch in Richtung auf den Ringkörper 45 verjüngenden Abschnitt 63 aufweisen, wie dies in Figur 26 dargestellt ist.

Im Rahmen der Konfektionierung des elektrischen Kabels 1a, 1b bzw. im Rahmen der Steckverbindermontage wird das Kabel 1a, 1b in der Regel von einem sogenannten Endloskabel gemäß der vorgesehenen Konfektionierungslänge L abgelängt. Durch das Schneiden des Kabels 1a, 1b kann sich insbesondere der Kabelmantel 5 aufgrund dessen Elastizität an dem Kabelende 3, 4 aufspreizen bzw. ausdehnen, was ein passgenaues Einführen des Kabels 1a, 1b in das Schrägrohr 60 erschweren kann. Um das Einführen des Kabels 1a, 1b bzw. das Positionieren des Kabels 1a, 1b in dem Schrägrohr 60 zu vereinfachen kann aus diesem Grunde vorgesehen sein, das Kabel 1a, 1b an seinem Kabelende 3, 4 abzuschrägen bzw. anzuspitzen bzw. mit einer Fase 64 zu versehen, um die radial abstehenden Abschnitte, wie in Figur 27 hervorgehoben, zu entfernen.

In Figur 28 ist ein besonders vorteilhaftes Ausführungsbeispiel des Einzelbestückungsmoduls 59 dargestellt. Das Funktionsprinzip soll anhand der in den Figuren 28 bis 32 gezeigten Bestückungsschritte erläutert werden.

Das Schrägrohr 60 weist beispielhaft einen konkav gewölbt abgeschrägten Endabschnitt E auf. Der Anstellwinkel α kann im Falle eines nicht linear verlaufenden Endabschnitts E durch eine durch die Endpunkte der Kurve verlaufende Sehne (strichliniert angedeutet) definiert werden.

Im Gegensatz zu der geneigten Stirnfläche S des in den Figuren 24 und 25 gezeigten Ausführungsbeispiels sind die Wandungen des Schrägrohrs 60 in dem Ausführungsbeispiel der Figuren 28 bis 32 nicht abgeschrägt. Das Schrägrohr 60 ist zum Einführen in den Ringkörper 45 an einer Aktuatorbaugruppe 65 befestigt, die einen Teleskopauszug zur linearen Zustellung des Schrägrohrs 60 entlang seiner Mittelachse bzw. Längsachse Ls aufweist.

Das in den Figuren 28 bis 32 dargestellte Einzelbestückungsmodul 59 weist ein Einzelmagazin 66 auf, um weitere Ringkörper 45 zur Bestückung weiterer Kabel 1a, 1b vorzuhalten. Das Einzelmagazin 66 mündet in einer Bestückungskammer 67, in der die Bestückung des Kabels 1a, 1b vornehmlich stattfindet. Wiederum ist ein Stützkörper 61 vorgesehen, an dem sich der Ringkörper 45 mit seiner von dem Schrägrohr 60 abgewandten Seite während des Einführens des Schrägrohrs 60 abstützen kann. Die zur Abstützung vorgesehene Wandung des Stützkörpers 61 ist schräg ausgebildet, damit sich der Ringkörper 45 während des Einführens des Schrägrohrs 60 in Richtung auf seine von dem Schrägrohr 60 abgewandte Seite neigen kann. Hierdurch kann das Einführen des Schrägrohrs 60 weiter vereinfacht werden. Der Stützkörper 61 kann hierzu einen entsprechenden Stützwinkel β ausbilden, der die Verkippung festlegt. Der Stützkörper 61 weist eine Durchgangsbohrung zum Einführen des Kabels 1a, 1b in das Einzelbestückungsmodul 59 auf. Zum leichteren Einführen ist ein Trichterabschnitt in dem Stützkörper 61 vorgesehen.

Im Ausführungsbeispiel der Figuren 28 bis 32 ist das Abstreifmittel 62 als Wandung mit einer Ausnehmung ausgebildet, durch die das Schrägrohr 60 einerseits hindurchgeführt und andererseits abgestützt werden kann.

Figur 29 zeigt den Zustand des Einzelbestückungsmoduls 59 während des Einführens des Schrägrohrs 60 in den Ringkörper 45. In Figur 30 ist ein Zustand des Einzelbestückungsmoduls 59 dargestellt, in dem das Kabel 1a, 1b bereits in dem Schrägrohr 60 positioniert wurde. Die definierte axiale Position P des Kabels 1a, 1b ist dabei an der Stirnseite des Abstreifmittels 62 ausgerichtet.

Um den Ringkörper 45 von dem Schrägrohr 60 auf das Kabel 1a, 1b bzw. auf den Kabelmantel 5 abzustreifen kann das Schrägrohr 60 mittels der Aktuatorbaugruppe 65 durch Zurückziehen des Teleskopauszugs wieder aus dem Einzelbestückungsmodul 59 herausgezogen werden. Aufgrund des durch das Abstreifmittel 62 bzw. die Stirnseite des Abstreifmittels 62 gebildeten Anschlags bleibt der Ringkörper 45 an seiner axialen Position, bis er vollständig von dem Schrägrohr 60 auf das Kabel 1a, 1b abgestreift wurde.

Anschließend kann das Kabel 1a, 1b aus dem Einzelbestückungsmodul 59 entnommen werden. Hierzu kann beispielsweise vorgesehen sein, dass der Stützkörper 61 aus mehreren Schalen, insbesondere zwei Halbschalen ausgebildet ist, die nach dem Bestücken des Kabels 1a, 1b geöffnet werden, um das Kabel 1a, 1b zusammen mit dem Ringkörper 45 entnehmen zu können. Das Prinzip zeigt Figur 32.

Es sei erwähnt, dass es auch vorgesehen sein kann, mehrere Ringkörper 45 auf dasselbe Kabel 1a, 1b aufzubringen. Dies kann sequentiell durch mehrfaches Verwenden beispielsweise eines der beschriebenen Einzelbestückungsmodule 59 erfolgen, wobei gegebenenfalls zwischen dem Bestücken der einzelnen Ringkörper 45 weitere Konfektionierungsschritte folgen, beispielsweise auch eine Bestückung mit sonstigen Steckverbinderkomponenten 26, 44, 45, 46, 47, 56. Es kann aber auch vorgesehen sein, das Kabel 1a, 1b in einem einzigen Bearbeitungsdurchgang mit mehreren Ringkörpern 45 zu bestücken, beispielsweise indem mehrere wie in den Figuren 18 bis 22 dargestellte Kammern 51 und optional auch mehrere Magazine 52 vorgesehen sind, die zusammen mit jeweiligen Abstreifmitteln 62 entlang der Mittelachse M des Kabels 1a, 1b versetzt angeordnet sind.

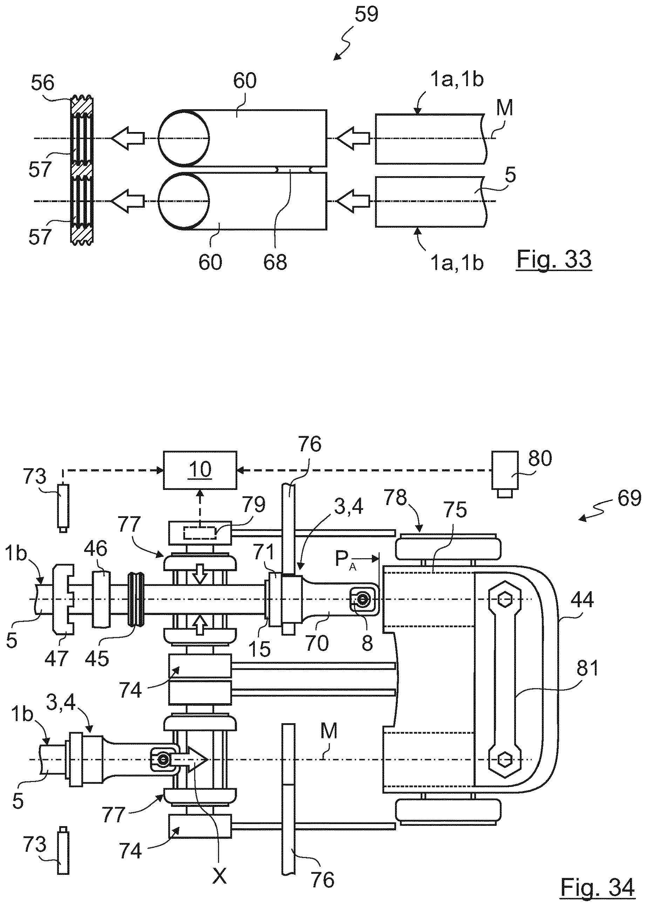

In Figur 33 ist ein Einzelbestückungsmodul 59 zur Montage eines mehrere elektrische Kabel 1a, 1b aufweisenden elektrischen Steckverbinders 12 gezeigt, um die Kabel 1a, 1b an einer jeweiligen definierten axialen Position P mit einem gemeinsamen elastischen Ringkörper 56 zu bestücken. Der gemeinsame elastische Ringkörper 56 weist hierzu eine der Anzahl Kabel 1a, 1 b korrespondierende Anzahl Durchgangsbohrungen 57 auf.

Im Ausführungsbeispiel gemäß Figur 33 wird dabei lediglich schematisch das Bestücken eines ersten elektrischen Kabels 1a, 1b und eines zweiten elektrischen Kabels 1a, 1b mit einem gemeinsamen Ringkörper 56, der als gemeinsame Leitungsdichtung 56 ausgebildet ist, demonstriert. Die Anzahl Kabel 1a, 1b und die Anzahl Durchgangsbohrungen 57 sowie die Geometrie und Ausgestaltung des gemeinsamen Ringkörpers 56 sind nicht einschränkend zu verstehen.

Jedem Kabel 1a, 1b ist gemäß Figur 33 ein Schrägrohr 60 zugeordnet, insbesondere ein Schrägrohr 60 gemäß den vorstehenden Ausführungen.

Die Schrägrohre 60 können für eine vereinfachte Ausrichtung und Positionierung optional aneinander befestigt sein, beispielsweise mittels eines Halterahmens. Hierfür ist beispielhaft ein Verbindungssteg 68 dargestellt.

Grundsätzlich kann die Bestückung auch sequentiell erfolgen, wonach die Kabel 1a, 1b unter Verwendung nur eines Schrägrohrs 60 nacheinander mit dem gemeinsamen Ringkörper 56 bestückt werden.

Der Vorgang des Bestückens (Einführen des Schrägrohrs 60 in die Durchgangsbohrung 57 / Positionieren des jeweiligen Kabels 1a, 1b in dem Schrägrohr 60 / Abstreifen / etc.) kann erfolgen wie vorstehend bereits ausführlich beschrieben.

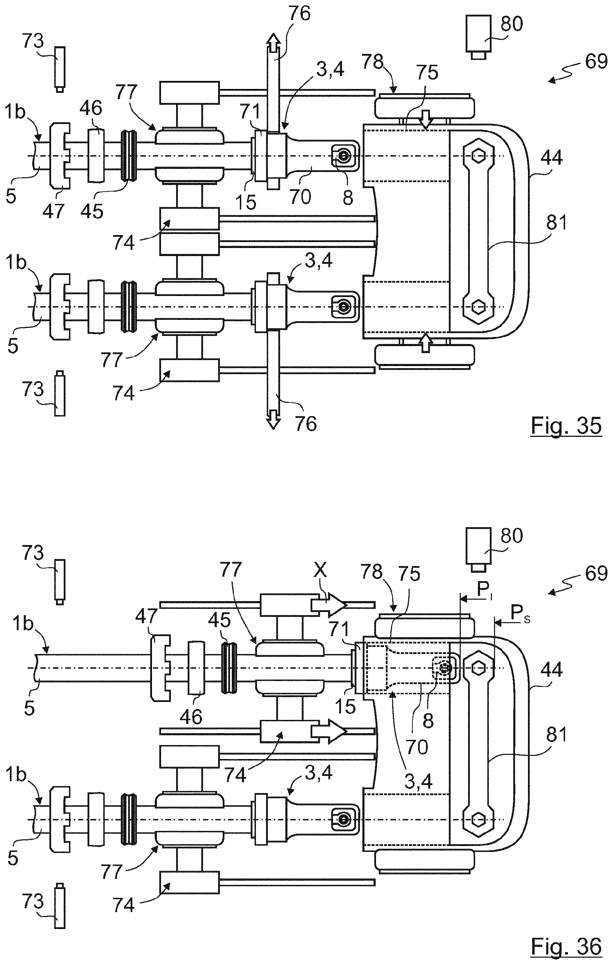

Die Figuren 34 bis 37 zeigen ein Einpressmodul 69 für die Montage eines elektrischen Steckverbinders 12 während verschiedener Montageschritte. Alle Darstellungen sind beispielhaft und stark schematisiert zu verstehen und sollen lediglich dem Verständnis der Erfindung dienen.

Figur 34 zeigt einen Zustand des Einpressmoduls 69 während des Einlegens von vorkonfektionierten elektrischen Kabeln 1b, die nachfolgend in einer Gehäusebaugruppe bzw. einem Steckverbindergehäuse 44 des Steckverbinders 12 montiert werden sollen. Rein beispielhaft wird das Einpressmodul 69 anhand eines Steckverbinders 12 beschrieben, der zwei elektrische Kabel 1b aufzunehmen vermag. Grundsätzlich kann sich das Einpressmodul 69 auch zur Verwendung mit einem Steckverbinder anderen Typs eignen, insbesondere zur Verwendung mit einem Steckverbinder, der lediglich ein einziges elektrisches Kabel 1b aufweist.

Auch die dargestellten elektrischen Kabel 1b sind lediglich beispielhaft zu verstehen. Grundsätzlich kann sich die Erfindung zur Verwendung mit einem beliebigen elektrischen Kabel eignen, beispielsweise auch zur Verwendung mit einem mehradrigen Kabel 1a mit mehreren Innenleitern 2.

Die beispielhaft dargestellten elektrischen Kabel 1b sind an ihrem jeweiligen vorderen Kabelende 3, 4 mit einem Innenleiterkontaktelement 8 vorkonfektioniert, das mit einem Innenleiter 2 des Kabels 1b elektrisch und mechanisch verbunden ist. Das Innenleiterkontaktelement 8 kann beispielsweise mit dem Innenleiter 2 des Kabels 1b verpresst oder verschweißt, insbesondere ultraschallverschweißt, sein. Hierzu kann eine Ultraschallschweißeinrichtung vorgesehen sein (nicht dargestellt). Das Innenleiterkontaktelement 8 kann, wie in den Ausführungsbeispielen dargestellt, in einem Isoliergehäuse 70, beispielsweise einem aus zwei Isolierschalen bestehenden Isoliergehäuse 70, aufgenommen sein. Das Kabel 1b kann ferner mit einer Stützhülse 15 vorkonfektioniert sein, die auf dem Kabelmantel 5 des Kabels 1b und/oder dem Außenleiter des Kabels 1b, insbesondere einem Kabelschirmgeflecht 6, aufgebracht ist. Auf die Stützhülse 15 kann eine Crimphülse 71 aufgeschoben und mit der Stützhülse 15 vercrimpt bzw. verpresst sein. Zwischen der Stützhülse 15 und der Crimphülse 71 kann das Kabelschirmgeflecht 6 verlaufen, das vor dem Aufbringen der Crimphülse 71 nach hinten über die Stützhülse 15 umgeschlagen wurde.

Schließlich können auf dem Kabelmantel 5 des Kabels 1b für die spätere Endmontage des Steckverbinders 12 auch noch weitere Steckverbinderkomponenten 26, 44, 45, 46, 47, 46 aufgeschoben sein, beispielsweise die dargestellte Leitungsdichtung 45, die Kabelfesthaltung 46 und die Haltekappe 47.

Die Kabel 1b können dem Einpressmodul 69 von einer später noch beschriebenen Transporteinrichtung 72, der Zustelleinrichtung 54 und/oder von einem Benutzer zugeführt werden. Dieser Vorgang ist in Figur 34 dargestellt.

Insbesondere während des Zuführens kann vorgesehen sein, dass eine Prüfeinrichtung 73 eine korrekte Vorbearbeitung, insbesondere die korrekte Vorbestückung des Kabelmantels 5 mit den Steckverbinderkomponenten 26, 44, 45, 46, 47, 56 prüft. Die Prüfeinrichtung 73 kann insbesondere als optische Prüfeinrichtung 73, beispielsweise als Kamera oder Lichtband, ausgebildet sein. Sofern die Prüfeinrichtung 73 eine fehlerhafte Vorbearbeitung des Kabels 1b, insbesondere eine unzureichende Vorbestückung des Kabels 1b feststellt, kann der Montageprozess beispielsweise unterbrochen und das Kabel 1b aussortiert werden.

Während des Einführens der Kabel 1b können diese entlang einer Vorschubrichtung, insbesondere entlang der Zustellrichtung X in eine Vorschubeinrichtung 74 eingeschoben werden. Die Vorschubeinrichtung 74 dient dem Einpressen des Kabelendes 3, 4 des Kabels 1b in einen korrespondieren Steckplatz 75 in dem Steckverbindergehäuse 44 des Steckverbinders 12 und wird nachfolgend noch näher beschrieben. Anstelle der Vorschubeinrichtung 74 kann gegebenenfalls auch die Zustelleinrichtung 54 zum Einpressen verwendet werden.

Die Kabel 1b können vorzugsweise unter Zuhilfenahme einer Ausrichtungshilfe 76 an einer Ausgangsposition P_{A} angeschlagen und lagerichtig ausgerichtet werden. Die Ausrichtungshilfe 76 weist hierzu beispielsweise einen Anschlag für die Crimphülse 71 auf.

Die Vorschubeinrichtung 74 weist eine Halteeinrichtung 77 zum Fixieren des Kabels 1b auf. Die Halteeinrichtung 77 weist in dem in den Figuren 34 bis 37 gezeigten Ausführungsbeispiel zwei an den Kabelmantel 5 des Kabels 1b zustellbare Klemmbacken auf. Nach dem Einlegen bzw. Zuführen des Kabels 1b können die Klemmbacken entsprechend geschlossen bzw. das Kabel 1b durch die Halteeinrichtung 77 fixiert werden.

Anschließend kann vorgesehen sein, dass die Vorschubeinrichtung 74 die Kabel 1b in Vorschubrichtung bzw. in Zustellrichtung X an das Steckverbindergehäuse 44 zustellt und in dieses einpresst.

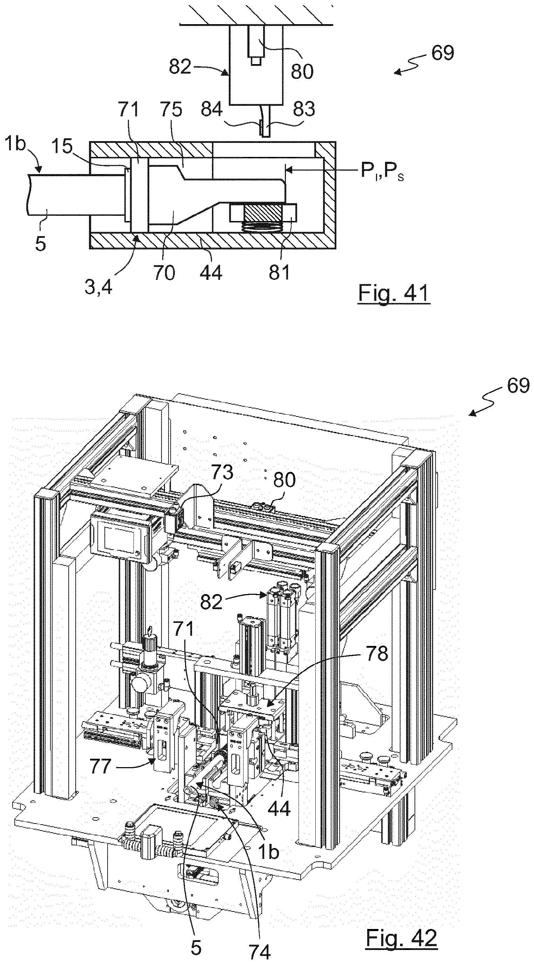

Grundsätzlich kann die Bearbeitung bzw. das Einpressen der Kabel 1b von den beiden Vorschubeinrichtungen 74 parallel oder aber auch nacheinander erfolgen. Vorzugsweise werden die Kabel 1b nacheinander eingepresst, um den Einpressvorgang besser kontrollieren und überwachen zu können. Grundsätzlich kann demnach auch eine gemeinsame Vorschubeinrichtung 74 oder zumindest ein gemeinsamer Antrieb für die Vorschubeinrichtungen 74 vorgesehen sein. In dem Ausführungsbeispiel der Figuren 34 bis 37 weist die Vorschubeinrichtung 74 ein Schienensystem auf, um die Halteeinrichtung 77 linear entlang der Vorschubrichtung bzw. Zustellrichtung X zu verfahren. In dem in den Figuren 42 bis 44 gezeigten Ausführungsbeispiel ist hingegen ein Spindelantrieb vorgesehen, der wahlweise nur eine der beiden Halteeinrichtungen 77 zustellt.

Nach dem Fixieren des Kabels 1b kann vor dem Einpressen des Kabels 1b das Steckverbindergehäuse 44 zunächst mittels einer Fixiereinrichtung 78 in einer Montageposition fixiert werden. Beispielhaft sind zwei Pressbacken zum Fixieren des Steckverbindergehäuses 44 dargestellt.

Anschließen kann die Vorschubeinrichtung 74 das Kabelende 3, 4 des Kabels 1b in den entsprechenden Steckplatz 75 in dem Steckverbindergehäuse 44 einpressen. Vorzugsweise wird dabei die Crimphülse 71 in den Steckplatz 75 eingepresst, woraus sich die spätere Haltekraft des Kabels 1b in dem Steckverbinder 12 ergibt.

Es ist ein Kraftaufnehmer 79 zur Erfassung der bei Einpressen des Kabels 1b aufgebrachten Presskraft vorgesehen. Der Kraftaufnehmer 79 ist im Ausführungsbeispiel Teil der Vorschubeinrichtung 74 und lediglich als Black Box in Figur 34 angedeutet. Die Vorschubeinrichtung 74 presst das Kabelende 3, 4 des Kabels 1b in das Steckverbindergehäuse 44 ein, bis das Innenleiterkontaktelement 8 eine Sollposition Ps innerhalb des Steckverbindergehäuses 44 erreicht hat. Eine optische Sensoreinheit 80 erfasst die Istposition P_{I} des Innenleiterkontaktelements 8 innerhalb des Steckverbindergehäuses 44 während des Einpressens des Kabels 1b.

Eine Steuereinheit 10 des Einpressmoduls 69 (ebenfalls nur als Black Box in Figur 34 angedeutet) kann zur Überwachung des Einpressvorgangs vorgesehen sein, insbesondere zur Auswertung der erfassten Istposition P_{I} und der erfassten Presskraft im Rahmen einer Qualitätssicherung. Die Steuereinheit 10 vermag die während des Einpressens von dem Kraftaufnehmer 79 erfasste Presskraft auszuwerten und mit einer Vorgabe für die Presskraft abzugleichen. Sofern die Presskraft der Vorgabe nicht entspricht, kann der Steckverbinder 12 beispielsweise entsprechend markiert und gegebenenfalls aussortiert werden.

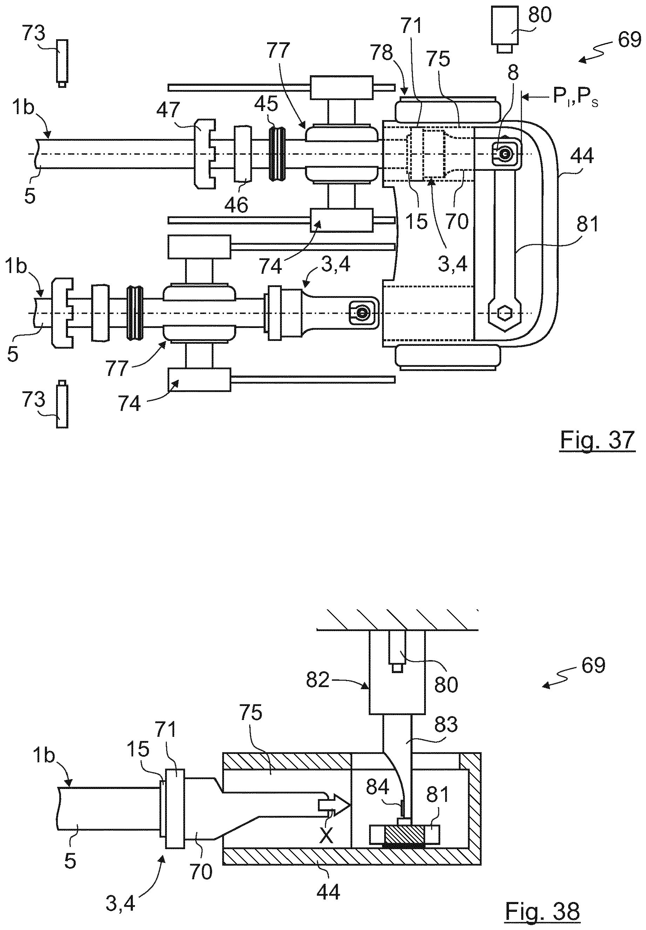

Die Figuren 38 bis 41 zeigen das Einpressen des Kabels 1b in das Steckverbindergehäuse 44 in einer Seitenansicht, wobei das Steckverbindergehäuse 44 geschnitten und stark vereinfacht dargestellt ist.

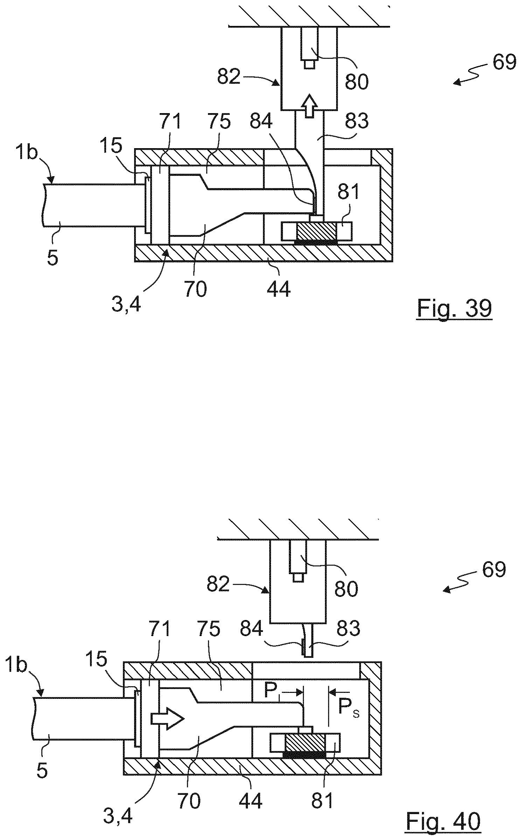

Das Steckverbindergehäuse 44 kann ein federgelagertes Rastmittel 81 aufweisen, um das Innenleiterkontaktelement 8 zu fixieren. Um die Montage des Kabels 1b in dem Steckverbinder 12 zu vereinfachen, kann eine Vorspanneinrichtung 82 vorgesehen sein, um das Rastmittel 81 innerhalb des Steckverbindergehäuses 44 orthogonal zu der Vorschubrichtung bzw. zu der Zustellrichtung X zunächst mechanisch vorzuspannen. Hierzu kann die Vorspanneinrichtung 82 beispielsweise einen ausfahrbaren Teleskopstößel 83 aufweisen, der das Rastmittel 81 aus dem Verschiebeweg des Innenleiterkontaktelements 8 entgegen einer Federkraft vorspannt. Um den Verschiebeweg nachfolgend für das Innenleiterkontaktelement 8 wieder freizugeben kann die Vorspanneinrichtung 82 bei Berührung mit dem Innenleiterkontaktelement 8 oder bei einer anstehenden Berührung mit dem Innenleiterkontaktelement 8 aus dem Verschiebeweg entfernt werden. Beispielhaft ist ein Tasterelement 84 dargestellt, das von dem Innenleiterkontaktelement 8 berührt werden kann und dadurch das Einfahren, beispielsweise auch ein mechanisches Einschnappen, des Teleskopstößels 83 auslöst (vgl. Figuren 39 und 40). Anschließend kann das Kabelende 3, 4 des Kabels 1b weiter in das Steckverbindergehäuse 44 eingepresst werden, bis das Innenleiterkontaktelement 8 seine Sollposition Ps in dem Steckverbindergehäuse 44 erreicht hat (vgl. Figur 41).

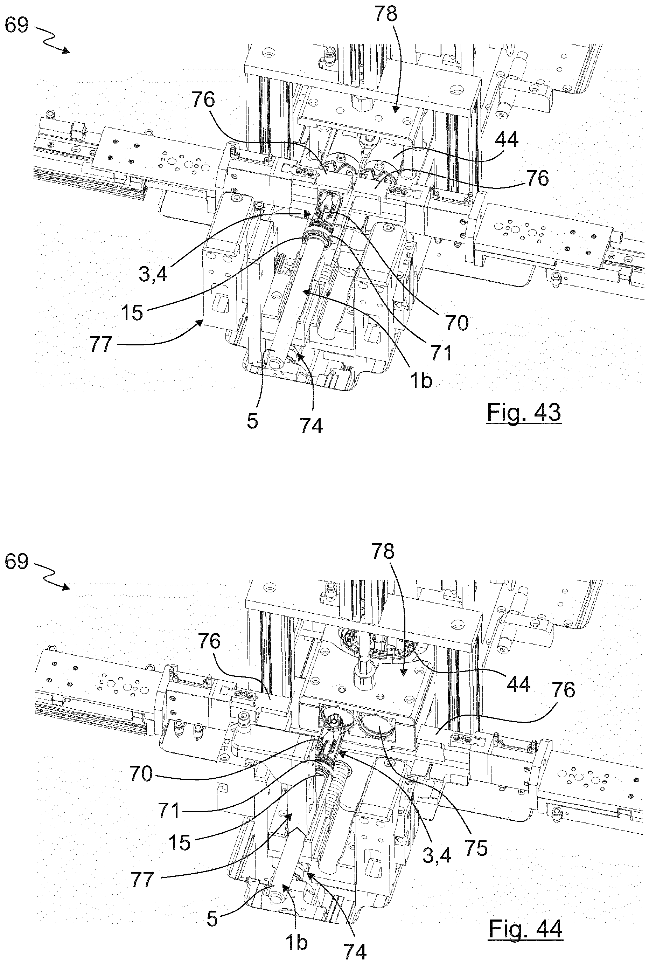

Die Figuren 42 bis 44 zeigen ein bevorzugtes Ausführungsbeispiel des Einpressmoduls 69. Figur 42 zeigt den Zustand während des Einlegens eines ersten Kabels 1b in das Einpressmodul 69. In Figur 43 ist ein Zustand des Einpressmoduls 69 gezeigt, bei dem das Kabel 1b mittels der Ausrichtungshilfe 76 in der Ausgangsposition P_{A} lagerichtig ausgerichtet wurde. In Figur 44 wurde das Kabel 1b von einer einzelnen Klemmbacke der Halteeinrichtung 77 fixiert, indem das Kabel 1b von der Klemmbacke gegen eine Auflage gepresst wird. Das Steckverbindergehäuse 44 wird in Figur 44 außerdem von einer Fixiereinrichtung 78 mit einer einzelnen Pressbacke in der Art eines ein Negativ des Steckverbindergehäuses 44 aufweisenden Tellers für das nachfolgende Einpressen fixiert.

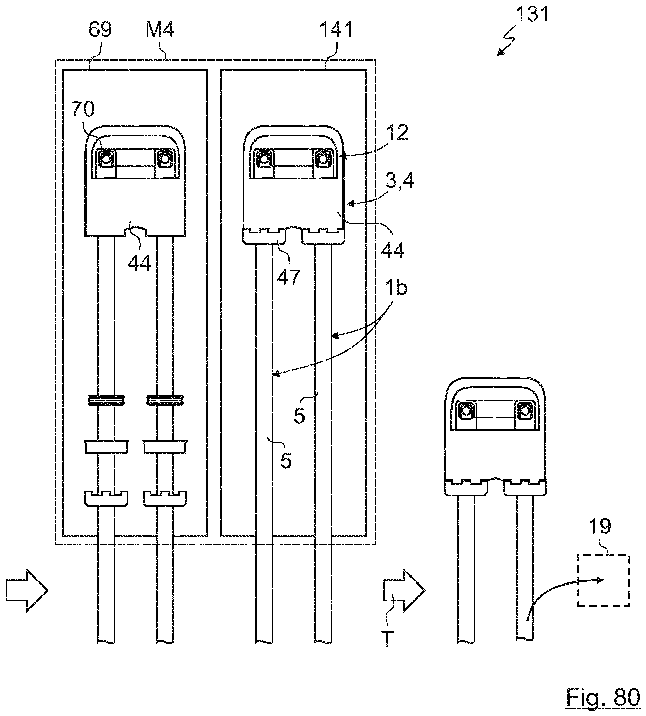

Figur 45 zeigt den beispielhaften, schematisiert dargestellten Steckverbinder 12 während seiner Endmontage (vgl. auch Figur 80). Im Rahmen der Endmontage nach dem Einpressen der Kabel 1b kann vorgesehen sein, die weiteren Steckverbinderkomponenten 45, 46, 47 zu montieren. Hierzu kann zunächst die Leitungsdichtung 45 in den jeweiligen Steckplatz 75 des Steckverbindergehäuses 44 eingeschoben und von der Kabelfesthaltung 46 fixiert werden. Anschließend kann die Haltekappe 47 von außen auf den Steckplatz 75 aufgebracht und fixiert werden.

Die Figuren 46 bis 52 zeigen eine vorteilhafte Zustelleinrichtung 54 für die Montage des elektrischen Steckverbinders 12 gemäß einer beispielhaften Ausführungsform während verschiedenen Verfahrensschritten.

Die Zustelleinrichtung 54 weist ein erstes Transportmodul 85 auf, um einen zu bearbeitenden Kabelabschnitt, insbesondere ein Kabelende 3, 4 wenigstens eines elektrischen Kabels 1a, 1b entlang einer Zustellrichtung X (vgl. Figur 46) in ein Bearbeitungsmodul zur Bearbeitung des Kabels 1a, 1b im Rahmen der Steckverbindermontage zuzustellen oder entgegen der Zustellrichtung X aus dem Bearbeitungsmodul hinauszubewegen. Beispielhaft ist als Bearbeitungsmodul das zuvor bereits beschriebene Einzelbestückungsmodul 59 als Black Box dargestellt; grundsätzlich kann die Zustelleinrichtung 54 aber zur Zustellung des Kabelendes 3, 4 in ein beliebiges Bearbeitungsmodul verwendet werden. Die Zustelleinrichtung 54 kann hierfür auch mehrfach vorhanden sein.

Die Zustelleinrichtung 54 weist ferner eine - vorzugsweise von dem ersten Transportmodul 85 unabhängiges, zweites Transportmodul 86 auf, das an einer in Zustellrichtung X von dem ersten Transportmodul 85 beabstandeten Position angeordnet ist. Auch das zweite Transportmodul 86 vermag das Kabelende 3, 4 entlang oder entgegen der Zustellrichtung X zu transportieren.

Das erste Transportmodul 95 weist an das Kabel 1a, 1b zustellbare Transporteinheiten 87 auf die derart umpositionierbar sind, dass auf dem Kabelende 3, 4 aufgebrachten Steckverbinderkomponenten 26, 44, 45, 46, 47 durch das erste Transportmodul 85 passieren können, während das zweite Transportmodul 86 den Transport des Kabels 1a, 1b durchführt. Das Prinzip wird im Folgenden noch verdeutlicht.

Figur 46 zeigt die Zustelleinrichtung 54 während des Einlegens des elektrischen Kabels 1a, 1b. Das Kabel 1a, 1b kann in das zweite Transportmodul 86 eingelegt (oder auf sonstige Weise eingeführt) werden, dessen Klemmkörper 88 hierfür zunächst geöffnet bzw. von der Mittelachse M des Kabels 1a, 1b ausreichend beabstandet sind.

Das Kabel 1a, 1b kann optional auf eine in Zustellrichtung X vor dem zweiten Transportmodul angeordnete erste Führungseinrichtung 89 zur Führung des Kabels 1a, 1b aufgelegt werden.

Nachdem das Kabel 1a, 1b in das zweite Transportmodul 86 eingelegt wurde kann vorgesehen sein, dass das zweite Transportmodul 86 seine Klemmkörper 88 in Richtung auf die Mittelachse M des Kabels 1a, 1b zustellt (vgl. Pfeile in Figur 46). Im Ausführungsbeispiel sind die Klemmkörper beispielhaft als Rollenkörper 88 ausgebildet, die das Kabel 1a, 1b tangential zwischeneinander zu führen vermögen.

Aus sicherheitstechnischen Gründen kann zunächst vorgesehen sein, dass das zweite Transportmodul 86 das Kabel 1a, 1b mittels der Klemmkörper bzw. Rollenkörper 88 lediglich mit einer für den Benutzer ungefährlichen Kraft fixiert, beispielsweise unter Verwendung einer oder mehrerer Federn. Erst wenn der Benutzer seine Hand oder ein Werkzeug aus einem definierten Gefahrenbereich entfernt hat, kann vorgesehen sein, dass das zweite Transportmodul 86 die Kraft der Klemmkörper bzw. Rollenkörper 88 auf das Kabel 1a, 1b erhöht, beispielsweise unter Verwendung einer pneumatischen oder hydraulischen Einheit.

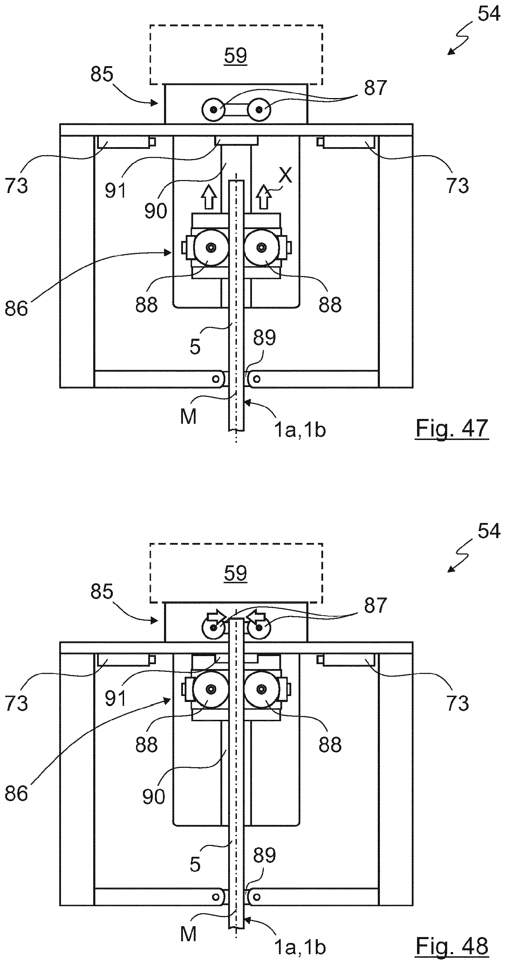

In Figur 47 ist dargestellt, wie das zweite Transportmodul 86 das Kabel 1a, 1b in Richtung auf das erste Transportmodul 85 transportiert. Das zweite Transportmodul 86 weist hierfür einen Linearantrieb auf, um das Kabel 1a, 1b entlang oder entgegen der Zustellrichtung X zu transportieren. Hierfür ist eine Führungsschiene 90 vorgesehen, entlang der das zweite Transportmodul 86 die Klemmkörper bzw. Rollenkörper 88 mit dem darin gehaltenen Kabel 1a, 1b linear in einem vorgegebenen Bereich in oder entgegen der Zustellrichtung X zu verfahren vermag. Die Rollenkörper 88 sind für die Zustellung des Kabels 1a, 1b durch das zweite Transportmodul 86 von einer Bremseinheit blockiert. Die Bremseinheit ist in den Figuren lediglich schematisch in der Art von seitlichen Bremsbacken gezeigt. Die Bremseinheit kann grundsätzlich aber beliebig realisiert sein und insbesondere auch unmittelbar an der Achse der Rollenkörper 88 angreifen.

Figur 48 zeigt die Übergabe des Kabels 1a, 1b an das erste Transportmodul 45 zum Weitertransport des Kabels 1a, 1b durch das erste Transportmodul 45. Das zweite Transportmodul 46 hat hierfür seinen Endanschlag erreicht (dies ist allerdings nicht zwingend der Fall). Das erste Transportmodul 45 weist in Richtung auf die Mittelachse M des Kabels 1a, 1b zustellbare Transporteinheiten 87 auf, die im Ausführungsbeispiel als Transportrollen 87 ausgebildet sind, die das Kabel 1a, 1b tangential zwischeneinander zu führen vermögen. Im Verfahrensschritt der Figur 48 werden die Transporteinheiten bzw. die Transportrollen 87 in Richtung auf die Mittelachse M des Kabels 1a, 1b zugestellt bzw. geschlossen (vgl. Pfeile in Figur 48).

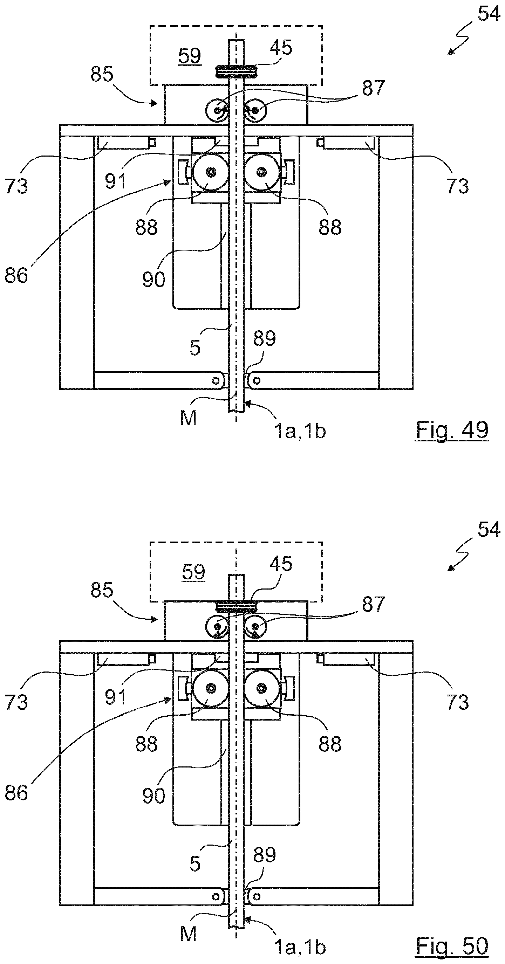

In Figur 49 ist dargestellt, wie das erste Transportmodul 45 das Kabel 1a, 1b in das Einzelbestückungsmodul 59 durch das Antreiben der Transportrollen 87 zustellt. Um dem ersten Transportmodul 85 die Zustellung des Kabels 1a, 1b zu ermöglichen ist vorgesehen, dass die Rollenkörper 88 des zweiten Transportmoduls 86 von der Bremseinheit von dem vorher blockierten Zustand frei drehbar freigegeben werden. Die Rollenkörper 88 des zweiten Transportmoduls 86 vermögen sich somit an dem Kabelmantel 5 des Kabels 1a, 1b frei abzurollen, während das erste Transportmodul 85 das Kabel 1a, 1b in das Einzelbestückungsmodul 59 zustellt. Nach diesem Prinzip kann wahlweise der Transport des Kabels 1a, 1b von dem ersten Transportmodul 85 oder von dem zweiten Transportmodul 86 übernommen werden. Das zweite Transportmodul 86 steht vorzugsweise in Zustellrichtung X still, während das erste Transportmodul 86 das Kabel 1a, 1b in das Einzelbestückungsmodul 59 zustellt.

Wie bereits erwähnt kann das Bearbeitungsmodul als beliebiges Bearbeitungsmodul im Rahmen einer Kabelkonfektionierung bzw. Steckverbindermontage ausgebildet sein. Vorzugsweise ist das Bearbeitungsmodul allerdings als Bestückungsmodul ausgebildet, insbesondere als Einzelbestückungsmodul 59, um das Kabelende 3, 4 ausgehend von einem vorderen, freien Ende für die Steckverbindermontage mit zumindest einer Steckverbinderkomponente 26, 44, 45, 46, 47 zu bestücken. Beispielhaft ist das Einzelbestückungsmodul 59 in den Figuren 46 bis 52 als Einzelbestückungsmodul 59 vorgesehen, um das Kabel 1a, 1b mit einer Leitungsdichtung 45 zu bestücken.

Um das Kabel 1a, 1b vorteilhaft abzustützen kann optional eine zweite Führungseinrichtung 91 zwischen dem ersten Transportmodul 85 und dem zweiten Transportmodul 86 vorgesehen sein.

Dadurch, dass das erste Transportmodul 85 in Zustellrichtung X näher an dem Bearbeitungsmodul bzw. an dem Einzelbestückungsmodul 59 angeordnet ist als das zweite Transportmodul 86, vorzugsweise unmittelbar an das Bearbeitungsmodul bzw. an das Einzelbestückungsmodul 59 angrenzend, kann das erste Transportmodul 85 eine vergleichsweise hohe Kraft und Präzision beim Einführen des Kabels 1a, 1b aufbringen. Ferner wird ein Abknicken oder Verbiegen des Kabels 1a, 1b während des Einführens in die Leitungsdichtung 45 (oder die sonstige Steckverbinderkomponente 26, 44, 46, 47) vermieden.

Nach der Bearbeitung, beispielsweise Bestückung des Kabelendes 3, 4 wird das Kabel 1a, 1b vorzugsweise wieder aus dem Bearbeitungsmodul bzw. aus dem Einzelbestückungsmodul 59 entnommen. Hierzu kann das erste Transportmodul 85 das Kabel 1a, 1b entgegen der Zustellrichtung X aus dem Einzelbestückungsmodul 59 hinausbewegen, wie in Figur 50 dargestellt. Hierbei kann es allerdings zu einer Kollision der Steckverbinderkomponenten 26, 44, 45, 46, 47 (oder sonstigen Komponenten) mit den Transportrollen 87 kommen, was es zu vermeiden gilt.

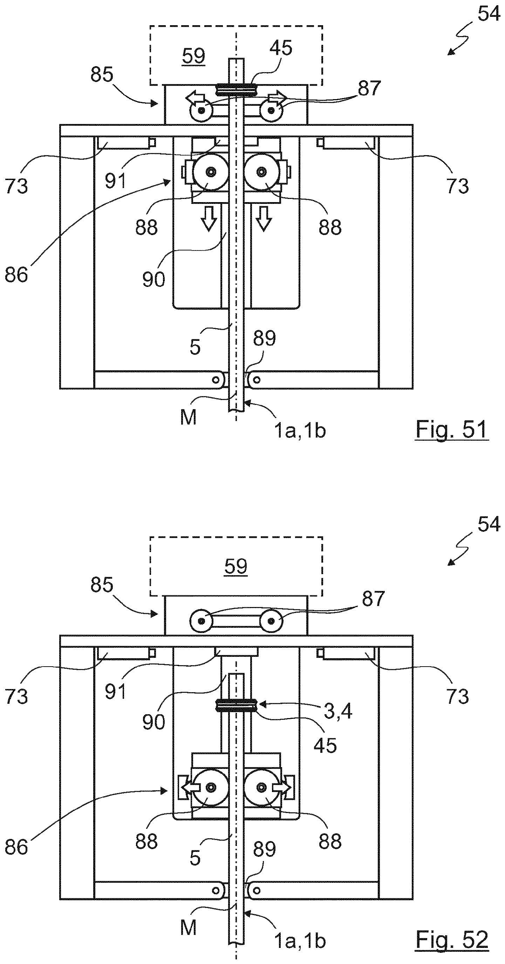

Wie in Figur 51 dargestellt kann vorgesehen sein, dass die Transporteinheiten 87 des ersten Transportmoduls 85 geöffnet werden, um auf dem zu Kabelmantel 5 des Kabels 1a, 1b aufgebrachte Steckverbinderkomponenten 26, 44, 45, 46, 47 (beispielsweise die dargestellte Leitungsdichtung 45) durch das erste Transportmodul 85 passieren zu lassen, während das zweite Transportmodul 86 den weiteren Transport des Kabels 1a, 1b durchführt. Die Klemmkörper 88 des zweiten Transportmoduls 86 können hierfür wieder mittels der Bremseinheit blockiert werden. Auf diese Weise kann das bestückte Kabel 1a, 1b durch das erste Transportmodul 85 hindurchbewegt werden, beispielsweise bis zum Erreichen der in Figur 52 dargestellten Endposition, in der die Klemmkörper 88 des zweiten Transportmoduls 86 optional wieder geöffnet werden können.

Optional kann eine Prüfeinrichtung 73 vorgesehen und eingerichtet sein, um während der Zustellung des Kabelendes 3, 4 in das Bearbeitungsmodul bzw. in das Einzelbestückungsmodul 59 oder während des Hinausbewegens des Kabelendes 3, 4 aus dem Einzelbestückungsmodul 59 eine korrekte Bearbeitung des Kabels 1a, 1b zu überprüfen oder um das Kabel 1a, 1b grundsätzlich auf Fehler in der Bearbeitung oder auf Materialfehler hin zu überprüfen. Beispielhaft sind zwei Kameras 73 gezeigt.

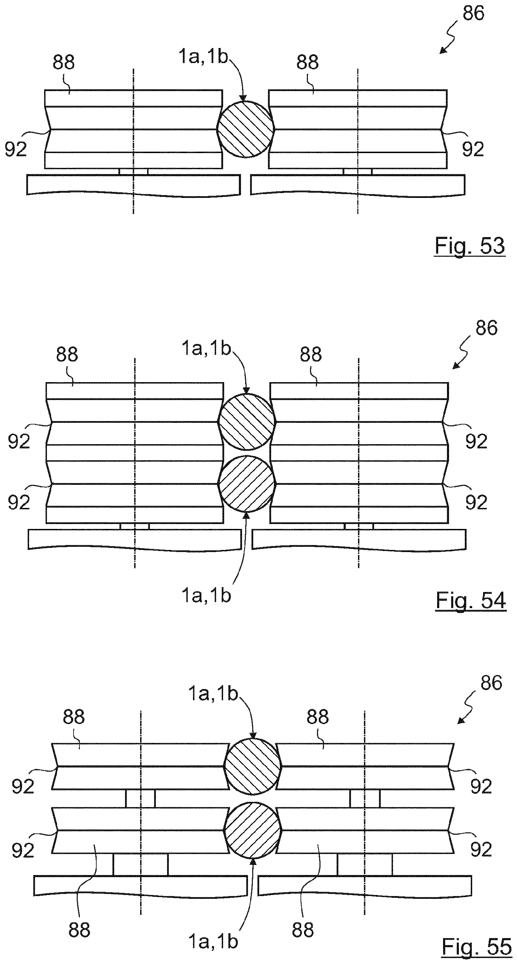

Die Figuren 53 bis 55 zeigen beispielhaft verschiedene Rollenkörper 88, die in dem zweiten Transportmodul 86 vorteilhaft verwendet werden können. Das Kabel 1a, 1b ist in den Figuren 53 bis 55 lediglich vereinfacht gezeigt.

Wie in den Figuren dargestellt können die Rollenkörper 88 entlang des Umfangs Einkerbungen 92 oder sogar ein Negativ des Kabelmantels 5 enthalten, um die Führung des Kabels 1a, 1b zu verbessern.

Die Zustelleinrichtung 54 eignet sich auch zur Montage eines mehrere elektrische Kabel 1a, 1b aufweisenden elektrischen Steckverbinders 12. In diesem Fall kann es erforderlich sein, dass die Transportmodule 85, 86 mehrere Kabel 1a, 1b, beispielsweise zwei Kabel 1a, 1b, zustellen.

Die Figuren 54 und 55 zeigen beispielhaft anhand des zweiten Transportmoduls 86 mögliche Ausgestaltungen der Rollenkörper 88 wenn mehr als ein Kabel 1a, 1b transportiert werden soll.

In Figur 54 weisen die beiden Rollenkörper 88 eine der Anzahl Kabel 1a, 1b entsprechende Anzahl Einkerbungen 92 auf, die entlang der Mittelachse der Rollenkörper 88 axial versetzt sind um einen definierten Abstand zwischen den beiden Kabeln 1a, 1b vorzugeben.

In Figur 55 werden hingegen zwei Rollenkörper 88 pro Kabel 1a, 1b verwendet. Eine geeignete Aktuatorik vorausgesetzt ist es damit beispielsweise auch möglich die Kabel 1a, 1b unabhängig voneinander zu transportieren.

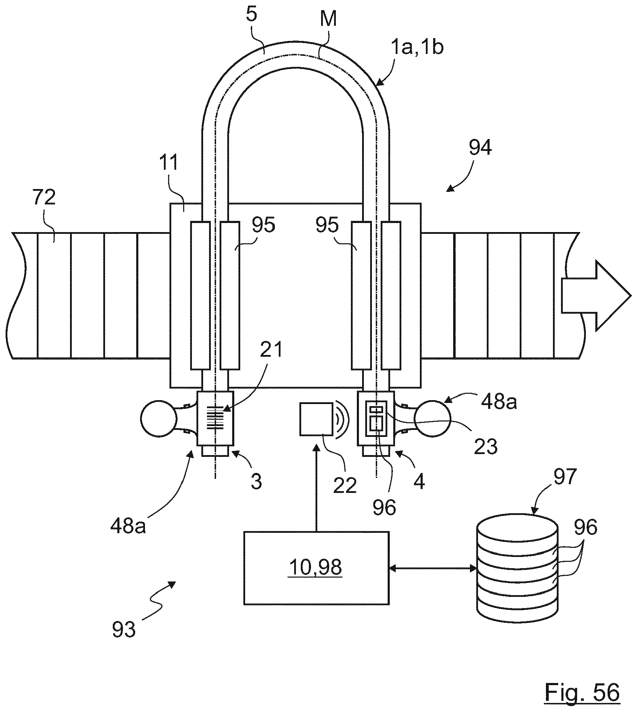

Figur 56 zeigt ein Dokumentationsmodul 93 für die erfindungsgemäße Steckverbindermontage.

Im Rahmen der Steckverbindermontage können in vorteilhafter Weise verschiedene Informationen in eine Dokumentation 96 der Bearbeitung des Kabels 1a, 1b aufgenommen werden. Beispielsweise können Informationen einer Prüfung auf Beschädigungsfreiheit einer Kabelkomponente des Kabels 1a, 1b (beispielsweise des Kabelmantels 5, des Kabelschirmgeflechts 6 oder der Isolation 2.2) berücksichtigt werden. Es kann ferner eine Prüfung auf Beschädigungsfreiheit einer Steckverbinderkomponente 26, 44, 45, 46, 47, 56 des auf dem Kabel 1a, 1b zu montierenden Steckverbinders 12 erfolgen, wobei die Ergebnisse der Prüfung schließlich in die Dokumentation 96 aufgenommen werden. Es kann auch eine Prüfung einer radialen Ausrichtung von Steckverbinderkomponenten 26, 44, 45, 46, 47, 56 erfolgen deren Ergebnisse wiederum in die Dokumentation 96 aufgenommen werden. Insbesondere kann auch das Ergebnis einer Prüfung auf das Vorhandensein bestimmter Steckverbinderkomponenten 26, 44, 45, 46, 47, 56 nach dem Bestücken des Kabelmantels 5, beispielsweise der Leitungsdichtung 45, im Rahmen der Dokumentation 96 von Vorteil sein.

Grundsätzlich können beliebige Prozessparameter der Bearbeitungsprozesse in die Dokumentation 96 aufgenommen werden.

Im Rahmen der Transporteinrichtung 72 kann ein Werkstückträgersystem 94 vorgesehen sein, das einen Werkstückträger 11 aufweist, auf dem das elektrische Kabel 1a, 1b befestigt ist. Das elektrische Kabel 1a, 1b kann dem Werkstückträger 11 somit während dessen Bearbeitung im Rahmen der gesamten Steckverbindermontage oder während eines Abschnitts der Steckverbindermontage zugeordnet sein.

Der Werkstückträger 11 weist Klemmeinheiten 95 auf, um das erste Kabelende 3 und/oder das zweite Kabelende 4 des Kabels 1a, 1b, im Ausführungsbeispiel beide Kabelenden 3, 4, zu fixieren. Im Ausführungsbeispiel ist das Kabel 1a, 1b derart in den Werkstückträger 11 eingespannt, dass sich ein U-förmiger Verlauf zwischen den beiden Kabelenden 3, 4 ausbildet. Grundsätzlich kann auch ein hiervon abweichender Verlauf vorgesehen sein, beispielsweise eine schneckenförmige Aufwicklung bei einem vergleichsweise langen Kabel 1a, 1b. Es kann auch vorgesehen sein, lediglich eines der beiden Kabelenden 3, 4 in den Werkstückträger 11 aufzunehmen. Auf die tatsächliche Ausgestaltung des Werkstückträgers 11 und auf die Art der Befestigung des Kabels 1a, 1b auf dem Werkstückträger 11 kommt es im Rahmen der Erfindung nicht an.

Um das Kabel 1a, 1b zu dessen Bearbeitung zu transportieren, ist der Werkstückträger 11 beispielhaft auf einer Transporteinrichtung 72 in der Art eines Förderbands montiert. Grundsätzlich kann das Kabel 1a, 1b aber auf beliebige Weise transportiert werden, worauf nachfolgend noch eingegangen wird.

Wie bereits im Zusammenhang mit Figur 6 erwähnt kann vorgesehen sein, dass das Kabel 1a, 1b und/oder der Werkstückträger 11 einen Informationsträger zur Identifizierung aufweist. Alternativ oder zusätzlich zu einem Informationsträger auf dem Kabel 1a, 1b oder auf dem Werkstückträger 11 kann auch vorgesehen sein, dass das Kabel 1a, 1b mittels wenigstens einer auf dem Kabelmantel 5 befestigten Mantelklemme 48a, 48b, 48c, 48d identifizierbar gemacht wird. Eine beispielhafte Mantelklemme 48a ist in Figur 56 an beiden Kabelenden 3, 4 des Kabels 1a, 1b befestigt. Die Mantelklemme 48a kann ebenfalls mit einem beliebigen Informationsträger versehen sein. Beispielhaft sind eine optische Markierung 21 (Strichcode) an der Mantelklemme 48a des ersten Kabelendes 3 und ein Transponder 23 (RFID) an der Mantelklemme 48a des zweiten Kabelendes 4 dargestellt. Grundsätzlich können verschiedene Arten von Mantelklemmen 48a, 48b, 48c, 48d vorgesehen sein, wie bereits ausgeführt.

Im Rahmen des Dokumentationsmoduls 93 kann vorgesehen sein, dass eine Dokumentation 96 der Steckverbindermontage bzw. der Bearbeitung des Kabels 1a, 1b für zumindest einen Bearbeitungsvorgang erstellt und dem Kabel 1a, 1b zugeordnet wird.

Hierzu kann beispielsweise ein eindeutiger Identifikator für das Kabel 1a, 1b in den Informationsträger eingeprägt werden und/oder ein auf dem Informationsträger bereits eingeprägter, eindeutiger Identifikator dem Kabel 1a, 1b temporär für dessen Konfektionierung zugeordnet werden.

Der Identifikator kann beispielsweise ein binärer, dezimaler oder hexadezimaler Zahlenwert oder eine Ziffernfolge sein. Der Identifikator kann beispielsweise in dem Strichcode oder einem sonstigen Code codiert bzw. eingeprägt sein. Der Identifikator kann auch in einem elektronischen Bauteil, beispielsweise einem Speicherbaustein, zum Beispiel in dem RFID-Transponder 23, eingeprägt bzw. gespeichert sein.

Beispielsweise kann auch vorgesehen sein, dass verschiedene Werkstückträger 11 bereits einen jeweiligen Informationsträger mit einem jeweils eindeutigen Identifikator aufweisen. Durch die Zuordnung des Kabels 1a, 1b an den Werkstückträger 11 während der Konfektionierung oder zumindest während eines Teilprozesses der Konfektionierung kann schließlich die Zuordnung der Dokumentation 96 erfolgen. Es kann beispielsweise aber auch vorgesehen sein, dass der Informationsträger für den zu dokumentierenden Konfektionierungsvorgang gezielt mit einem Identifikator zur Identifizierung des Kabels 1a, 1b versehen wird.

Es kann vorgesehen sein, dass die Dokumentation 96 zumindest teilweise in den Informationsträger eingeprägt wird. Dies kann insbesondere dann vorteilhaft sein, wenn es sich bei dem Informationsträger um einen elektronischen Informationsträger 23 handelt, auf dem ein ausreichender Speicherplatz zur Verfügung steht (in Figur 56 angedeutet). Es kann aber beispielsweise auch eine fortlaufende Ziffernfolge oder ein ähnlicher Code vorgesehen sein, um die Dokumentation 96 im Rahmen der Steckverbindermontage fortlaufend festzuhalten, beispielsweise in optischer Form auf dem Kabel 1a, 1b.

Beispielsweise kann ein Lese/Schreibgerät 22 und/oder einen Scanner zum Auslesen eines Strichcodes (oder eines sonstigen Codes) und/oder einen Laser 20 oder einen Drucker vorgesehen sein, um die Dokumentation 96 zu erweitern oder für die Kabelbearbeitung auszuwerten.

Vorzugsweise kann allerdings eine globale Datenbank 97 verwendet werden, in der im Rahmen der Konfektionierungs-Fertigungsstraße erstellte Dokumentationen 96 einzelnen Kabeln 1a, 1b zugeordnet werden können, vorzugsweise anhand des jeweiligen eindeutigen Identifikators. Die Adressierung in der Datenbank 97 kann somit in Abhängigkeit von dem Identifikator des jeweiligen Kabels 1a, 1b erfolgen.

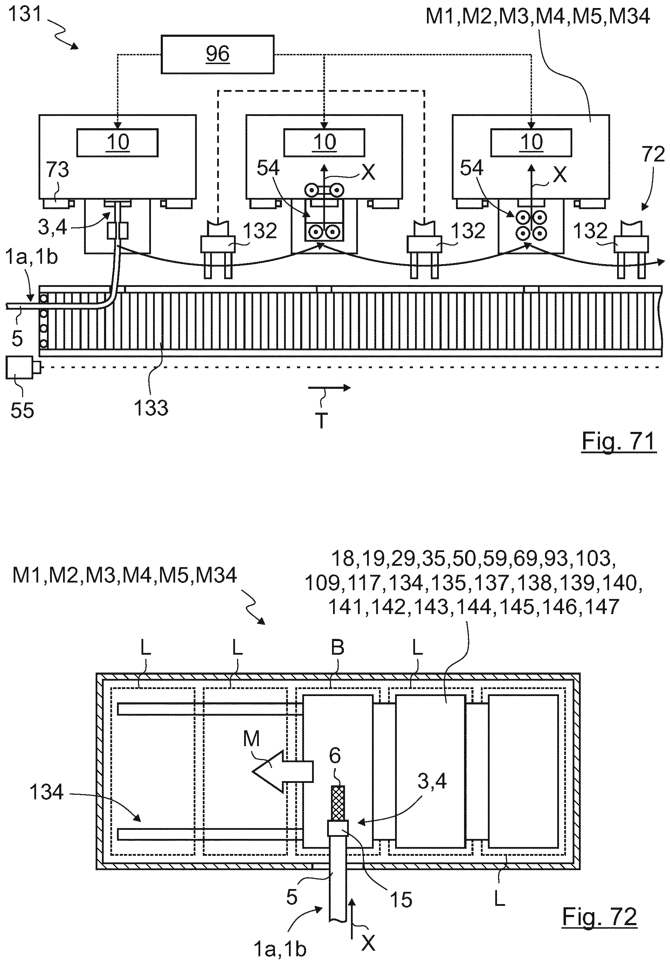

Das Dokumentationsmodul 93 kann eine Steuereinheit 10 aufweisen, um das beschriebene Dokumentationsverfahren durchzuführen. Es kann aber beispielsweise auch eine globale Steuereinrichtung 96 (vgl. Figur 71) oder eine sonstige Steuereinheit 10 zur Verwaltung der Dokumentation vorgesehen sein. Die Steuereinheit 10 kann beispielsweise mit den Einrichtungen zum Einprägen und/oder Auslesen und/oder Modifizieren des Informationsträgers kommunikationsverbunden sein (bezüglich des Lese/Schreibgeräts 22 angedeutet) und ferner mit der Datenbank 97 kommunikationsverbunden sein.

In die Dokumentation 96 können beispielsweise Informationen bezüglich eines erfolgreichen Bearbeitungsprozesses, eines fehlerhaften Bearbeitungsprozesses, eines fehlgeschlagenen Bearbeitungsprozesses und/oder wenigstens eines Prozessparameters des Bearbeitungsprozesses aufgenommen werden. Die Dokumentation 96 kann im Rahmen eines Qualitätsmanagements verwendet werden. Im Rahmen des Qualitätsmanagements kann beispielsweise vorgesehen sein, das Kabel 1a, 1b in Abhängigkeit der in der Dokumentation 96 enthaltenen Informationen zu sortieren oder für eine Nachbearbeitung freizugeben. Insbesondere ein Entfernen eines fehlerhaft bearbeiteten Kabels 1a, 1b im Rahmen der Kabelkonfektionierung kann im Rahmen des Qualitätsmanagements vorgesehen sein.

Die Informationen für die Dokumentation 96 können von der Steuereinheit 10 beispielsweise unter Verwendung einer Kommunikationsschnittstelle erfasst werden.

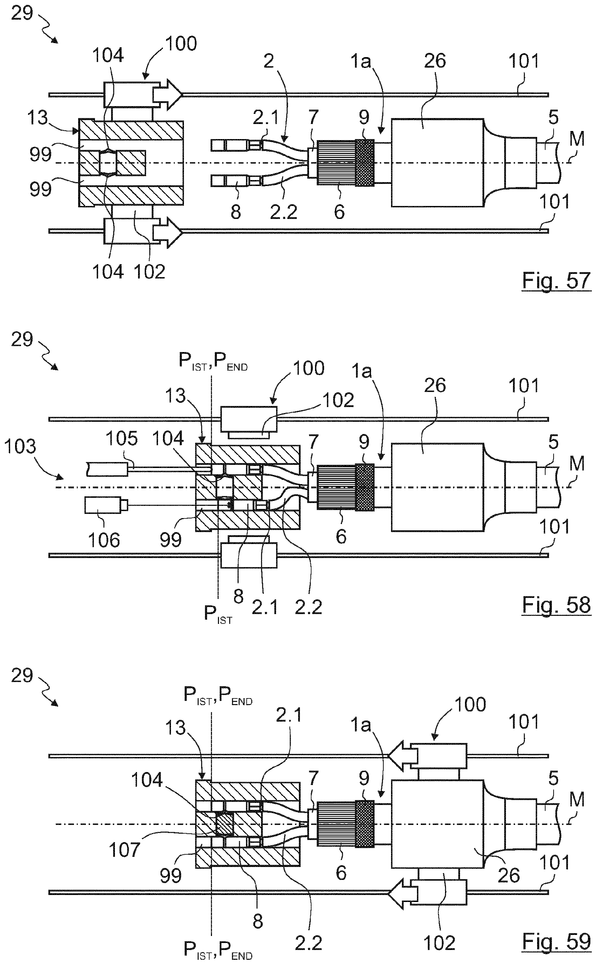

In den Figuren 57 bis 59 sind beispielhaft drei aufeinanderfolgende Montageschritte im Rahmen eines Montagemoduls 29 für eine erfindungsgemäße Steckverbindermontage dargestellt. Das Prinzip ist beispielhaft zusammen mit einem zweiadrigen, geschirmten elektrischen Kabel 1a dargestellt. Grundsätzlich eignet sich das Montagemodul 29 allerdings zur Verwendung mit beliebigen Kabeln 1a, 1b, insbesondere mit einer beliebigen Anzahl an Innenleitern 2. Die Darstellungen, insbesondere die Dimensionen und geometrischen Gestaltungen sind ebenfalls lediglich beispielhaft zu verstehen.

Das elektrische Kabel 1a, das ausgehend von Figur 57 beispielhaft bearbeitet wird, ist bereits teilweise vorkonfektioniert. Im Rahmen der vorhergehenden Bearbeitung wurden die Innenleiter 2 an ihren Enden freigelegt. An den jeweiligen Innenleitern 2 wurden anschließend die Innenleiterkontaktelemente 8 befestigt, insbesondere vercrimpt. Ferner wurde das Kabelschirmgeflecht 6 nach hinten über den Kabelmantel 5, vorzugsweise über die Stützhülse 15, umgeschlagen und mit dem Gewebeband 9 fixiert. Außerdem wurden bereits weitere Steckverbinderkomponenten 26, 44, 45, 46, 47 des Steckverbinders 12 (im Ausführungsbeispiel ist beispielhaft nur die Schirmhülse 26 dargestellt) auf das elektrische Kabel 1a aufgeschoben, um diese in nachfolgenden Schritten ausgehend von der Kabelseite montieren zu können.

In dem in Figur 57 dargestellten Verfahrensschritt werden die Innenleiterkontaktelemente 8 zunächst in einer jeweiligen Aufnahme 99 des Kontaktteileträgers 13 montiert. Der Kontaktteileträger 13 ist zur besseren Verdeutlichung in den Figuren 57 bis 59 geschnitten dargestellt.

Vor dem Einschieben der Innenleiterkontaktelemente 8 in die jeweiligen Aufnahmen 99 kann der Abstand der Innenleiterkontaktelemente 8 bzw. der Innenleiter 2 des elektrischen Kabels 1a zueinander an den Abstand der Aufnahmen 99 des Kontaktteileträgers 13 angepasst werden (sog. Pitchänderung). Zur Montage des Kontaktteileträgers 13 kann das nachfolgend noch näher beschriebene Montagemodul 29 optional eine Montageeinrichtung 100 aufweisen. Beispielhaft sind zwei auf jeweiligen Schienen 101 geführte, an den Kontaktteileträger 13 zustellbare Klemmbacken 102 dargestellt, um den Kontaktteileträger 13 entlang der Mittelachse M des elektrischen Kabels 1a über die Innenleiterkontaktelemente 8 zu schieben. Alternativ oder zusätzlich kann auch das elektrische Kabel 1a bewegt werden. Anstelle der Montageeinrichtung 100 kann auch die bereits erwähnte Zustelleinrichtung 54 zur Montage der Innenleiterkontaktelemente 8 in den Kontaktteileträger 13 verwendet werden.

Für eine vorteilhafte Montage des Kontaktteileträgers 13 auf den Innenleiterkontaktelemente 8 können beispielsweise auch Zentrierstifte vorgesehen sein, die durch eine vordere, einem späteren Gegensteckverbinder zugewandte Öffnung des Kontaktteileträgers 13 bzw. durch die Aufnahmen 99 hindurchgeführt werden und als Einfädelhilfe für die in der Regel hohlzylinderförmigen Innenleiterkontaktelemente 8 dienen (im Ausführungsbeispiel nicht dargestellt).

Figur 58 zeigt einen Verfahrensschritt im Rahmen der Steckverbindermontage, wonach eine axiale Istposition P_{IST} wenigstens eines auf einem Innenleiter 2 des elektrischen Kabels 1a befestigten Innenleiterkontaktelements 8 innerhalb des Kontaktteileträgers 13 relativ zu einer vorgesehenen axialen Endposition P_{END} von einem Sensormodul 103 überprüft wird. Das Sensormodul 103 kann Teil des Montagemoduls 29 sein. Das Sensormodul 103 kann allerdings auch von dem Montagemodul 29 unabhängig sein. Die Innenleiterkontaktelemente 8 sind zu dem in Figur 58 gezeigten Montagezeitpunkt bereits in den Kontaktteileträger 13 eingeführt. Beispielhaft ist das in Figur 58 oben dargestellte Innenleiterkontaktelemente 8 in seiner Endposition P_{END} dargestellt und das in Figur 58 unten dargestellte Innenleiterkontaktelement 8 noch nicht ausreichend in die Aufnahme 99 des Kontaktteileträgers 13 eingeschoben.

Im Ausführungsbeispiel entspricht die axiale Endposition P_{END} der Position des vorderen, freien Endes des Innenleiterkontaktelements 8, wenn das Innenleiterkontaktelement 8 mit einer Primärverrastung 104 vollständig verrastet ist.

Im Falle des sich in seiner axialen Endposition P_{END} befindenden Innenleiterkontaktelements 8 ist die rein beispielhaft angedeutete Primärverrastung 104 des Kontaktteileträgers 13 mit einer komplementären Nut des Innenleiterkontaktelements 8 verrastet. Grundsätzlich kann eine beliebige Rastverbindung zwischen der Primärverrastung 104 und den Innenleiterkontaktelementen 8 vorgesehen sein.

Das Sensormodul 103 ist eingerichtet um die axiale Istposition P_{IST} des wenigstens einen Innenleiterkontaktelements 8 innerhalb des Kontaktteileträgers 13 relativ zu der vorgesehenen axialen Endposition P_{END} zu erfassen. Beispielhaft sind in Figur 58 verschiedene Sensoren des Sensormoduls 103 kombiniert dargestellt.

Beispielsweise kann vorgesehen sein, dass das Sensormodul 103 eingerichtet ist, um die Position eines vorderen, freien Endes des wenigstens einen Innenleiterkontaktelements 8 innerhalb des Kontaktteileträgers 13 zu erfassen.

Das Sensormodul 103 kann beispielsweise einen taktilen Sensor aufweisen, vorzugsweise einen Messtaster 105 oder einen Kraftaufnehmer, der durch die vordere Öffnung bzw. eine Aufnahme 99 des Kontaktteileträgers 13 einführbar ist. Beispielhaft ist ein Messtaster 105 dargestellt, um die Istposition P_{IST} einer vorderen Stirnfläche des oberen Innenleiterkontaktelements 8 zu erfassen. Anstelle des Messtasters 105 kann in ähnlicher Weise aber auch ein Kraftaufnehmer vorgesehen sein, um die Istposition P_{IST} durch eine Druck- oder Zugprüfung zu überprüfen, insbesondere um festzustellen, ob das wenigstens eine Innenleiterkontaktelement 8 durch die Primärverrastung 104 verrastet ist. Auf diese Weise kann in der Regel zwar nicht die exakte relative Position des Innenleiterkontaktelements 8 erfasst, jedoch festgestellt werden, ob die Istposition P_{IST} der vorgesehenen axialen Endposition P_{END} entspricht.

Für eine berührungslose Erfassung der Istposition P_{IST} des Innenleiterkontaktelements 8 innerhalb des Kontaktteileträgers 13 kann beispielsweise auch ein optischer Sensor vorgesehen sein. Beispielhaft ist in Figur 58 ein Lasersystem 106 zur Abstandsmessung dargestellt. Eine Kamera kann gegebenenfalls aber bereits ausreichend sein. Ferner kann für eine berührungslose Erfassung der Istposition P_{IST} beispielsweise auch ein induktiver Sensor oder kapazitiver Sensor vorgesehen sein, der die Istposition P_{IST} des Innenleiterkontaktelements 8 vorzugsweise durch den Kontaktteileträger 13 hindurch erfasst.

Insofern das Sensormodul 103 eine Übereinstimmung der Istposition P_{IST} mit der vorgesehenen Endposition P_{END} erfasst hat, kann vorgesehen sein, die Steckverbindermontage fortzusetzen. Alternativ kann eine Nachbesserung oder ein Ausschluss des elektrischen Kabels 1a vorgesehen sein.

Nachdem eine Übereinstimmung zwischen Istposition P_{IST} und Endposition P_{END} festgestellt wurde, kann vorgesehen sein, dass eine Sekundärsicherung 107 zur Sicherung der Primärverrastung 104 betätigt wird. Eine Sekundärsicherung 107 kann als Blockierelement ausgebildet sein, das sich in seinem Sicherungszustand im Verschiebeweg der Primärverrastung 104 befindet und ein Öffnen der Primärverrastung 104 formschlüssig verhindern kann. Eine beispielhafte Sekundärsicherung 107 bzw. ein beispielhaftes Blockierelement ist in Figur 59 dargestellt.

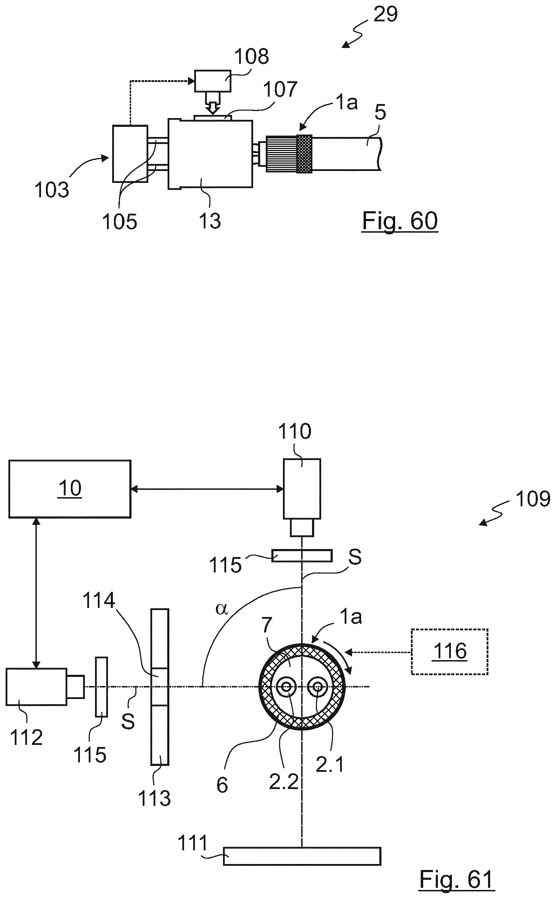

Zur Betätigung der Sekundärsicherung 107 kann das Montagemodul 29 optional ein Betätigungsmittel 108 aufweisen (vgl. Figur 60), das mit dem Sensormodul 103 über einen Signalpfad verbunden und eingerichtet sein kann, um die Sekundärsicherung 107 zu betätigen, wenn das Betätigungsmittel 108 ein Betätigungssignal des Sensormoduls 103 empfängt. Das Betätigungsmittel 108 kann beispielsweise, wie in Figur 60 dargestellt, linear verstellbar sein, um das Betätigungsmittel 108 in den Kontaktteileträger 13 einzuschieben. Das Sensormodul 103 der Figur 60 ist beispielhaft ausgebildet, um die axiale Istposition P_{IST} beider Innenleiterkontaktelemente 8 separat mittels zweier Messtaster 105 zu erfassen.

In Figur 61 ist ein Qualitätsüberwachungsmodul 109 zur Qualitätsüberwachung der erfindungsgemäßen Steckverbindermontage dargestellt. Unter Verwendung des dargestellten Qualitätsüberwachungsmoduls 109 kann der Zustand zumindest eines der beiden Kabelenden 3, 4 des Kabels 1a, 1b vor und/oder nach zumindest einem Bearbeitungsvorgang erfasst werden.

Dabei ist vorgesehen, dass die Sichtlinie S eines ersten optischen Sensors 110 auf das Kabelende 3, 4 ausgerichtet wird, wobei eine erste Beleuchtungseinheit 111 entlang der Sichtlinie S des ersten Sensors 110 hinter dem Kabelende 3, 4 angeordnet wird, um für die optische Erfassung des Kabelendes 3, 4 Durchlicht bzw. Gegenlicht zu erzeugen.

Ferner ist die Sichtlinie S eines zweiten optischen Sensors 112 ebenfalls auf das Kabelende 3, 4 ausgerichtet, wobei eine zweite Beleuchtungseinheit 113 entlang der Sichtlinie S des zweiten Sensors 112 vor dem Kabelende 3, 4 angeordnet wird, um für die optische Erfassung des Kabelendes 3, 4 Auflicht zu erzeugen. Der erste Sensor 110 und der zweite Sensor 112 sind jeweils als Kamera mit einem jeweiligen Objektiv ausgebildet.

Zur Beleuchtung des Kabelendes 3, 4 weisen die Beleuchtungseinheiten 111, 113 jeweils Leuchtmittel auf (nicht näher dargestellt). Die Leuchtmittel können beispielsweise in einer Reihenanordnung und/oder in einer Spaltenanordnung angeordnet sein. Grundsätzlich kann auch lediglich ein einziges Leuchtmittel vorgesehen sein, um ausgehend von der jeweiligen Beleuchtungseinheit 111, 113 Licht auszusenden.

Um die Sicht des zweiten Sensors 112 auf das Kabelende 3, 4 nicht zu blockieren, weist die zweite Beleuchtungseinheit 113 eine zentrale Ausnehmung 114 auf. Die erste Beleuchtungseinheit 111 und die zweite Beleuchtungseinheit 113 sind jeweils koaxial zu den Sichtlinien S der optischen Sensoren 110, 112 angeordnet. Grundsätzlich kann allerdings auch eine versetzte Anordnung vorgesehen sein. Der zweite Sensor 112 ist um einen definierten Winkel α zu dem ersten Sensor 110 versetzt angeordnet. Grundsätzlich kann der Winkel α beliebig sein. Vorzugsweise kann ein Versatz von 10° bis 170°, besonders bevorzugt von 45° bis 135°, weiter bevorzugt von 80° bis 100° und ganz besonders bevorzugt von 90° vorgesehen sein. Vorzugsweise sind die Sichtlinien S der Sensoren 110, 112 orthogonal zu der Mittelachse M des Kabels 1a, 1b ausgerichtet. Es kann allerdings auch eine verkippte Ausrichtung vorgesehen sein.

Es kann vorgesehen sein, dass die erste Beleuchtungseinheit 111 Licht in einer ersten Lichtfarbe und/oder in einer ersten Lichtpolarisation aussendet, das überwiegend bis ausschließlich von dem ersten Sensor 110 wahrnehmbar ist und überwiegend nicht bis nicht von dem zweiten Sensor 112 wahrnehmbar ist. Entsprechend kann die zweite Beleuchtungseinheit 113 ausgebildet sein, Licht in einer zweiten Lichtfarbe und/oder in einer zweiten Lichtpolarisation auszusenden, das überwiegend bis ausschließlich von dem zweiten Sensor 112 wahrnehmbar ist und überwiegend nicht bis nicht von dem ersten Sensor 110 wahrnehmbar ist.

Hierdurch kann gewährleistet sein, dass eine Messung mittels des ersten Sensors 110 eine Messung des zweiten Sensors 112 nicht negativ beeinflusst - und umgekehrt. Beispielsweise können entsprechende optische Filter 115 vorgesehen sein, um die Lichtfarbe und/oder Lichtpolarisation der dem jeweiligen anderen Sensor zugeordneten Beleuchtungseinheit 111, 113 herauszufiltern.

Es kann grundsätzlich auch eine zeitlich versetzte Messung der Sensoren 110, 112 durchgeführt werden, wobei die erste Beleuchtungseinheit 111 das Kabelende 3, 4 dann vorzugsweise nur in einem Zeitintervall beleuchtet, in dem der erste Sensor 110 die Messung durchführt und wobei die zweite Beleuchtungseinheit 113 das Kabelende 3, 4 vorzugsweise nur in einem Zeitintervall beleuchtet, in dem der zweite Sensor 112 die Messung durchführt.

Eine Steuereinheit 10 oder die Steuereinrichtung 98 kann die Messungen bzw. die Sensoren 110, 112 und die Beleuchtungseinheiten 111, 113 entsprechend ansteuern. Die in Figur 61 beispielhaft dargestellte Steuereinheit 10 kann grundsätzlich auch zur Auswertung des Zustands des Kabelendes 3, 4 auf Basis der mittels des Qualitätsüberwachungsmoduls 109 erfassten Daten verwendet werden.

Es kann ferner vorgesehen sein, die Sensoren 110, 112 radial um die Mittelachse M des Kabels 1a, 1b herum zu drehen und/oder das Kabel 1a, 1b um seine Mittelachse M zu drehen, während die Sensoren 110, 112 Einzelbilder und/oder Videoinformationen erfassen. Vorzugsweise können die Beleuchtungseinheiten 111, 113 synchron zu den ihnen zugeordneten Sensoren 110, 112 gedreht werden, beispielsweise wenn diese auf einem gemeinsamen Rahmen mit ihrem zugeordneten Sensor 110, 112 angeordnet sind und/oder wenn das elektrische Kabel 1a, 1b gedreht wird. Zur Durchführung der Drehbewegung kann eine Rotationseinrichtung 116 vorgesehen sein, die beispielhaft in Figur 61 als Blackbox angedeutet ist. Die Rotationseinrichtung 116 kann vorzugsweise einen Servomotor aufweisen oder als Servomotor ausgebildet sein.

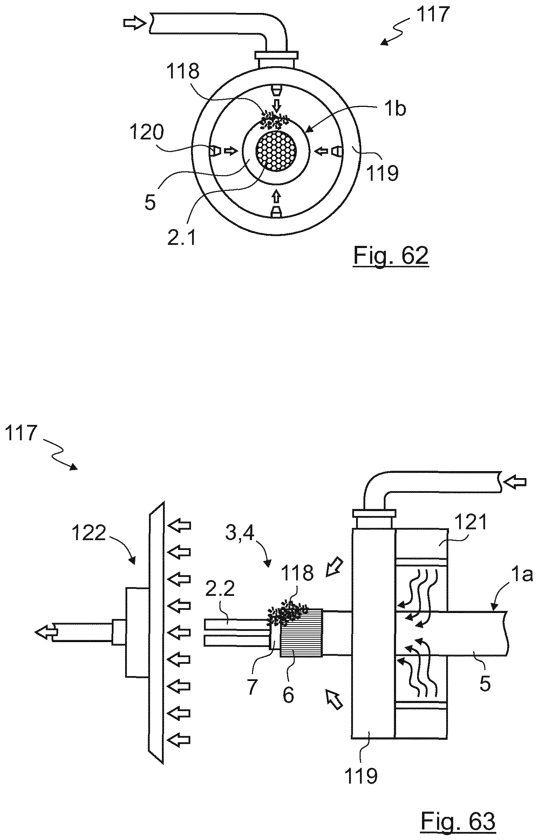

Die nachfolgenden Figuren 62 bis 70 zeigen vorteilhafte Ausführungsformen eines Reinigungsmoduls 117 zur Reinigung des Kabels 1a, 1b, insbesondere des Kabelendes 3, 4 des Kabels 1a, 1b im Rahmen einer erfindungsgemäßen Steckverbindermontage. Grundsätzlich kann vorgesehen sein, dass nach wenigstens einem mechanischen Bearbeitungsvorgang des Kabelendes 3, 4 ein Reinigungsprozess durchlaufen wird, wonach an dem Kabelende 3, 4 anhaftende Partikel 118 entfernt werden.

Die Partikel 118 können auch von einer Abfall- und/oder Partikelüberwachung untersucht werden, um den Bearbeitungserfolg eines Bearbeitungsvorgangs indirekt durch einen Abgleich des im Rahmen des Bearbeitungsprozesses angefallenen Abfalls bzw. der angefallenen Partikel 118 mit einer zu erwartenden Abfall- bzw. Partikelmenge und/oder einer zu erwartenden Abfall- bzw. Partikelart feststellen zu können.

Beispielsweise kann ein Abblasen der Partikel im Rahmen des Reinigungsmoduls 117 vorgesehen sein, wie beispielsweise in den Figuren 62 bis 65 und 70 angedeutet.

In Figur 62 ist beispielhaft die Verwendung einer Ringdüse 119 zum Abblasen der Partikel 118 von dem elektrischen Kabel 1a, 1b dargestellt. Die Ringdüse 119 weist einen Kanal zur Zuführung von Druckluft und mehrere, beispielsweise vier, Einzeldüsen 120 zum Austreten der Druckluft auf. Grundsätzlich kann auch eine Ringdüse 119 mit nur einer, zwei, drei oder auch mehr als vier Einzeldüsen 120 vorgesehen sein. Es kann auch vorgesehen sein, dass die Ringdüse 119 einen radial teilweise oder vollständig umlaufenden Ringspalt zum Austritt der Druckluft aufweist.

Es kann vorgesehen sein, das elektrische Kabel 1a, 1b und/oder die Ringdüse 119 für die Bearbeitung bzw. für das Abblasen axial relativ zueinander zu bewegen und/oder zu drehen.

In Figur 63 ist die Verwendung einer Ringdüse 119 in einer Seitenansicht dargestellt, wobei die Ringdüse 119 mit einem lonisator 121 erweitert wurde, um dem Kabelende 3, 4 ionisierte Luft zuzuführen. Hierdurch kann die elektrostatische Anziehung der Partikel 118 verringert und die Partikel 118 leichter abgeblasen werden. Der lonisator 121 kann vor, hinter oder neben der Ringdüse 119 angeordnet sein.

Ergänzend ist in Figur 63 eine Absaugeinrichtung 122 dargestellt, wobei die Partikel 118 von der Ringdüse 119 zielgerichtet auf die Absaugeinrichtung 122 abgeblasen werden, um die abgeblasenen Partikel 118 aufzufangen. Alternativ oder zusätzlich kann im Rahmen des Abblasens auch vorgesehen sein, die Partikel 118 zielgerichtet auf einen Auffangbehälter und/oder eine Filtereinheit abzublasen.

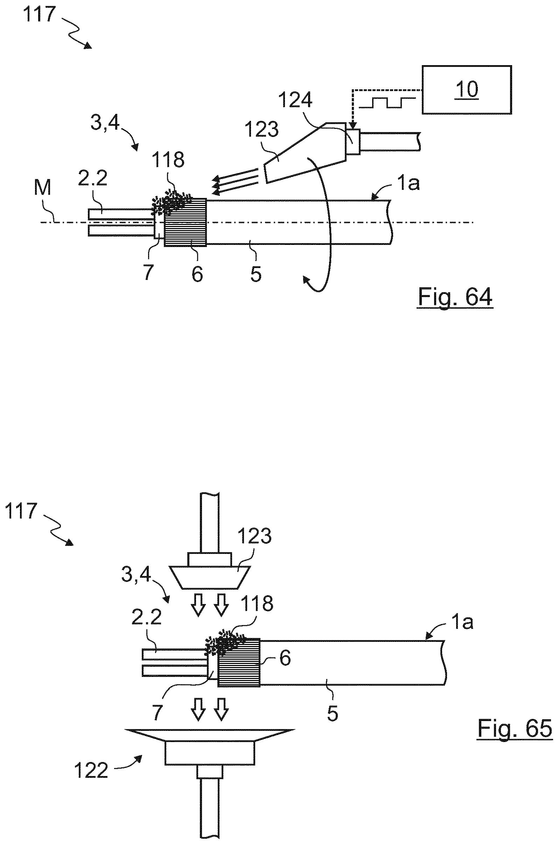

Figur 64 zeigt die Verwendung eines Reinigungsmoduls 117 mit einer flachen Düse 123, um Partikel 118 noch zielgerichteter abblasen zu können. Dabei kann vorgesehen sein, die Düse 123 um das Kabel 1a, 1b herum zu drehen oder das Kabel 1a, 1b entlang seiner Mittelachse M zu drehen.

Um den Bearbeitungserfolg, insbesondere im Rahmen des Abblasens, noch zu verbessern, kann vorgesehen sein, dass der im Rahmen des Reinigungsprozesses erzeugte Luftstrom impulsgesteuert wird. Das Prinzip ist ebenfalls beispielhaft in Figur 64 dargestellt. Beispielsweise kann die Steuereinheit 10 des Reinigungsmoduls 117 ein Magnetventil 124 der Düse 123 über eine Signalverbindung entsprechend ansteuern, wie angedeutet. Durch den pulsierenden Luftstrom können sich die Partikel 118, beispielsweise aufgrund von Verwirbelungen, von dem elektrischen Kabel 1a, 1b leichter lösen.

Es kann auch vorgesehen sein, dass der Reinigungsprozess einen Druckluftstrahlprozess, insbesondere einen Trockeneisstrahlprozess oder einen COz-Strahlprozess umfasst. Hierzu kann beispielsweise eine Düse 123 in der Art von Figur 64 vorgesehen sein.

Figur 65 zeigt ein weiteres beispielhaftes Reinigungsmodul 117. Das in Figur 65 dargestellte Reinigungsmodul 117 zeigt eine Kombination aus einer Düse 123 zum Abblasen und einer Absaugeinrichtung 122 zum Absaugen der Partikel 118. Die Absaugeinrichtung 122 ist der Düse 123 gegenüberliegend angeordnet, wobei das Kabel 1a, 1b zwischen Düse 123 und Absaugeinrichtung 122 angeordnet ist. Unter anderem auch bei dieser Variante kann vorgesehen sein, das elektrische Kabel 1a, 1b und/oder das Reinigungsmodul 117 zu drehen, um das elektrische Kabel 1a, 1b vollumfänglich von den Partikeln 118 zu befreien.

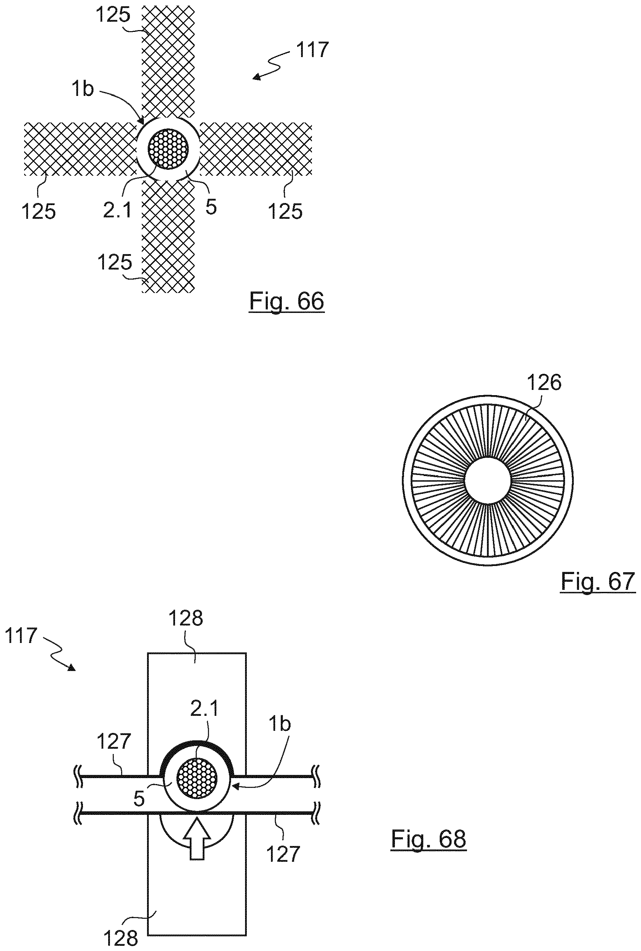

Figur 66 zeigt ein Reinigungsmodul 117, bei dem die Partikel 118 von dem elektrischen Kabel 1a, 1b abgebürstet werden. Das Reinigungsmodul 117 weist vier angetriebene Bürsten 125 auf, die entlang des Umfangs des elektrischen Kabels 1a, 1b verteilt sind. Grundsätzlich kann das Reinigungsmodul 117 aber auch nur eine Bürste 125, zwei Bürsten 125, drei Bürsten 125 oder aber auch mehr als vier Bürsten 125 aufweisen. Gegebenenfalls kann das Kabel 1a, 1b oder können die Bürsten 125 während der Bearbeitung radial um die Mittelachse M des Kabels 1a, 1b gedreht werden.

Eine weitere Variante zum Abbürsten ist in Figur 67 dargestellt. Figur 67 zeigt eine Spiralbürste 126, durch die das elektrische Kabel 1a, 1b zum Bürsten axial hindurchführbar ist. Die Spiralbürste 126 und/oder das Kabel 1a, 1b können optional auch gedreht werden.

Alternativ oder zusätzlich zu einem Abbürsten kann auch ein Abwischen der Partikel 118, beispielsweise mittels eines Tuchs, vorgesehen sein (in den Figuren nicht dargestellt). Ferner kann vorgesehen sein, die Partikel 118 abzuwaschen, insbesondere mit einer nicht korrosiven Flüssigkeit. Ferner kann vorgesehen sein, einen oder mehrere Magnete zum Entfernen von Partikeln 118 zu verwenden, auf die ein Magnet eine magnetische Wirkung entfalten kann.

Figur 68 zeigt ein weiteres Reinigungsmodul 117, bei dem der Reinigungsprozess mittels eines Adhäsionsverfahrens durchgeführt wird, wonach die Partikel 118 mittels einer Folie 127 oder einem Klebestreifen entfernt werden. Hierzu kann eine entsprechende Folie 127 beispielsweise mittels einer oder mehrerer Halbschalen 128 an das elektrische Kabel 1a, 1b zugestellt werden. Im Ausführungsbeispiel sind zwei Halbschalen 128 an das elektrische Kabel 1a, 1b radial zustellbar. In Figur 68 ist die obere Halbschale 128 an das elektrische Kabel 1a, 1b zugestellt und die untere Halbschale 128 noch nicht an das elektrische Kabel 1a, 1b zugestellt. Während der Zustellung kann sich die Folie 127 an das elektrische Kabel 1a, 1b anlegen. Im Anschluss an die Bearbeitung kann die Folie 127 ausgetauscht oder gereinigt werden. Es kann von Vorteil sein, die Halbschalen 128 nacheinander zuzustellen oder derart zuzustellen, dass sich die Folien 127 in der Mitte nicht berühren, da diese sonst gegebenenfalls aneinander haften.

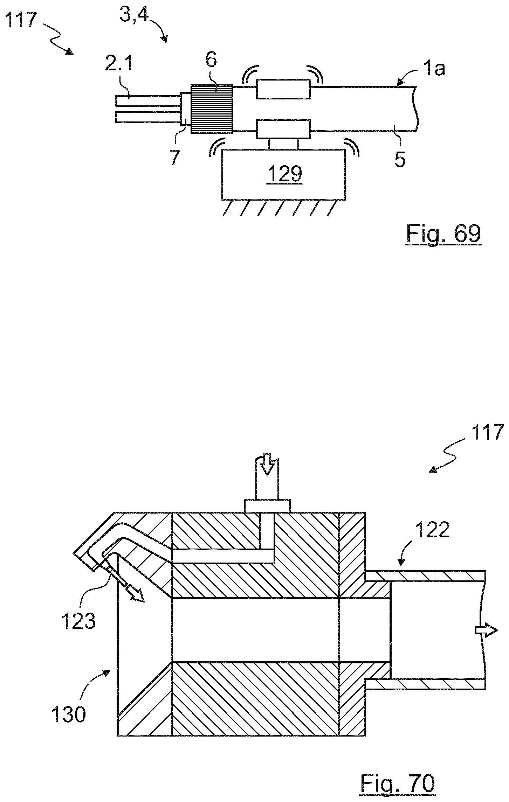

Figur 69 zeigt ein Reinigungsmodul 117, bei dem das Kabelende 3, 4 während des Reinigungsprozesses definierten Vibrationen ausgesetzt wird, um die Partikel 118 zu lockern. Hierfür ist ein Rüttler 129 vorgesehen, der mittels einer Greifeinrichtung an einem elektrischen Kabel 1a, 1b befestigt ist.

Wie eingangs bereits erwähnt, können die einzelnen Varianten nahezu beliebig miteinander kombiniert werden.

Figur 70 zeigt ein Beispiel eines Reinigungsmoduls 117, bei dem ein Abblasen mittels einer einzelnen Düse 123 und einer Absaugeinrichtung 122 vorteilhaft kombiniert wurden. Das elektrische Kabel 1a, 1b kann in eine entsprechende Aufnahme 130 des Reinigungsmoduls 117 axial eingeführt werden (und/oder das Reinigungsmodul 117 wird über das Kabel 1a, 1b geschoben). Die Partikel 118 können dabei durch die Düse 123 in Richtung der Absaugeinrichtung 122 abgeblasen werden. Anschließend kann das elektrische Kabel 1a, 1b wieder aus der Aufnahme 130 herausgeführt werden. Während der Bearbeitung kann das Kabel 1a, 1b und/oder das Reinigungsmodul 117 gedreht werden.

Das in Figur 70 dargestellte Reinigungsmodul 117 kann vorteilhaft mit weiteren der vorstehend genannten Varianten kombiniert bzw. ergänzt werden. Insbesondere können ebenfalls ein Rüttler 129 und/oder ein lonisator 121 vorgesehen sein. Der Aufnahme 130 kann zum Beispiel auch eine oder mehrere Bürsten 125 vorgelagert sein.

Figur 71 zeigt eine erfindungsgemäße Vorrichtung 131 zur Montage eines elektrischen Steckverbinders 12 auf einem ersten Kabelende 3 und/oder auf einem zweiten Kabelende 4 eines einen oder mehrere Innenleiter 2 aufweisenden elektrischen Kabels 1a, 1b. Die Vorrichtung 131 ist lediglich stark schematisiert und beispielhaft dargestellt.

Die Vorrichtung 131 weist exemplarisch drei Modulgruppen M1, M2, M3, M4, M5, M34 auf, die in Figur 71 zunächst jeweils nur als Black Box gezeigt sind. Die Modulgruppen M1, M2, M3, M4, M5, M34 weisen jeweils wenigstens zwei Bearbeitungsmodule zur Bearbeitung des Kabel 1a, 1b auf, worauf nachfolgend noch näher eingegangen wird.

Die Vorrichtung 131 weist weiter eine Zustelleinrichtung 54 auf um das Kabelende 3, 4 entlang der Zustellrichtung X in die Modulgruppe M1, M2, M3, M4, M5, M34 zuzustellen. Vorzugsweise weist jede der Modulgruppen M1, M2, M3, M4, M5, M34 eine eigene Zustelleinrichtung 54 auf; dies ist jedoch nicht unbedingt erforderlich. Beispielsweise weist die in Figur 71 links angeordnete Modulgruppe M1, M2, M3, M4, M5, M34 keine Zustelleinrichtung 54 auf. Eine Zustellung des Kabels 1a, 1b in diese Modulgruppe M1, M2, M3, M4, M5, M34 kann gegebenenfalls unterbleiben oder von einem Mitarbeiter der Produktion durchgeführt werden.

Die Zustelleinrichtungen 54 der einzelnen Modulgruppen M1, M2, M3, M4, M5, M34 können auch unterschiedlich ausgebildet sein, wie dargestellt. Die Zustelleinrichtungen 54 können dann auf die jeweiligen Modulgruppen M1, M2, M3, M4, M5, M34 speziell abgestimmt sein.

Vorzugsweise sind die Modulgruppen M1, M2, M3, M4, M5, M34 modular aufgebaut und sind beispielsweise autonom betreibbar. Beispielsweise kann jede der Modulgruppen M1, M2, M3, M4, M5, M34 eine eigene Steuereinheit 10 aufweisen um die Bearbeitung des Kabels 1a, 1b autonom bzw. selbstständig zu steuern und/oder zu überwachen.

Vorzugsweise kann die Vorrichtung 131 eine Steuereinrichtung 96 aufweisen, die die gesamte Steckverbindermontage global zu steuern und/oder zu überwachen vermag. Die Steuereinrichtung 96 kann mit den einzelnen Steuereinheiten 10 kommunikationsverbunden sein (nur in Figur 71 beispielhaft angedeutet).

Vorzugsweise können die Modulgruppen M1, M2, M3, M4, M5, M34 synchronisiert getaktet sein, um eine möglichst effiziente Fertigungsstraße für die Steckverbindermontage bereitzustellen.

Den Modulgruppen M1, M2, M3, M4, M5, M34 können Prüfeinrichtungen 73 zugeordnet sein, insbesondere um den Zustand der Kabelbearbeitung bzw. den Zustand des Kabels 1a, 1b vor und/oder nach der Bearbeitung durch die jeweilige Modulgruppe M1, M2, M3, M4, M5, M34 zu erfassen.

Die Modulgruppen M1, M2, M3, M4, M5, M34 können nebeneinander entlang einer Transportrichtung T angeordnet sein. Eine Transporteinrichtung 72 zum Transport des Kabels 1a, 1b kann die Transportrichtung T vorgeben, entlang der die Kabel 1a, 1b zwischen den Modulgruppen M1, M2, M3, M4, M5, M34 transportiert werden.

Die Transporteinrichtung 72 kann insbesondere eine Greifereinrichtung mit zumindest einem Greifer 132 aufweisen, insbesondere um das Kabel 1a, 1b zwischen den Modulgruppen M1, M2, M3, M4, M5, M34 zu transportieren, beispielsweise zwischen den Zustelleinrichtungen 54 der Modulgruppen M1, M2, M3, M4, M5, M34.

Ferner kann die Transporteinrichtung 72 auch eine Rollenbahn 133 aufweisen, beispielsweise um einen möglichst reibungsarmen Transport auch eines langen Kabels 1a, 1b sicherzustellen.

Aus Sicherheitsgründen kann ein Lichtvorhang bzw. eine Lichtschranke 55 vorgesehen sein um die Vorrichtung 131 nur dann zu betreiben wenn sich keine Gegenstände, Personen oder Körperteile im Gefahrenbereich der Vorrichtung 131 befinden. Ein Mitarbeiter der Produktion kann das Kabel somit auch gefahrlos manuell in die Vorrichtung 131 einlegen, beispielsweise bis zu einem definierten Anschlag an die in Figur 71 links dargestellte Modulgruppe M1, M2, M3, M4, M5, M34 zuführen, wonach das Kabel 1a, 1b für die nachfolgende teilautomatisierte Bearbeitung vorbereitet, beispielsweise vermessen, markiert und/oder ausgerichtet werden kann.

Figur 72 zeigt eine beispielhafte Modulgruppe M1, M2, M3, M4, M5, M34 in einer vereinfachten, geschnittenen Darstellung. Beispielhaft ist ein Kabel 1a, 1b in die Modulgruppe M1, M2, M3, M4, M5, M34 eingeführt. Die gezeigte Modulgruppe M1, M2, M3, M4, M5, M34 weist drei Bearbeitungsmodule auf, die von einer Modultransporteinrichtung 134 entlang einer Modultransportrichtung M bewegt werden können. Die Modultransporteinrichtung 134 weist eine Schienenführung auf, entlang der die Bearbeitungsmodule gemeinsam entlang der Modultransportrichtung M bewegbar sind. Die Bearbeitungsmodule sind fest aneinander montiert, wodurch sich eine gekoppelte Bewegung ergibt. Hierdurch können die Bearbeitungsmodule zwischen Lagerplätzen L und einem Bearbeitungsplatz B bewegt werden. Immer jeweils genau eines der Bearbeitungsmodule kann somit an den Bearbeitungsplatz B für die Bearbeitung des Kabels 1a, 1b zugestellt werden. Vorzugsweise nachdem das vorgesehene Bearbeitungsmodul an den Bearbeitungsplatz B zugestellt wurde kann das Kabel 1a, 1b von der Zustelleinrichtung 54 ebenfalls an den Bearbeitungsplatz B zugestellt werden (entlang der Zustellrichtung X), um das Kabelende 3, 4 entsprechend zu bearbeiten.

Nach der Bearbeitung des Kabels 1a, 1b durch eines der Bearbeitungsmodule kann das Kabel 1a, 1b zumindest wieder soweit aus der Modulgruppe M1, M2, M3, M4, M5, M34 herausgezogen werden, dass ein weiteres Bearbeitungsmodul an den Bearbeitungsplatz B zugestellt werden kann. Nachdem das Kabelende 3, 4 von allen Bearbeitungsmodulen der Modulgruppe M1, M2, M3, M4, M5, M34 bearbeitet wurde kann das Kabel 1a, 1b wieder aus der Modulgruppe M1, M2, M3, M4, M5, M34 entgegen der Zustellrichtung X vollständig entfernen werden.

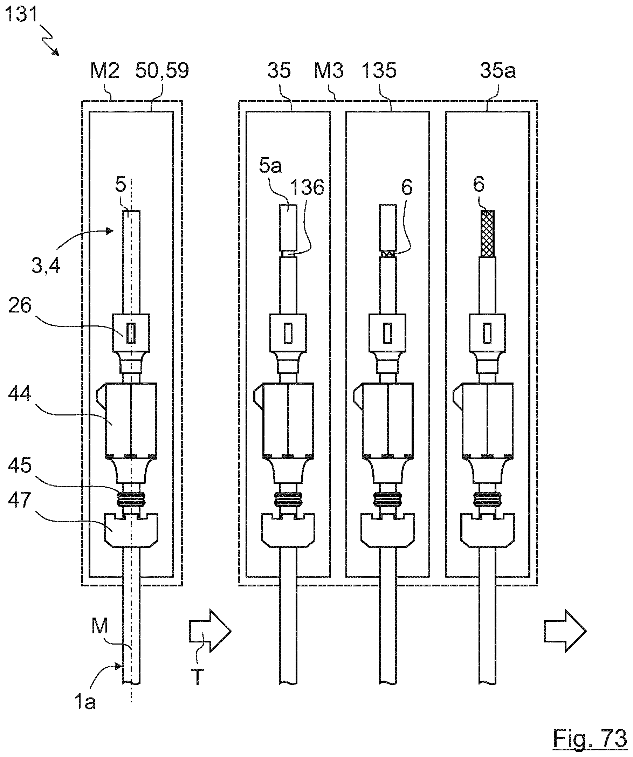

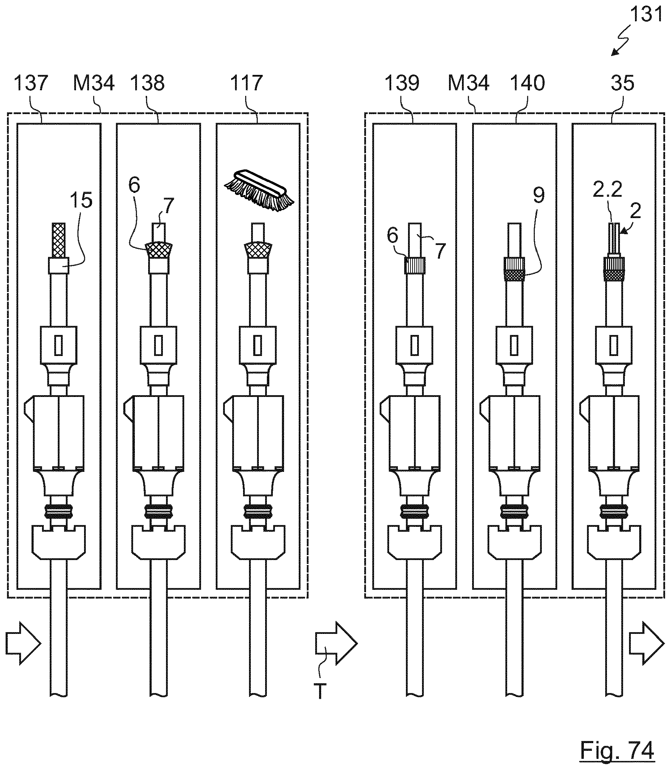

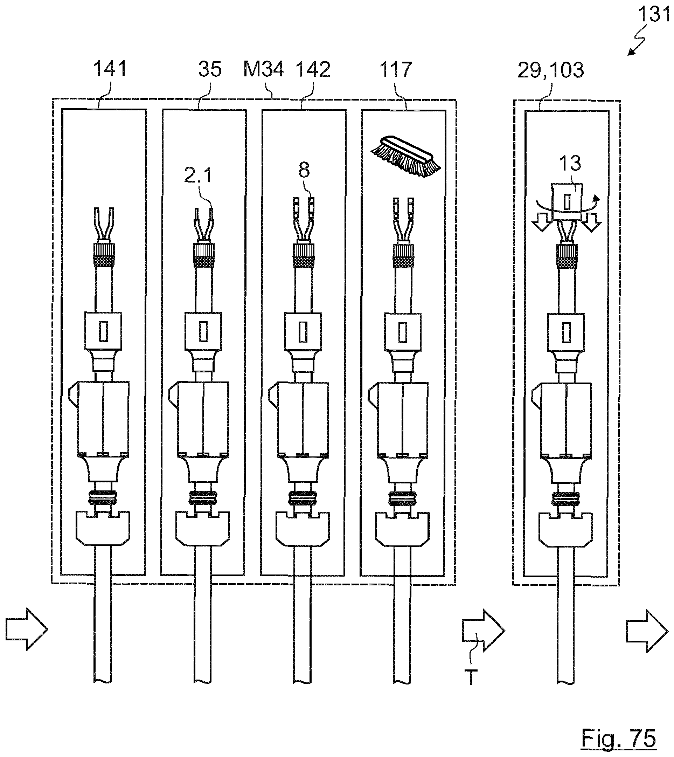

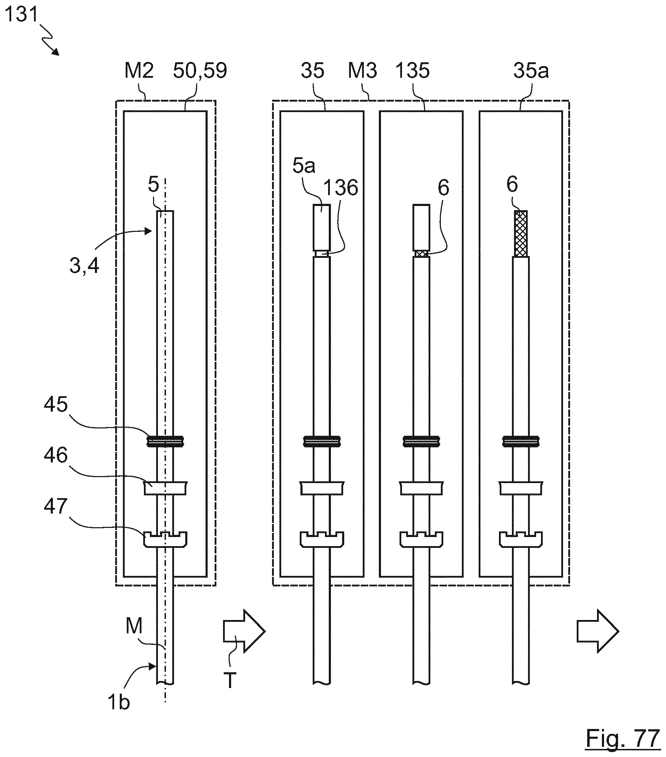

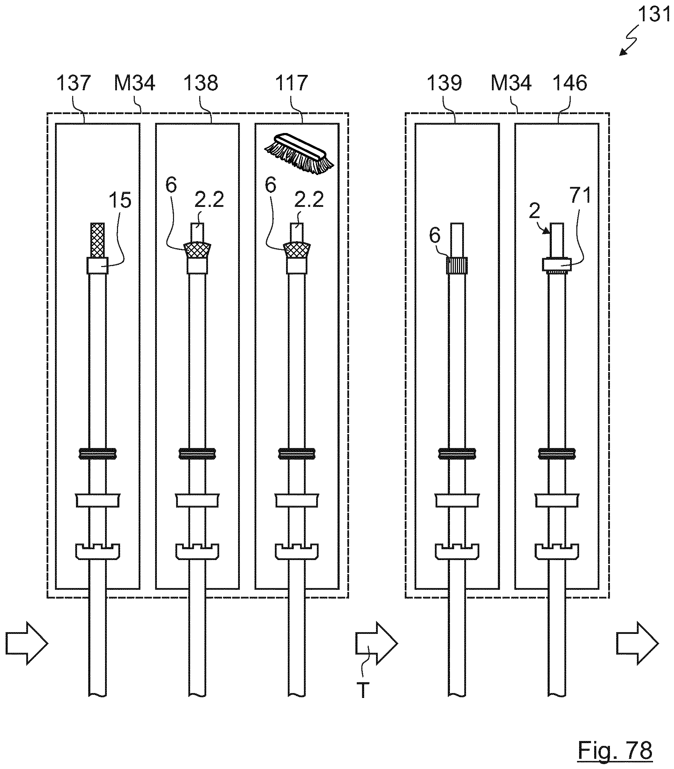

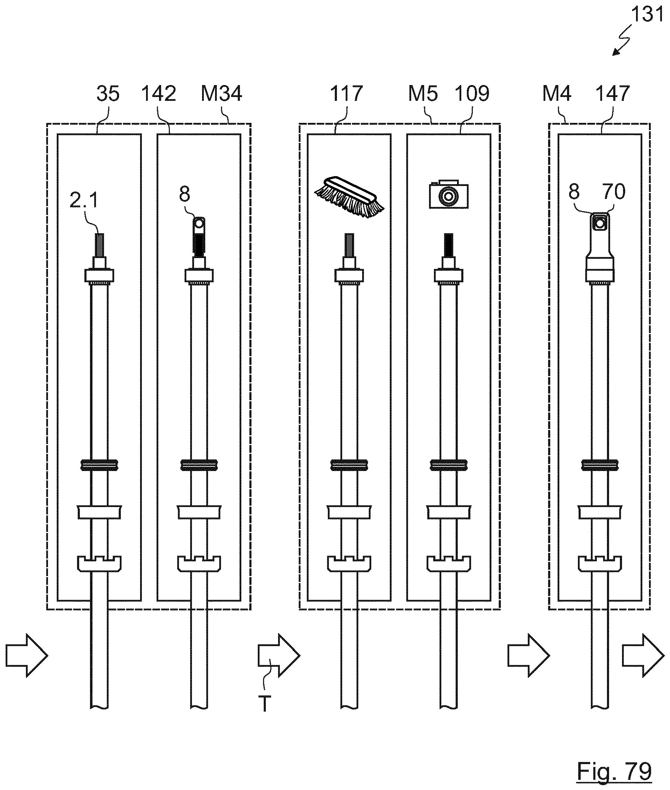

Die Figuren 73 bis 76 zeigen einzelne Ausschnitte einer Vorrichtung 131 zur Montage eines elektrischen Steckverbinders 12 auf einem ersten Kabelende 3 und/oder auf einem zweiten Kabelende 4 gemäß einem ersten Ausführungsbeispiel, wonach ein mehradriger Steckverbinder 12 auf einem mehradrigen Kabel 1a montiert wird. Die Figuren 77 bis 80 zeigen einzelne Ausschnitte einer entsprechenden Vorrichtung 131 gemäß einem zweiten Ausführungsbeispiel der Erfindung, wonach ein einadriger Steckverbinder 12 auf einem einadrigen Kabel 1b montiert wird. Die Figuren 73 bis 80 sollen insbesondere der Verdeutlichung der Verteilung von Bearbeitungsmodulen auf die verschiedenen Modulgruppen M1, M2, M3, M4, M5, M34 dienen, weshalb zur Vereinfachung die weiteren Komponenten der Vorrichtung 131 ausgeblendet sind.

In den Figuren 73 bis 80 sind verschiedene Bearbeitungsmodule zur Montage des elektrischen Steckverbinders 12 gezeigt, von denen einige vorstehend bereits beschrieben wurden. Grundsätzlich kann es sich bei den Bearbeitungsmodulen um beliebige Bearbeitungsmodule zur Konfektionierung elektrischer Kabel 1a, 1b bzw. zur Steckverbindermontage handeln. Nachfolgend werden lediglich zwei besonders vorteilhafte Zusammenstellungen von Bearbeitungsmodulen und deren Verteilung auf jeweilige Modulgruppen M1, M2, M3, M4, M5, M34 vorgestellt. Die Anordnung der Bearbeitungsmodule und deren Verteilung kann somit gegebenenfalls auch abweichen. Ferner können weitere Bearbeitungsmodule und/oder Modulgruppen hinzugefügt oder bestehende Bearbeitungsmodule und/oder Modulgruppen aufgetrennt oder zusammengefasst werden.

Hinsichtlich der Montage eines zweiadrigen Steckverbinders 12 hat sich eine Anordnung und Verteilung von Bearbeitungsmodulen gemäß der nachfolgenden Reihenfolge als besonders geeignet herausgestellt. Die nachfolgend genannten Bearbeitungsmodule können insbesondere Merkmale der zuvor beschriebenen Bearbeitungsmodule aufweisen.

Nachdem beispielsweise ein Mitarbeiter der Produktion das Kabel 1a in die Vorrichtung 131 eingelegt hat und das Kabel optional vermessen, markiert und ausgerichtet wurde kann zunächst eines oder können mehrere Bestückungsmodule vorgesehen sein, insbesondere zumindest ein vorstehend beschriebenes Mehrfachbestückungsmodul 50 und/oder ein vorstehend beschriebenes Einzelbestückungsmodul 59, um die später benötigten Steckverbinderkomponenten 26, 44, 45, 47 in der erforderlichen Reihenfolge auf das Kabel 1a aufzuschieben. Beispielhaft ist in Figur 73 nur ein einziges Bestückungsmodul dargestellt. Die Bestückungsmodule können zusammen eine zweite Modulgruppe M2 bilden (strichliniert gezeigt). Beispielsweise kann ein jeweiliges Bestückungsmodul vorgesehen sein um die Abschlusskappe 47, die Leitungsdichtung 45, das Steckverbindergehäuse 44 und die Schirmhülse 26 in der dargestellten Reihenfolge auf den Kabelmantel 5 des Kabels 1a aufzuschieben. Die vier Bearbeitungsmodule können in der zweiten Modulgruppe M2 in der in Figur 72 dargestellten Weise verteilt sein.

Dem oder den Bestückungsmodulen bzw. der zweiten Modulgruppe M2 kann ein Abisoliermodul 35 nachgeordnet sein um ein Teilstück 5a des Kabelmantels 5 des Kabels 1a abzuisolieren.

Dem Abisoliermodul 35 zum Abisolieren des Kabelmantels 5 kann ein Kabelfolienbearbeitungsmodul 135 nachgeordnet sein um eine unter dem Kabelmantel 5 befindliche Kabelfolie 136 des Kabels 1a zu entfernen.

Das Kabelfolienbearbeitungsmodul 135 kann wenigstens einen Heizdraht, wenigstens ein Messer, wenigstens ein Formwerkzeug, wenigstens eine Kältezufuhreinrichtung, wenigstens eine Abziehhilfe, wenigstens eine Absaugeinrichtung und/oder wenigstens eine Zuführeinrichtung für chemische Stoffe aufweisen, um zumindest eine von der Kabelmittelachse M abgewandte Außenschicht der zuvor zumindest teilweise freigelegten Kabelfolie 136 zu behandeln, um die Kabelfolie 136 zu entfernen oder um zur Unterstützung der Entfernung der Kabelfolie 136 deren mechanische Belastbarkeit zumindest zu reduzieren. Das Kabelfolienbearbeitungsmodul 135 kann außerdem Mittel aufweisen, um den die Kabelfolie 136 aufweisenden Kabelabschnitt zu verdrehen und/oder zu verbiegen. Bevor die Kabelfolie 136 schließlich entfernt wird (beispielsweise zusammen mit dem Teilstück 5a des Kabelmantels 5 von dem Kabelende 3, 4 abgezogen wird) kann die Kabelfolie 136 in Axialrichtung entlang der Kabelmittelachse M optional gestaucht werden.

Dem Kabelfolienbearbeitungsmodul 135 kann ein Abisoliermodul 35a zum Abziehen des Teilstücks 5a nachgeordnet sein.

Das Abisoliermodul 35, das Kabelfolienbearbeitungsmodul 135 und das Abisoliermodul 35a zum Abziehen des Teilstücks 5a können eine dritte Modulgruppe M3 bilden.

Dem Abisoliermodul 35a zum Abziehen des Teilstücks 5a bzw. der dritten Modulgruppe M3 kann ein Montagemodul 137 zum Montieren der Stützhülse 15 nachgeordnet sein. Ein dem Montagemodul 137 nachgeordnetes Kabelschirmgeflecht-Bearbeitungsmodul 138 kann ausgebildet sein, um das Kabelschirmgeflecht 6 des Kabels 1a zu bearbeiten, insbesondere auf eine definierte Länge abzulängen und/oder gerade auszubürsten. Dem Kabelschirmgeflecht-Bearbeitungsmodul 138 kann schließlich ein Reinigungsmodul 117 nachgeordnet sein, um durch die vorhergehenden mechanischen Bearbeitungsvorgänge angefallene Partikel 118 von dem Kabelende 3, 4 zu entfernen. Die in diesem Absatz genannten Bearbeitungsmodule können eine kombinierte Modulgruppe M34 bilden.

Dem Reinigungsmodul 117 bzw. der kombinierten Modulgruppe M34 kann ein weiteres Kabelschirmgeflecht-Bearbeitungsmodul 139 nachgeordnet sein um das Kabelschirmgeflecht 6 nach hinten über die Stützhülse 15 umzulegen. Nachfolgend kann ein Gewebebandmontagemodul 138 vorgesehen sein um das Gewebeband 9 zur Sicherung des Kabels 1a vor abstehenden Einzellitzen des Kabelschirmgeflechts 6 aufzukleben. Dem Gewebebandmontagemodul 140 kann ein weiteres Abisoliermodul 35 nachgeordnet sein, insbesondere ein Abisoliermodul 35 zum Entfernen der Füllschicht 7. Die in diesem Absatz genannten Bearbeitungsmodule können Teil einer weiteren kombinierten Modulgruppe M34 sein.

Dem Abisoliermodul 35 zum Entfernen der Füllschicht 7 bzw. der kombinierten Modulgruppe M34 kann ein Umformmodul 141 zum Umformen der freigelegten Innenleiter 2 nachgeordnet sein um den Abstand der vorderen Enden 2.3 der Innenleiter 2 an den Steckverbinder 12 anzupassen. Dem Umformmodul 141 kann ein weiteres Abisoliermodul 35 zum Entfernen eines Teilstücks 2.2a der Isolation 2.2 des Innenleiters 2 nachgeordnet sein. Dem Abisoliermodul 35 zum Entfernen des Teilstücks 2.2a der Isolation 2.2 des Innenleiters 2 nachgeordnet kann ein Montagemodul 142 zur Montage von Innenleiterkontaktelementen 8 an den Innenleitern 2 des Kabels 1a vorgesehen sein. Insbesondere kann vorgesehen sein, die Innenleiterkontaktelemente 8 mit den Innenleitern 2 zu vercrimpen. Dem Montagemodul 142 zur Montage der Innenleiterkontaktelemente 8 kann ein weiteres Reinigungsmodul 117 nachgeordnet sein. Die in diesem Absatz genannten Bearbeitungsmodule können wiederum eine kombinierte Modulgruppe M34 bilden.

Dem Reinigungsmodul 117 bzw. der kombinierten Modulgruppe M34 nachgeordnet kann ein Montagemodul 29 zur Montage des Kontaktteileträgers 13 vorgesehen sein. Zur Überprüfung der korrekten Montage des Kontaktteileträgers 13 kann ein Sensormodul 103 als Teil des Montagemoduls 29 vorgesehen sein oder dem Montagemodul 29 nachgeordnet sein. Das Montagemodul 29 zur Montage des Kontaktteileträgers 13 soll vorliegend als Beispiel dafür dienen, dass im Rahmen der Vorrichtung 131 auch einzelne Bearbeitungsmodule vorgesehen sein können, die nicht Teil einer Modulgruppe M1, M2, M3, M4, M5, M34 sind.

Dem Montagemodul 29 (und gegebenenfalls dem Sensormodul 103) kann außerdem ein Montagemodul 143 zum Aufschieben der Schirmhülse 26 auf den Kontaktteileträger 13 nachgeordnet sein. Die Schirmhülse 26 kann dann von einem Crimpmodul vorteilhaft an dem Kabel 1a und dem Kontaktteileträger 13 fixiert werden. Beide Bearbeitungsmodule können Teil einer vierten Modulgruppe M4 sein.

Abschließend kann ein Endmontagemodul 141 vorgesehen sein.

Vorzugsweise transportieren die Greifer 132 der Transporteinrichtung 72 das Kabel 1a jeweils zwischen den Modulgruppen M1, M2, M3, M4, M5, M34 und den einzelnen Bearbeitungsmodulen 18, 19, 29, 35, 50, 59, 69, 93, 103, 109, 117, 134, 135, 137, 138, 139, 140, 141, 142, 143, 144, 145, 146, 147. Grundsätzlich kann das Kabel 1a auf beliebige Weise von der Transporteinrichtung 72 transportiert werden.

Eine vorteilhafte Variante der Vorrichtung 131 zur Montage eines einadrigen elektrischen Steckverbinder 12, der beispielhaft zwei einadrige Kabel 1b aufweist, ist in den Figuren 77 bis 80 gezeigt, wobei die Vorrichtung 131 aus Gründen der Darstellbarkeit abermals nur die Bearbeitungsmodule und deren Verteilung auf einzelne Modulgruppen M1, M2, M3, M4, M5, M34 zeigt und über mehrere Figuren verteilt dargestellt ist (entlang der Transportrichtung T).

Hinsichtlich der Montage eines einadrigen Steckverbinders 12 hat sich eine Anordnung von Bearbeitungsmodulen gemäß der nachfolgenden Reihenfolge als besonders geeignet herausgestellt. Die nachfolgend genannten Bearbeitungsmodule können insbesondere Merkmale der zuvor beschriebenen Bearbeitungsmodule aufweisen.

Zunächst können wiederum mehrere Bestückungsmodule vorgesehen sein, insbesondere zumindest ein vorstehend beschriebenes Mehrfachbestückungsmodul 50 und/oder ein vorstehend beschriebenes Einzelbestückungsmodul 59, um die später benötigten Steckverbinderkomponenten 45, 46, 47 in der erforderlichen Reihenfolge auf das Kabel 1b aufzuschieben. Beispielhaft ist in Figur 77 nur ein einziges Bestückungsmodul dargestellt. Die Bestückungsmodule können zusammen eine zweite Modulgruppe M2 bilden (strichliniert gezeigt). Beispielsweise kann ein jeweiliges Bestückungsmodul vorgesehen sein um die Abschlusskappe 47, die Kabelfesthaltung 46 und die Leitungsdichtung 45 in der dargestellten Reihenfolge auf den Kabelmantel 5 des Kabels 1a aufzuschieben.

Dem oder den Bestückungsmodulen bzw. der zweiten Modulgruppe M2 kann ein Abisoliermodul 35 nachgeordnet sein um ein Teilstück 5a des Kabelmantels 5 des Kabels 1a abzuisolieren.

Dem Abisoliermodul 35 zum Abisolieren des Kabelmantels 5 kann ein Kabelfolienbearbeitungsmodul 135 nachgeordnet sein um eine unter dem Kabelmantel 5 befindliche Kabelfolie 136 des Kabels 1a zu entfernen. Dem Kabelfolienbearbeitungsmodul 135 kann ein Abisoliermodul 35a zum Abziehen des Teilstücks 5a nachgeordnet sein. Das Abisoliermodul 35, das Kabelfolienbearbeitungsmodul 135 und das Abisoliermodul 35a zum Abziehen des Teilstücks 5a können eine dritte Modulgruppe M3 bilden.

Dem Abisoliermodul 35a zum Abziehen des Teilstücks 5a bzw. der dritten Modulgruppe M3 kann ein Montagemodul 137 zum Montieren der Stützhülse 15 nachgeordnet sein. Ein dem Montagemodul 137 nachgeordnetes Kabelschirmgeflecht-Bearbeitungsmodul 138 kann ausgebildet sein, um das Kabelschirmgeflecht 6 des Kabels 1a zu bearbeiten, insbesondere auf eine definierte Länge abzulängen und/oder gerade auszubürsten. Dem Kabelschirmgeflecht-Bearbeitungsmodul 138 kann schließlich ein Reinigungsmodul 117 nachgeordnet sein, um durch die vorhergehenden mechanischen Bearbeitungsvorgänge angefallene Partikel 118 von dem Kabelende 3, 4 zu entfernen. Die in diesem Absatz genannten Bearbeitungsmodule können eine kombinierte Modulgruppe M34 bilden.

Dem Reinigungsmodul 117 bzw. der kombinierten Modulgruppe M34 kann ein weiteres Kabelschirmgeflecht-Bearbeitungsmodul 139 nachgeordnet sein um das Kabelschirmgeflecht 6 nach hinten über die Stützhülse 15 umzulegen. Anschließend kann ein Montagemodul 146 zum Verpressen der Crimphülse 71 auf der Stützhülse 15 folgen. Das Kabelschirmgeflecht 6 kann dabei vorteilhaft zwischen der Stützhülse 15 und der Crimphülse 71 eingepresst werden. Die in diesem Absatz genannten Bearbeitungsmodule können vorteilhaft eine kombinierte Modulgruppe M34 bilden.

Dem Montagemodul 146 zum Verpressen der Crimphülse 71 kann ein weiteres Abisoliermodul 35 nachgeordnet sein, um ein Teilstücks 2.2a der Isolation 2.2 des Innenleiters 2 abzuisolieren. Dem Abisoliermodul 35 zum Entfernen des Teilstücks 2.2a der Isolation 2.2 des Innenleiters 2 nachgeordnet kann ein Montagemodul 142 zur Montage des Innenleiterkontaktelements 8 vorgesehen sein. Das Innenleiterkontaktelement 8 kann vorzugsweise mit dem Innenleiter 2 des Kabels 1b verschweißt werden, beispielsweise ultraschallverschweißt werden. Das Abisoliermodul 35 und das Montagemodul 139 zur Montage des Innenleiterkontaktelements 8 können Teil einer weiteren kombinierten Modulgruppe M34 sein.

Dem Montagemodul 139 zur Montage des Innenleiterkontaktelements 8 bzw. der kombinierten Modulgruppe M34 kann eine fünfte Modulgruppe M5 nachgeordnet sein, umfassend ein weiteres Reinigungsmodul 117 sowie ein Qualitätsüberwachungsmodul 109 zur Überprüfung und gegebenenfalls zur Dokumentation des Bearbeitungszustands des Kabels 1b.

Der fünften Modulgruppe M5 kann ein Montagemodul 147 zur Montage des Isoliergehäuses 70 nachgeordnet sein, insbesondere um das Isoliergehäuse 70 an dem Innenleiterkontaktelement 8 zu montieren. Das Isoliergehäuse 70 kann das Innenleiterkontaktelement 8 vorzugsweis in sich aufnehmen. Das Isoliergehäuse 70 kann vorzugsweise mehrteilig, insbesondere zweiteilig ausgebildet sein und nach dem Einführen des Innenleiterkontaktelements 8 in eines der Schalenhälften mit der anderen Schalenhälfte zusammengefügt und fixiert werden. Für diesen Prozess können beispielsweise auch mehrere Bearbeitungsmodule vorgesehen sein, die dann eine gemeinsame vierte Modulgruppe M4 bilden.

Dem Montagemodul 147 zur Montage des Isoliergehäuses 70 kann ein Einpressmodul 69 nachgeordnet sein, um das mit dem Isoliergehäuse 70 und dem Innenleiterkontaktelement 8 bestückte Kabelende 3, 4 in ein Steckverbindergehäuse 44 einzupressen. Abschließend kann ein Endmontagemodul 145 vorgesehen sein. Die in diesem Absatz genannten Bearbeitungsmodule bilden vorzugsweise eine gemeinsame vierte Modulgruppe M4.

Nach der Montage eines ersten Steckverbinder 12 auf einem der Kabelenden 3, 4 des Kabels 1a, 1b kann vorgesehen sein, das Kabel 1a, 1b zur Montage eines zweiten Steckverbinders 12 auf dem gegenüberliegenden Kabelende 3, 4 abermals der Vorrichtung 131 zuzuführen. Das Kabel 1a, 1b kann hierzu entsprechend gewendet bzw. umgelegt werden, wobei die Orientierung des ersten Steckverbinders 12 für die Montage des zweiten Steckverbinders 12 vorzugsweise erfasst wird bzw. sichergestellt wird, dass die Orientierung des ersten Steckverbinders 12 bei der Montage des zweiten Steckverbinders 12 bekannt ist.

Es kann vorgesehen sein, dass innerhalb der Vorrichtung 131 Bearbeitungsmodule 18, 19, 29, 35, 50, 59, 69, 93, 103, 109, 117, 134, 135, 137, 138, 139, 140, 141, 142, 143, 144, 145, 146, 147 oder sogar ganze Modulgruppen M1, M2, M3, M4, M5, M34 während der Steckverbindermontage gezielt übersprungen bzw. ausgelassen werden. Beispielsweise kann vorgesehen sein, einige oder alle der Bearbeitungsmodule 18, 19, 29, 35, 50, 59, 69, 93, 103, 109, 117, 134, 135, 137, 138, 139, 140, 141, 142, 143, 144, 145, 146, 147 in mehrfacher Ausführung für verschiedene Kabelarten (beispielsweise Kabeldurchmesser) und/oder zu montierenden Steckverbinderarten in der Fertigungsstraße entlang der Transportrichtung T anzuordnen. So können die Bearbeitungsmodule 18, 19, 29, 35, 50, 59, 69, 93, 103, 109, 117, 134, 135, 137, 138, 139, 140, 141, 142, 143, 144, 145, 146, 147 das Kabel 1a, 1b bedarfsweise bearbeiten oder nicht bearbeiten. Für die Entscheidung, ob das Kabel 1a, 1b in einem jeweiligen Bearbeitungsmodul 18, 19, 29, 35, 50, 59, 69, 93, 103, 109, 117, 134, 135, 137, 138, 139, 140, 141, 142, 143, 144, 145, 146, 147 zu bearbeiten ist, kann der Identifikator bzw. die Markierung 21, 23 des Kabels 1a, 1b, des Werkstückträgers 11 oder der Mantelklemme 48a, 48b, 48c, 48d dienen. Die Vorrichtung 131 kann hierdurch ganz besonders modular und effizient für die Steckverbindermontage einsetzbar sein.

Beispielsweise können insbesondere verschiedene Bestückungsmodule zur Bestückung der Steckverbinderkomponenten 26, 44, 45, 46, 47, 56 für verschiedene Kabeldurchmesser des Kabels 1a, 1b vorgesehen sein. Außerdem können beispielsweise auch verschiedene Montagemodule 140 zur Montage der Stützhülse 15 für verschiedene Kabeldurchmesser vorgesehen sein. Beispielsweise können auch verschiedene Montagemodule 139 zur Montage der Innenleiterkontaktelemente 8 für verschiedene Kabeldurchmesser vorgesehen sein.

Um den Durchsatz der Kabel 1a, 1b noch zu erhöhen bzw. um die Prozesszeit zu verringern kann gegebenenfalls vorgesehen sein, Modulgruppen M1, M2, M3, M4, M34, M5 und/oder einzelne Bearbeitungsmodule 18, 19, 29, 35, 50, 59, 69, 93, 103, 109, 117, 134, 135, 137, 138, 139, 140, 141, 142, 143, 144, 145, 146, 147 mehrfach in der Vorrichtung 131 vorzusehen, insbesondere Bearbeitungsmodule, die im Vergleich mit anderen Bearbeitungsmodulen eine vergleichsweise große Bearbeitungszeit erfordern.

Beispielsweise kann das Montagemodul 139 zur Montage der Innenleiterkontaktelemente 8 des einadrigen Kabels 1b, bei dem der Leiter 2.1 des Kabels 1b vorzugsweise mit dem Innenleiterkontaktelement 8 ultraschallverschweißt wird, mehrfach (beispielsweise zweimal, dreimal, viermal oder fünfmal) vorhanden sein, da der Vorgang des Verschweißens in der Regel vergleichsweise viel Zeit in Anspruch nimmt.

Durch die erfindungsgemäße Vorrichtung 131 kann ein elektrisches Kabel 1a, 1b ausgehend von einem Endloskabel vollständig konfektioniert werden, wonach das Kabel 1a, 1b anschließend mit einem oder zwei Steckverbindern 12 bestückt und in einer definierten Konfektionierungslänge L aus der Vorrichtung 131 entnommen werden kann. Alle Bearbeitungsschritte können in einer Dokumentation 96 erfasst und dem Kabel 1a, 1b bzw. dessen Steckverbinder(n) 12 zugeordnet werden.

## Patentansprüche

1. Vorrichtung (131) zur Montage eines elektrischen Steckverbinders (12) auf einem ersten Kabelende (3) und/oder auf einem zweiten Kabelende (4) eines einen oder mehrere Innenleiter (2) aufweisenden elektrischen Kabels (1a, 1b), aufweisend zumindest eine Modulgruppe (M1, M2, M3, M4, M5, M34) mit wenigstens zwei Bearbeitungsmodulen (18, 19, 29, 35, 50, 59, 69, 93, 103, 109, 117, 134, 135, 137, 138, 139, 140, 141, 142, 143, 144, 145, 146, 147) zur Bearbeitung des Kabels (1a, 1b), weiter aufweisend eine Zustelleinrichtung (54) um das Kabelende (3, 4) entlang einer Zustellrichtung (X) an einen Bearbeitungsplatz (B) in der Modulgruppe (M1, M2, M3, M4, M5, M34) zuzustellen, wobei die Modulgruppe (M1, M2, M3, M4, M5, M34) eine Modultransporteinrichtung (134) zur Zustellung jeweils eines der Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) an den Bearbeitungsplatz (B) aufweist, und wobei die Zustelleinrichtung (54) eingerichtet ist um das Kabelende (3, 4) nach der Bearbeitung wieder aus der Modulgruppe (M1, M2, M3, M4, M5, M34) entgegen der Zustellrichtung (X) zu entfernen.

2. Vorrichtung (131) nach Anspruch 1,
**dadurch gekennzeichnet, dass**
die Modultransporteinrichtung (134) ausgebildet ist um die Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) entlang einer Modultransportrichtung (M) an den Bearbeitungsplatz (B) zuzustellen.

3. Vorrichtung (131) nach Anspruch 2,
**dadurch gekennzeichnet, dass**
die Zustellrichtung (X) von der Modultransportrichtung (M) abweicht, vorzugsweise im Wesentlichen orthogonal und besonders bevorzugt orthogonal zu der Modultransportrichtung (M) verläuft.

4. Vorrichtung (131) nach einem der Ansprüche 1 bis 3,
**dadurch gekennzeichnet, dass**
die Modultransporteinrichtung (134) ausgebildet ist um jeweils nur ein einziges der Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) an den Bearbeitungsplatz (B) zuzustellen.

5. Vorrichtung (131) nach einem der Ansprüche 1 bis 4,
**dadurch gekennzeichnet, dass**
die Modultransporteinrichtung (134) ausgebildet ist um alle Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) in einer gekoppelten Bewegung gleichzeitig zu bewegen.

6. Vorrichtung (131) nach einem der Ansprüche 1 bis 5,
**dadurch gekennzeichnet, dass**
eine gemeinsame Transporteinrichtung (72) zum Transport des Kabels (1a, 1b) entlang einer Transportrichtung (T) zwischen mehreren Modulgruppen (M1, M2, M3, M4, M5, M34) oder zwischen zumindest einer Modulgruppe (M1, M2, M3, M4, M5, M34) und zumindest einem einzelnen Bearbeitungsmodul (18, 19, 29, 35, 50, 59, 69, 93, 103, 109, 117, 134, 135, 137, 138, 139, 140, 141, 142, 143, 144, 145, 146, 147) vorgesehen ist.

7. Vorrichtung (131) nach Anspruch 6,
**dadurch gekennzeichnet, dass**
die Zustellrichtung (X) von der Transportrichtung (T) abweicht, vorzugsweise im Wesentlichen orthogonal und besonders bevorzugt orthogonal zu der Transportrichtung (T) verläuft.

8. Vorrichtung (131) nach Anspruch 6 oder 7,
**dadurch gekennzeichnet, dass**
die Modultransportrichtung (M) der Transportrichtung (T) entspricht, vorzugsweise parallel zu der Transportrichtung (T) verläuft.

9. Vorrichtung (131) nach einem der Ansprüche 6 bis 8,
**dadurch gekennzeichnet, dass**
die Transporteinrichtung (72) ein Werkstückträgersystem (94) mit zumindest einem Werkstückträger (11) für das Kabel (1a, 1b) aufweist, um das Kabel (1a, 1b) entlang der Transportrichtung (T) zu transportieren.

10. Vorrichtung (131) nach einem der Ansprüche 6 bis 9,
**dadurch gekennzeichnet, dass**
die Transporteinrichtung (72) eine Greifereinrichtung mit zumindest einem Greifer (132) aufweist um das Kabel (1a, 1b) entlang der Transportrichtung (T) zu transportieren.

11. Vorrichtung (131) nach einem der Ansprüche 1 bis 10,
**dadurch gekennzeichnet, dass**
die Zustelleinrichtung (54) ein erstes Transportmodul (85) und ein zweites Transportmodul (86) aufweist, wobei das erste Transportmodul (85) ausgebildet ist um das Kabelende (3, 4) entlang der Zustellrichtung (X) in eines der Bearbeitungsmodule (18, 19, 29, 35, 50, 59, 69, 93, 103, 109, 117, 134, 135, 137, 138, 139, 140, 141, 142, 143) zur Bearbeitung des Kabelendes (3, 4) zu transportieren oder entgegen der Zustellrichtung (X) aus dem Bearbeitungsmodul (18, 19, 29, 35, 50, 59, 69, 93, 103, 109, 117, 134, 135, 137, 138, 139, 140, 141, 142, 143, 144, 145, 146, 147) hinaus zu transportieren, und wobei das zweite Transportmodul (86) an einer in Zustellrichtung (X) von dem ersten Transportmodul (85) beabstandeten Position angeordnet und ausgebildet ist, um das Kabelende (3, 4) entlang oder entgegen der Zustellrichtung (X) zu transportieren, wobei das erste Transportmodul (85) an das Kabel (1a, 1b) zustellbare Transporteinheiten (87) aufweist die derart umpositionierbar sind, dass auf dem zu bearbeitenden Kabelende (3, 4) aufgebrachte Steckverbinderkomponenten (26, 44, 45, 46, 47, 56) des Steckverbinders (12) durch das erste Transportmodul (85) passieren können, während das zweite Transportmodul (86) den Transport des Kabels (1a, 1b) durchführt.

12. Verfahren zur Montage eines elektrischen Steckverbinders (12) auf einem ersten Kabelende (3) und/oder auf einem zweiten Kabelende (4) eines einen oder mehrere Innenleiter (2) aufweisenden elektrischen Kabels (1a, 1b), wonach das Kabel (1a, 1b) von wenigstens zwei Bearbeitungsmodulen (18, 19, 29, 35, 50, 59, 69, 93, 103, 109, 117, 134, 135, 137, 138, 139, 140, 141, 142, 143, 144, 145, 146, 147) zumindest einer gemeinsamen Modulgruppe (M1, M2, M3, M4, M5, M34) bearbeitet wird, wobei eine Zustelleinrichtung (54) das Kabelende (3, 4) entlang einer Zustellrichtung (X) an einen Bearbeitungsplatz (B) in der Modulgruppe (M1, M2, M3, M4, M5, M34) zustellt, und wobei eine Modultransporteinrichtung (134) der Modulgruppe (M1, M2, M3, M4, M5, M34) jeweils eines der Bearbeitungsmodule (18, 19, 29, 35, 50, 59, 69, 93, 103, 109, 117, 134, 135, 137, 138, 139, 140, 141, 142, 143, 144, 145, 146, 147) zur Bearbeitung des Kabelendes (3, 4) an den Bearbeitungsplatz (B) zustellt, wobei das Kabelende (3, 4) nach der Bearbeitung wieder entgegen der Zustellrichtung (X) aus der Modulgruppe (M1, M2, M3, M4, M5, M34) entfernt wird.

13. Verfahren nach Anspruch 12,
**dadurch gekennzeichnet, dass**
die Zustellrichtung (X) von einer Modultransportrichtung (M), entlang der die Modultransporteinrichtung (134) die Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) an den Bearbeitungsplatz (B) zustellt, abweicht, vorzugsweise im Wesentlichen orthogonal und besonders bevorzugt orthogonal zu der Modultransportrichtung (M) verläuft.

14. Verfahren nach einem der Ansprüche 12 oder 13,
**dadurch gekennzeichnet, dass**
die Modultransporteinrichtung (134) die Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) nacheinander an den Bearbeitungsplatz (B) zustellt.

15. Verfahren nach einem der Ansprüche 12 bis 14,
**dadurch gekennzeichnet, dass**
die Modultransporteinrichtung (134) die Bearbeitungsmodule (18, 19, 29, 35, 50, 59, 69, 93, 103, 109, 117, 134, 135, 137, 138, 139, 140, 141, 142, 143, 144, 145, 146, 147) der Modulgruppe (M1, M2, M3, M4, M5, M34) in einer gekoppelten Bewegung gleichzeitig bewegt.

## Claims

1. Apparatus (131) for assembling an electrical plug connector (12) on a first cable end (3) and/or on a second cable end (4) of an electrical cable (1a, 1b) which has one or more inner conductors (2), having at least one module group (M1, M2, M3, M4, M5, M34) with at least two processing modules (18, 19, 29, 35, 50, 59, 69, 93, 103, 109, 117, 134, 135, 137, 138, 139, 140, 141, 142, 143, 144, 145, 146, 147) for processing the cable (1a, 1b), furthermore having a feed device (54) for feeding the cable end (3, 4) along a feed direction (X) to a processing station (B) in the module group (M1, M2, M3, M4, M5, M34), wherein the module group (M1, M2, M3, M4, M5, M34) has a module transport device (134) for feeding in each case one of the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) to the processing station (B), and wherein the feed device (54) is configured to remove the cable end (3, 4) from the module group (M1, M2, M3, M4, M5, M34) again counter to the feed direction (X) after the processing.

2. Apparatus (131) according to Claim 1,
**characterized in that**
the module transport device (134) is designed to feed the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) along a module transport direction (M) to the processing station (B).

3. Apparatus (131) according to Claim 2,
**characterized in that**
the feed direction (X) deviates from the module transport direction (M), preferably runs substantially orthogonally and particularly preferably orthogonally with respect to the module transport direction (M).

4. Apparatus (131) according to any one of Claims 1 to 3,
**characterized in that**
the module transport device (134) is designed to feed in each case only a single one of the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) to the processing station (B).

5. Apparatus (131) according to any one of Claims 1 to 4,
**characterized in that**
the module transport device (134) is designed to move all processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) simultaneously in a coupled movement.

6. Apparatus (131) according to any one of Claims 1 to 5,
**characterized in that**
a common transport device (72) for transporting the cable (1a, 1b) along a transport direction (T) between multiple module groups (M1, M2, M3, M4, M5, M34) or between at least one module group (M1, M2, M3, M4, M5, M34) and at least one single processing module (18, 19, 29, 35, 50, 59, 69, 93, 103, 109, 117, 134, 135, 137, 138, 139, 140, 141, 142, 143, 144, 145, 146, 147) is provided.

7. Apparatus (131) according to Claim 6,
**characterized in that**
the feed direction (X) deviates from the transport direction (T), preferably runs substantially orthogonally and particularly preferably orthogonally with respect to the transport direction (T).

8. Apparatus (131) according to Claim 6 or 7,
**characterized in that**
the module transport direction (M) corresponds to the transport direction (T), preferably runs parallel to the transport direction (T).

9. Apparatus (131) according to any one of Claims 6 to 8,
**characterized in that**
the transport device (72) has a workpiece carrier system (94) with at least one workpiece carrier (11) for the cable (1a, 1b) in order to transport the cable (1a, 1b) along the transport direction (T).

10. Apparatus (131) according to any one of Claims 6 to 9,
**characterized in that**
the transport device (72) has a gripper device with at least one gripper (132) in order to transport the cable (1a, 1b) along the transport direction (T).

11. Apparatus (131) according to any one of Claims 1 to 10,
**characterized in that**
the feed device (54) has a first transport module (85) and a second transport module (86), wherein the first transport module (85) is designed to transport the cable end (3, 4) along the feed direction (X) into one of the processing modules (18, 19, 29, 35, 50, 59, 69, 93, 103, 109, 117, 134, 135, 137, 138, 139, 140, 141, 142, 143) for processing the cable end (3, 4) or to transport said cable end counter to the feed direction (X) out of the processing module (18, 19, 29, 35, 50, 59, 69, 93, 103, 109, 117, 134, 135, 137, 138, 139, 140, 141, 142, 143, 144, 145, 146, 147), and wherein the second transport module (86) is arranged at a position spaced apart from the first transport module (85) in the feed direction (X) and is designed to transport the cable end (3, 4) along or counter to the feed direction (X), wherein the first transport module (85) has transport units (87) which can be fed to the cable (1a, 1b), which transport units are repositionable such that plug connector components (26, 44, 45, 46, 47, 56) applied to the cable end (3, 4), which is to be processed, of the plug connector (12) can pass through the first transport module (85) while the second transport module (86) is transporting the cable (1a, 1b).

12. Method for assembling an electrical plug connector (12) on a first cable end (3) and/or on a second cable end (4) of an electrical cable (1a, 1b) which has one or more inner conductors (2), according to which method the cable (1a, 1b) is processed by at least two processing modules (18, 19, 29, 35, 50, 59, 69, 93, 103, 109, 117, 134, 135, 137, 138, 139, 140, 141, 142, 143, 144, 145, 146, 147) of at least one common module group (M1, M2, M3, M4, M5, M34), wherein a feed device (54) feeds the cable end (3, 4) along a feed direction (X) to a processing station (B) in the module group (M1, M2, M3, M4, M5, M34), and wherein a module transport device (134) of the module group (M1, M2, M3, M4, M5, M34) feeds in each case one of the processing modules (18, 19, 29, 35, 50, 59, 69, 93, 103, 109, 117, 134, 135, 137, 138, 139, 140, 141, 142, 143, 144, 145, 146, 147) for processing the cable end (3, 4) to the processing station (B), wherein the cable end (3, 4) is removed from the module group (M1, M2, M3, M4, M5, M34) again counter to the feed direction (X) after the processing.

13. Method according to Claim 12,
**characterized in that**
the feed direction (X) deviates from a module transport direction (M) along which the module transport device (134) feeds the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) to the processing station (B), preferably runs substantially orthogonally and particularly preferably orthogonally with respect to the module transport direction (M).

14. Method according to any one of Claims 12 or 13,
**characterized in that**
the module transport device (134) feeds the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) successively to the processing station (B).

15. Method according to any one of Claims 12 to 14,
**characterized in that**
the module transport device (134) moves the processing modules (18, 19, 29, 35, 50, 59, 69, 93, 103, 109, 117, 134, 135, 137, 138, 139, 140, 141, 142, 143, 144, 145, 146, 147) of the module group (M1, M2, M3, M4, M5, M34) simultaneously in a coupled movement.

## Revendications

1. Dispositif (131) de montage d'un connecteur électrique enfichable (12) sur une première extrémité de câble (3) et/ou sur une deuxième extrémité de câble (4) d'un câble électrique (1a, 1b) comportant un ou plusieurs conducteurs internes (2), comportant au moins un groupe de modules (M1, M2, M3, M4, M5, M34) comprenant au moins deux modules de traitement (18, 19, 29, 35, 50, 59, 69, 93, 103, 109, 117, 134, 135, 137, 138, 139, 140, 141, 142, 143, 144, 145, 146, 147) pour le traitement du câble (1a, 1b), comportant en outre un dispositif d'amenée (54) pour amener l'extrémité de câble (3, 4) le long d'une direction d'amenée (X) à un poste de traitement (B) dans le groupe de modules (M1, M2, M3, M4, M5, M34), dans lequel le groupe de modules (M1, M2, M3, M4, M5, M34) comporte un dispositif de transport de module (134) pour amener un des modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) au poste de traitement (B), et dans lequel le dispositif d'amenée (54) est équipé pour éloigner l'extrémité de câble (3, 4) du groupe de modules (M1, M2, M3, M4, M5, M34) après le traitement dans le sens opposé à la direction d'amenée (X).

2. Dispositif (131) selon la revendication 1, **caractérisé en ce que** le dispositif de transport de module (134) est configuré pour amener les modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) le long d'une direction de transport de module (M) au poste de traitement (B).

3. Dispositif (131) selon la revendication 2, **caractérisé en ce que** la direction d'amenée (X) diverge de la direction de transport de module (M), courant de préférence sensiblement perpendiculairement et de manière particulièrement préférée perpendiculairement à la direction de transport de module (M).

4. Dispositif (131) selon une des revendications 1 à 3, **caractérisé en ce que** le dispositif de transport de module (134) est configuré pour amener un seul des modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) à la fois au poste de traitement (B).

5. Dispositif (131) selon une des revendications 1 à 4, **caractérisé en ce que** le dispositif de transport de module (134) est configuré pour déplacer tous les modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) simultanément dans un mouvement combiné.

6. Dispositif (131) selon une des revendications 1 à 5, **caractérisé en ce qu'**un dispositif de transport commun (72) est prévu pour le transport du câble (1a, 1b) le long d'une direction de transport (T) entre plusieurs groupes de modules (M1, M2, M3, M4, M5, M34) ou entre au moins un groupe de modules (M1, M2, M3, M4, M5, M34) et au moins un unique module de traitement (18, 19, 29, 35, 50, 59, 69, 93, 103, 109, 117, 134, 135, 137, 138, 139, 140, 141, 142, 143, 144, 145, 146, 147).

7. Dispositif (131) selon la revendication 6, **caractérisé en ce que** la direction d'amenée (X) diverge de la direction de transport (T), courant de préférence sensiblement perpendiculairement et de manière particulièrement préférée perpendiculairement à la direction de transport (T).

8. Dispositif (131) selon la revendication 6 ou 7, **caractérisé en ce que** la direction de transport de module (M) correspond à la direction de transport (T), courant de préférence parallèlement à la direction de transport (T).

9. Dispositif (131) selon une des revendications 6 à 8, **caractérisé en ce que** le dispositif de transport (72) comporte un système à support de pièce (94) avec au moins un support de pièce (11) pour le câble (1a, 1b), pour transporter le câble (1a, 1b) le long de la direction de transport (T).

10. Dispositif (131) selon une des revendications 6 à 9, **caractérisé en ce que** le dispositif de transport (72) comporte un dispositif à préhenseur avec au moins un préhenseur (132) pour transporter le câble (1a, 1b) le long de la direction de transport (T).

11. Dispositif (131) selon une des revendications 1 à 10, **caractérisé en ce que** le dispositif d'amenée (54) comporte un premier module de transport (85) et un deuxième module de transport (86), le premier module de transport (85) étant configuré pour transporter l'extrémité de câble (3, 4) le long de la direction d'amenée (X) dans un des modules de traitement 18, 19, 29, 35, 50, 59, 69, 93, 103, 109, 117, 134, 135, 137, 138, 139, 140, 141, 142, 143, 144, 145, 146, 147) pour le traitement de l'extrémité de câble (3, 4) ou pour la transporter hors du module de traitement (18, 19, 29, 35, 50, 59, 69, 93, 103, 109, 117, 134, 135, 137, 138, 139, 140, 141, 142, 143, 144, 145, 146, 147) dans le sens opposé à la direction d'amenée (X), et le deuxième module de transport (86) étant placé sur une position éloignée du premier module de transport (85) dans la direction d'amenée (X) et configuré pour transporter l'extrémité de câble (3, 4) le long ou dans le sens opposé à la direction d'amenée (X), le premier module de transport (85) comportant des unités de transport (87) pouvant être amenées au câble (1a, 1b) qui peuvent être repositionnées de telle sorte que des composants de connecteur enfichable (26, 44, 45, 46, 47, 56) du connecteur enfichable (12) montés sur l'extrémité de câble (3, 4) à traiter peuvent passer à travers le premier module de transport (85) tandis que le deuxième module de transport (86) effectue le transport du câble (1a, 1b).

12. Procédé de montage d'un connecteur électrique enfichable (12) sur une première extrémité de câble (3) et/ou sur une deuxième extrémité de câble (4) d'un câble électrique (1a, 1b) comportant un ou plusieurs conducteurs internes (2), selon lequel le câble (1a, 1b) est traité par au moins deux modules de traitement (18, 19, 29, 35, 50, 59, 69, 93, 103, 109, 117, 134, 135, 137, 138, 139, 140, 141, 142, 143, 144, 145, 146, 147) appartenant à au moins un groupe de modules commun (M1, M2, M3, M4, M5, M34), un dispositif d'amenée (54) amenant l'extrémité de câble (3, 4) le long d'une direction d'amenée (X) à un poste de traitement (B) dans le groupe de modules (M1, M2, M3, M4, M5, M34) et un dispositif de transport de module (134) du groupe de modules (M1, M2, M3, M4, M5, M34) amenant un des modules de traitement (18, 19, 29, 35, 50, 59, 69, 93, 103, 109, 117, 134, 135, 137, 138, 139, 140, 141, 142, 143, 144, 145, 146, 147) à un poste de traitement (B) pour le traitement de l'extrémité de câble (3, 4), laquelle extrémité de câble (3, 4) est à nouveau éloignée du groupe de modules (M1, M2, M3, M4, M5, M34) après le traitement dans le sens opposé à la direction d'amenée (X).

13. Procédé selon la revendication 12, **caractérisé en ce que** la direction d'amenée (X) diverge d'une direction de transport de module (M) le long de laquelle le dispositif de transport de module (134) amène les modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) au poste de traitement (B), courant de préférence sensiblement perpendiculairement et de manière particulièrement préférée perpendiculairement à la direction de transport de module (M).

14. Procédé selon une des revendications 12 ou 13, **caractérisé en ce que** le dispositif de transport de module (134) amène les modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) l'un après l'autre au poste de traitement (B).

15. Procédé selon une des revendications 12 à 14, **caractérisé en ce que** le dispositif de transport de module (134) déplace les modules de traitement (18, 19, 29, 35, 50, 59, 69, 93, 103, 109, 117, 134, 135, 137, 138, 139, 140, 141, 142, 143, 144, 145, 146, 147) du groupe de modules (M1, M2, M3, M4, M5, M34) simultanément dans un mouvement combiné.
